# EUROPEAN PATENT APPLICATION

(11) **EP 4 694 384 A1**
(43) Date of publication of application: **11.02.2026**
(21) Application number: 24936190.8
(22) Date of filing: 24.05.2024
(51) Int. Cl.: H04W 52/02

(54) **POWER CONSUMPTION MANAGEMENT METHOD, APPARATUS, DEVICE, MEDIUM, AND PROGRAM PRODUCT**

(71) Applicant: GUANGDONG OPPO MOBILE TELECOMMUNICATIONS CORP., LTD., Dongguan, Guangdong 523860 (CN)
(72) Inventor: Lu, Liuming, Dongguan, Guangdong 523860 (CN); Luo, Chaoming, Dongguan, Guangdong 523860 (CN)
(74) Representative: Novagraaf Technologies
(86) International application number: PCT/CN2024/095347
(87) International publication number: WO 2025/241198

(57) **Abstract**

The present disclosure discloses a method for power management and apparatus, and a device, a medium, and a program product thereof, belonging to a Wi-Fi field. The method is performed by a first multi-link device (MLD) which has established and/or enabled one link or a plurality of links with a second MLD. The plurality of links include a first link and a second link. The method includes transmitting a first frame on the first link, wherein the first frame is configured to indicate a first power management mode for an affiliated station (STA) corresponding to at least one of the second link or the first link. The second link is different from the first link in the plurality of links. This method enables cross-link indication of the first power management mode for one or more affiliated STAs, or multi-link indication of the first power management mode for a plurality of STAs, reducing the number of frame exchanges, and thus improving indication efficiency.

## Description

### TECHNICAL FIELD

The present disclosure relates to the field of Wireless-Fidelity (Wi-Fi), and in particular, relates to a method for power management and apparatus, and a device, a medium and a program product thereof.

### RELATED ART

A multi-link device (MLD) operates in power management modes, namely an active mode and a power save mode. For the MLD to transition into the power save mode across multiple links, a separate frame exchange needs to be initiated on a per-link basis to instruct associated stations (STAs) to also enter the power save mode.

However, this method specifies the power management mode for an associated station on a per-link basis. Its primary drawback is poor signaling efficiency, as it necessitates individual frame exchanges to instruct each station.

### SUMMARY

The present disclosure provides a method for power management and apparatus, and device, medium and program product thereof. The technical solutions are as follows:

According to an aspect of embodiments of the present disclosure, a method for power management is provided. The method is performed by a first MLD. The first MLD has established and/or enabled one link or a plurality of links with a second MLD, wherein the plurality of links include a first link and a second link. The method includes:

transmitting a first frame on the first link, wherein the first frame is configured to indicate a first power management mode for at least one of an affiliated STA corresponding to the second link or an affiliated STA corresponding to the first link, wherein the second link is different from the first link in the plurality of links.

According to another aspect of embodiments of the present disclosure, a method for power management is provided. The method is performed by a second MLD. The second MLD has established and/or enabled one link or a plurality of links with a first MLD, wherein the plurality of links include a first link and a second link. The method includes:
receiving a first frame from the first MLD on the first link, wherein the first frame is configured to indicate a first power management mode for at least one of an affiliated STA corresponding to the first MLD on the second link or an affiliated STA corresponding to the first MLD on the first link, wherein the second link is different from the first link in the plurality of links.

According to another aspect of embodiments of the present disclosure, a first multi-link device is provided. The first multi-link device has established and/or enabled one link or a plurality of links with a second multi-link device, wherein the plurality of links include a first link and a second link. The first multi-link device includes:
a transmitting module, configured to transmit a first frame on the first link, wherein the first frame is configured to indicate a first power management mode for at least one of an affiliated STA corresponding to the second link or an affiliated STA corresponding to the first link, wherein the second link is different from the first link in the plurality of links.

According to another aspect of embodiments of the present disclosure, a second multi-link device is provided. The second multi-link device has established and/or enabled one link or a plurality of links with a first multi-link device, wherein the plurality of links include a first link and a second link. The second multi-link device includes:
a receiving module, configured to receive a first frame from the first multi-link device on the first link, wherein the first frame is configured to indicate a first power management mode for at least one of an affiliated STA corresponding to the first multi-link device on the second link or an affiliated STA corresponding to the first multi-link device on the first link, wherein the second link is different from the first link in the plurality of links.

According to another aspect of embodiments of the present disclosure, a first MLD is provided. The first MLD includes:
a processor, a transceiver communicably connected to the processor, and a memory configured to store one or more instructions executable by the processor. The processor is configured to load and execute the one or more instructions to perform the method for power management as described in the above aspects.

According to another aspect of embodiments of the present disclosure, the first MLD includes at least two affiliated STAs, wherein the at least two affiliated STAs include a first affiliated STA and a second affiliated STA. The first MLD has established and/or enabled one link or a plurality of links with a second MLD, wherein the plurality of links include a first link and a second link. The first affiliated STA is configured to transmit a first frame on the first link, wherein the first frame is configured to indicate a first power management mode for at least one of an affiliated STA corresponding to the second link or an affiliated STA corresponding to the first link, wherein the second link is different from the first link in the plurality of links.

According to another aspect of embodiments of the present disclosure, a second MLD is provided. The second MLD includes:
a processor, a transceiver communicably connected to the processor, and a memory configured to store one or more instructions executable by the processor. The processor is configured to load and execute the one or more instructions to perform the method for power management as described in the above aspects.

According to another aspect of embodiments of the present disclosure, the second MLD includes at least two affiliated STAs, wherein the at least two affiliated STAs include a third affiliated STA and a fourth affiliated STA. The second MLD has established and/or enabled one link or a plurality of links with a first MLD, wherein the plurality of links include a first link and a second link. The third affiliated STA is configured to receive a first frame from the first MLD on the first link, wherein the first frame is configured to indicate a first power management mode for at least one of an affiliated STA corresponding to the first MLD on the second link or an affiliated STA corresponding to the first MLD on the first link, wherein the second link is different from the first link in the plurality of links.

According to another aspect of embodiments of the present disclosure, a computer-readable storage medium is provided. The computer-readable storage medium stores at least one program therein. The at least one program, when loaded and run by a processor, causes the processor to perform the method for power management as described in the above aspects.

According to another aspect of embodiments of the present disclosure, a chip is provided. The chip includes programmable logic circuitry and/or one or more program instructions. The chip, when running on the first MLD or the second MLD, is configured to perform the method for power management as described in the above aspects.

According to another aspect of embodiments of the present disclosure, a computer program product or a computer program is provided. The computer program product or the computer program includes one or more computer instructions stored in a computer-readable storage medium. The one or more computer instructions, when read from the computer-readable storage medium and executed by a processor, cause the processor to perform the method for power management as described in the above aspects.

The technical solutions according to the embodiments of the present disclosure may include the following beneficial effects:
In the technical solutions, a first frame is transmitted on a first link, and the first frame is configured to indicate a first power management mode for at least one of an affiliated STA corresponding to a second link or an affiliated STA corresponding to the first link, such that a cross-link indication or a multi-link indication of the power management mode for the affiliated STA is achieved. Compared with the related art, the cross-link indication of the first power management mode for one or more affiliated STAs or the multi-link indication of the first power management mode for the plurality of affiliated STAs is enabled, such that the number of frame exchanges is reduced and indication efficiency is improved.

### BRIEF DESCRIPTION OF DRAWINGS

For clearer descriptions of the technical solutions in the embodiments of the present disclosure, the drawings required for describing the embodiments are briefly introduced hereinafter. Obviously, the drawings in the following description are only some of the embodiments of the present disclosure, and those of ordinary skill in the art may derive other drawings based on these drawings without any creative efforts.
FIG. 1 is a schematic diagram of a power save operation in a multi-link operation according to the related art;
FIG. 2 is a schematic diagram of a communication system according to some embodiments of the present disclosure;
FIG. 3 is a flowchart of a method for power management according to some embodiments of the present disclosure;
FIG. 4 is a schematic diagram of a method for power management according to some embodiments of the present disclosure;
FIG. 5 is a schematic diagram of a method for power management according to some embodiments of the present disclosure;
FIG. 6 is a flowchart of a method for power management according to some embodiments of the present disclosure;
FIG. 7 is a schematic diagram of a format of a Multi-Link Power Management Mode Indication element according to some embodiments of the present disclosure;
FIG. 8 is a schematic diagram of a format of a Multi-Link Power Management Mode Indication Control field according to some embodiments of the present disclosure;
FIG. 9 is a schematic diagram of a format of a Per-STA Power Management Mode Indication Info sub-element according to some embodiments of the present disclosure;
FIG. 10 is a schematic diagram of a format of an STA Power Management Mode Indication Control field according to some embodiments of the present disclosure;
FIG. 11 is a schematic diagram of a format of a Link ID Information field according to some embodiments of the present disclosure;
FIG. 12 is a schematic diagram of a format of a Capability Adaptation Power Save Control field according to some embodiments of the present disclosure;
FIG. 13 is a schematic diagram of a format of an STA Power Management Mode Indication Information field according to some embodiments of the present disclosure;
FIG. 14 is a schematic diagram of a format of a Capability Adaptation Power Save Delay Parameter field according to some embodiments of the present disclosure;
FIG. 15 is a schematic diagram of a format of a Low-Capability Operation Mode Parameter field according to some embodiments of the present disclosure;
FIG. 16 is a schematic diagram of a format of a High-Capability Operation Mode Parameter field according to some embodiments of the present disclosure;
FIG. 17 is a schematic diagram of a format of a Multi-Link Power Management Mode Control subfield according to some embodiments of the present disclosure;
FIG. 18 is a schematic diagram of a format of a Multi-Link Dynamic Power Save Mode Enabling Control subfield according to some embodiments of the present disclosure;
FIG. 19 is a schematic diagram of a format of a Cross-Link Power Management Mode Control subfield according to some embodiments of the present disclosure;
FIG. 20 is a schematic diagram of a format of a Capability Adaptation Power Save Operation Mode Parameter Control subfield according to some embodiments of the present disclosure;
FIG. 21 is a schematic diagram of a method for power management according to some embodiments of the present disclosure;
FIG. 22 is a schematic diagram of a method for power management according to some embodiments of the present disclosure;
FIG. 23 is a schematic diagram of a method for power management according to some embodiments of the present disclosure;
FIG. 24 is a schematic diagram of a method for power management according to some embodiments of the present disclosure;
FIG. 25 is a schematic diagram of a method for power management according to some embodiments of the present disclosure;
FIG. 26 is a schematic diagram of a method for power management according to some embodiments of the present disclosure;
FIG. 27 is a schematic diagram of a method for power management according to some embodiments of the present disclosure;
FIG. 28 is a schematic diagram of a format of a Public Information field of a Basic Multi-Link element according to some embodiments of the present disclosure;
FIG. 29 is a schematic diagram of a format of a Multi-Link Power Management Mode Indication Capability field according to some embodiments of the present disclosure;
FIG. 30 is a block diagram of a first multi-link device according to some embodiments of the present disclosure;
FIG. 31 is a block diagram of a second multi-link device according to some embodiments of the present disclosure;
FIG. 32 is a schematic structural diagram of a first multi-link device or a second multi-link device according to some embodiments of the present disclosure; and
FIG. 33 is a schematic structural diagram of a first multi-link device and a second multi-link device according to some embodiments of the present disclosure.

### DETAILED DESCRIPTION

For clearer descriptions of the objectives, technical solutions, and advantages of the present disclosure, the embodiments of the present disclosure are described hereinafter in detail with reference to the drawings. The exemplary embodiments are described in detail herein, and their examples are illustrated in the accompanying drawings. When the following description relates to the accompanying drawings, the same numerals in different drawings represent the like or similar elements, unless otherwise indicated. The embodiments illustrated in the following exemplary embodiments do not represent all the embodiments consistent with the present disclosure. Rather, these embodiments are merely examples of devices and methods that are consistent with some aspects of the present disclosure as detailed in the appended claims.

The terms used in the present disclosure are solely for the purpose of describing specific embodiments and are not intended to limit the present disclosure. The singular forms "a," "an," and "the" used in the present disclosure and the appended claims are also intended to encompass their plural forms, unless the context clearly indicates otherwise. It should also be understood that the term "and/or" as used herein refers to and includes any or all possible combinations of one or more of the associated listed items.

It should be understood that although terms such as "first," "second," and "third" may be used in the present disclosure to describe various information, such information should not be limited by these terms. These terms are only used to distinguish information of the same type from each other. For example, without departing from the scope of the present disclosure, first information may also be referred to as second information, and similarly, second information may also be referred to as first information. The term "if" as used herein may be interpreted as "when," "upon," or "in response to determining" depending on the context.

The technical solutions described in some embodiments of the present disclosure may be applied to various communication systems, such as a long-term evolution (LTE) system, an advanced long-term evolution (LTE-A) system, a new radio (NR) system, an evolved system of the NR system, an LTE-based access to unlicensed spectrum (LTE-U) system, an NR-based access to unlicensed spectrum (NR-U) system, a non-terrestrial network (NTN) system, a universal mobile telecommunication system (UMTS), a wireless local area network (WLAN), a wireless fidelity (Wi-Fi), a 5^{th} generation (5G) communication system, a cellular Internet of things (IoT) system, a cellular ambient IoT (AIoT) system, or may also be applied to an evolved system of the 5G NR system, or may also be applied to a 6G system and a subsequent evolved system of 6G.

It should be understood that "5G" in some embodiments of the present disclosure may also be referred to as "5G NR" or "NR."

It should be understood that in the description of the embodiments of the present disclosure, the term "corresponding" may indicate a direct or indirect correspondence relationship between two entities, or may also indicate an association relationship between two entities, or may indicate relationships such as a relationship between an instructor and an instructed entity, or a relationship between a configurator and a configured entity.

In the embodiments of the present disclosure, a "predefined" operation may be performed by pre-storing corresponding codes or tables in a device (such as a device including a terminal device and a network device), or may be performed by other means that may be used to indicate relevant information. The present disclosure does not impose any restrictions on specific methods for performing the predefined operation. For example, the predefined operation may be agreed in a protocol.

In the embodiments of the present disclosure, the term "protocol" may refer to a standard protocol in the communication field. For example, the protocol includes an LTE protocol, an NR protocol, and a related protocol applicable to a future communication system, which is not limited in the present disclosure.

**A power management (PM) mechanism in the related art is introduced hereinafter.**

An STA defined by a current related protocol may adopt the following two power save modes.

Mode 1 is an active mode, in which the STA may receive and send frames at any time in a case where the STA is in an awake state. A non-high-efficiency (non-HE) STA remains awake in the active mode, and an HE STA also remains awake in the active mode unless the STA is unavailable. An unavailable STA fails to receive any physical layer protocol data units (PPDUs). In specific scenarios described in opportunistic power save, intra-PPDU power saving for the HE STA, and flexible wake time-based target wake time (TWT) information frame exchanges, the STA is allowed to be unavailable.

Mode 2 is a power save (PS) mode, in which the STA supports the following two power states:
(1) In an awake state, the STA is fully powered and in a fully powered state.
(2) In a doze state, the STA fails to transmit or receive any PPDUs and has a very low power consumption. Upon entering or transitioning into the awake state, the STA receives or transmits frames, while at other times in the power save mode, the STA remains in the doze state.

**A multi-link power management is introduced hereinafter.**

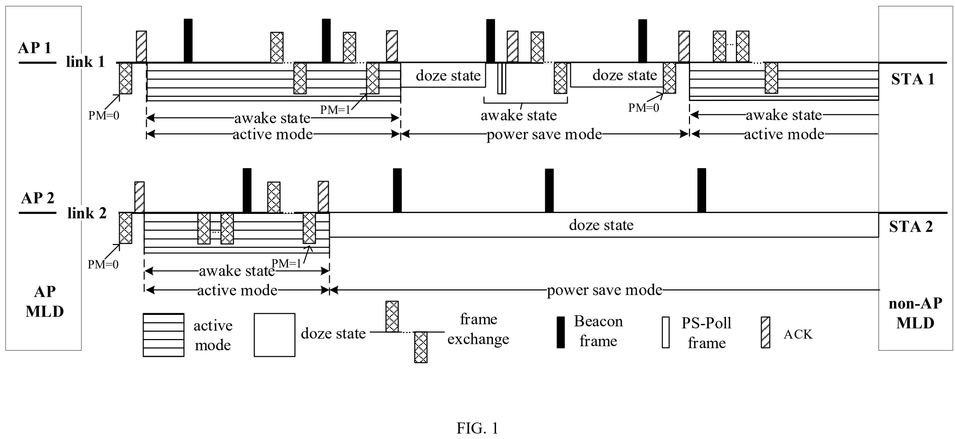

As specified in related protocols, each STA, affiliated to a non-access point multi-link device (non-AP MLD) operating on an enabled link, maintains its own power management modes and power states. In a case where the STA affiliated to the non-AP MLD operating on the enabled link is in an awake state, frame exchange may be initiated on the enabled link. An example of a power save operation in a multi-link operation (MLO) is illustrated in FIG. 1.

FIG. 1 is a schematic diagram of a power save operation in multi-link operations according to the related art. All traffic identifiers (TIDs) are assumed to be mapped to all links or a subset of all links. At the beginning, two STAs (STA1 and STA2) affiliated to a non-AP MLD are both in an active mode and perform frame exchanges with APs on corresponding links of an AP MLD. That is, STA1 performs the frame exchange with AP1, and STA2 performs the frame exchange with the AP2. In this case, each of the two STAs affiliated to the non-AP MLD indicates that the STA is in the active mode by setting a power management subfield to 0. The power management subfield, i.e., a PM bit shown in FIG. 1, is in a frame control field of a frame transmitted by the STA. Subsequently, at a specific time point, STA2 operating on link2 indicates to AP2 that STA2 is to transition into a power save mode by setting the PM bit to 1, and upon a successful frame exchange, STA2 switches from an awake state into a doze state. Then, STA2 remains in the doze state for the rest of the time as illustrated in FIG. 1. In addition, STA1 operating on link1 indicates to AP1 that STA1 is to transition the power save mode by setting the PM bit to 1, and upon a successfully frame exchange, STA1 transitions into the power save mode. During the period when STA1 is in the power save mode, STA1 may re-awake to receive a Beacon frame from AP1 and determine that buffer units to be received by the non-AP MLD are present in the AP MLD. Based on this determination, STA1 transmits a power save poll (PS-Poll) frame or an unscheduled automatic power save delivery (U-APSD) trigger frame on link1 to indicate to AP1 that STA1 has entered an awake state, and then STA1 performs frame exchange with AP1 in the awake state.

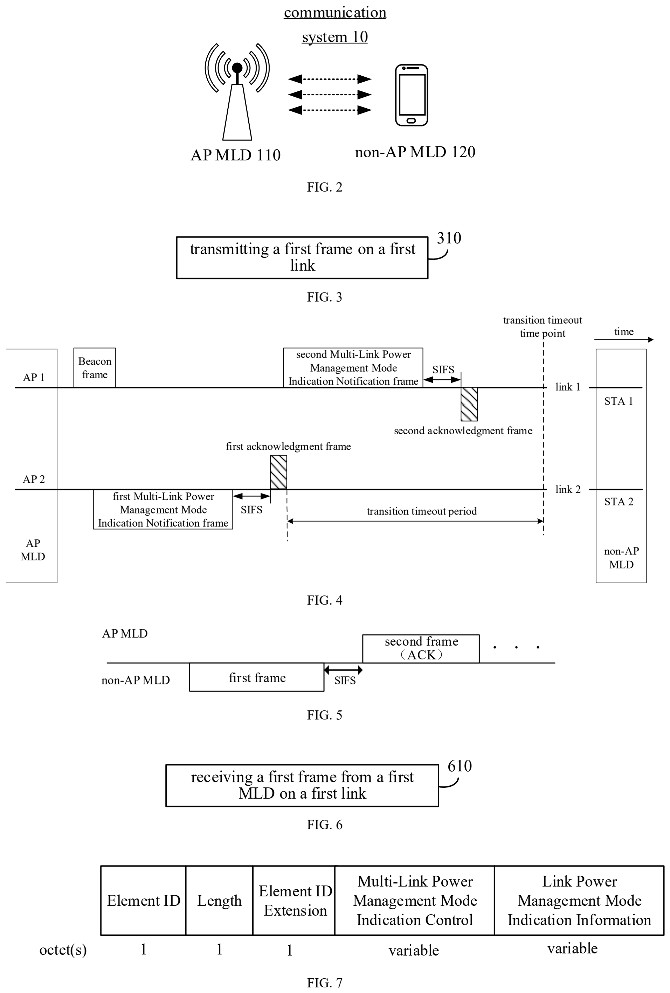

FIG. 2 is a schematic diagram of a communication system 10 according to some embodiments of the present disclosure. The communication system 10 includes terminal-to-terminal communication, terminal-to-network device communication, or AP-to-STA communication, which is not limited in the embodiments of the present disclosure. The embodiments of the present disclosure are illustrated by taking the communication system 10 that includes communication between an AP MLD 110 (an AP) and a non-AP MLD 120 (an STA) as an example.

In some scenarios, an AP may also be referred to as an "AP STA," which means that an AP is also a type of STA in a sense. In some scenarios, an STA may also be referred to as a "non-AP STA."

In some embodiments, an STA may include an AP STA and a non-AP STA.

Communication in the communication system may be conducted between an AP and a non-AP STA, between non-AP STAs, or between an STA and a peer STA. Herein, the peer STA may refer to a device on the opposite end of the STA that communicates with the STA. For example, the peer STA may be an AP or a non-AP STA.

The AP acts as a bridge connected between a wired network and a wireless network, and is mainly configured to connect wireless network clients and access the wireless network to the Ethernet. An AP device may be a terminal device (e.g., a mobile phone) equipped with a Wi-Fi chip, or a network device (e.g., a router) equipped with a Wi-Fi chip.

It should be understood that the role of the STA in the communication system is not particularly defined. For example, in some scenarios, in a case where a mobile phone is connected to a router, the mobile phone is a non-AP STA; or in a case where the mobile phone serves as a hotspot for other phones, the mobile phone acts as an AP.

The AP and the non-AP STA may be devices applied in Internet of vehicles (IoV), IoT nodes, sensors, or the like in the IoT, smart cameras, smart remote controllers, smart water/electricity meters in smart homes, as well as sensors and similar devices in smart cities.

In some embodiments, the non-AP STA may support, but is not limited to, the 802.11 be standard. The non-AP STA may also support a plurality of the current WLAN standards (such as 802.11ax, 802.11ac, 802.11n, 802.11g, 802.11b, and 802.11a) and future WLAN standards in the 802.11 family.

In some embodiments, the AP may be a device that supports the 802.11be standard. The AP may also be a device that supports a plurality of the current WLAN standards (such as 802.11ax, 802.11ac, 802.11n, 802.11g, 802.11b, and 802.11a) and future WLAN standards in the 802.11 family.

In some embodiments, the STA may include one of the following devices that support the WLAN/Wi-Fi technology: a mobile phone, a tablet computer, a computer, a virtual reality (VR) device, an augmented reality (AR) device, a wireless device in industrial control, a set-top box, a wireless device in self-driving, a vehicle communication device, a wireless device in remote medical, a wireless device in smart grid, a wireless device in transportation safety, a wireless device in smart city, a wireless device in smart home, and a wireless communication chip.

Frequency bands supported by the WLAN technology include, but are not limited to, low frequency bands (e.g., 2.4 GHz, 5 GHz, or 6 GHz) and high frequency bands (e.g., 60 GHz).

One or more links may be present between an STA and an AP. In some embodiments, the STA and the AP support multi-band communication, such as simultaneous communication in 2.4 GHz, 5 GHz, 6 GHz, as well as 60 GHz frequency bands, or simultaneous communication on different channels within the same or different frequency bands, to improve communication throughput and/or reliability between devices. Such devices are typically referred to as multi-band devices or MLDs, and sometimes referred to as multi-link entities or multi-band entities. An MLD may be an AP device or an STA device. In a case where the MLD is an AP device, the MLD includes one or more APs. In a case where the MLD is an STA device, the MLD includes one or more non-AP STAs.

An MLD that includes one or more APs is referred to as an "AP." An MLD that includes one or more non-AP STAs is referred to as a "non-AP." In some embodiments, a "non-AP" may be referred to as an "STA."

In some embodiments, an AP entity may include a plurality of affiliated APs, and a non-AP entity may include a plurality of affiliated STAs. A plurality of links may be formed between the affiliated APs in the AP entity and the affiliated STAs in the non-AP entity. Communication may be conducted between the affiliated APs in the AP entity and their corresponding affiliated STAs in the non-AP entity via corresponding links. As shown in FIG. 2, the non-AP MLD 120 and the AP MLD 110 perform data communication via a plurality of links.

An AP is a device deployed in a WLAN to provide wireless communication functions for STAs. An STA may be a user equipment (UE), an access terminal, a subscriber unit, a subscriber station, a mobile site, a mobile station, a remote station, a remote terminal, a mobile device, a wireless communication device, a user agent, or a user device. In some embodiments, the STA may also be a cellular phone, a cordless phone, a Session Initiation Protocol (SIP) phone, a wireless local loop (WLL) station, a personal digital assistant (PDA), a handheld device with wireless communication functions, a computing device, any other processing device connected to a wireless modem, a vehicle-mounted device, or a wearable device, which are not limited in the present disclosure.

Power management modes of an MLD include an active mode and a power save mode. In a case where the MLD expects to enter or transition into the power save mode on a plurality of links, the MLD initiates frame exchanges on respective links to instruct affiliated STAs of the MLD to switch into the power save mode. However, this method specifies the power management mode for an associated station on a per-link basis. Its primary drawback is poor signaling efficiency, as it necessitates individual frame exchanges to instruct each station. To solve the above problem, a method for power management is provided according to embodiments of the present disclosure. FIG. 3 is a flowchart of a method for power management according to some embodiments of the present disclosure. The method is performed by a first MLD. The first MLD has established and/or enabled one link or a plurality of links with a second MLD, and the plurality of links include a first link and a second link. The method includes the following step.

**In step 310, the first MLD transmits a first frame on the first link.**

The first frame is configured to indicate a first power management mode for at least one of an affiliated STA corresponding to the second link or an affiliated STA corresponding to the first link. The second link is different from the first link in the plurality of links. The first MLD is a peer device associated with the second MLD. In the embodiments of the present disclosure, the affiliated STA may be simply referred to as an STA.

In some embodiments, the first frame is "configured to indicate a first power management mode for at least one of an affiliated STA corresponding to the second link or an affiliated STA corresponding to the first link," which may be equivalently understood or alternatively understood as any one of: configured to indicate that a multi-link power management mode operation is changing for at least one of the affiliated STA corresponding to the second link or the affiliated STA corresponding to the first link; configured to indicate that at least one of the affiliated STA corresponding to the first link or the affiliated STA corresponding to the second link is required to switch from a current power management mode to the first power management mode; or, configured to indicate whether to enable a dynamic (capability adaptation) power save operation for at least one of the affiliated STA corresponding to the second link or the affiliated STA corresponding to the first link. The embodiments of the present disclosure does not impose any restrictions on the understanding of the first frame, and the present disclosure is usually illustrated by taking "the first frame is configured to indicate a first power management mode for at least one of an affiliated STA corresponding to the second link or an affiliated STA corresponding to the first link" as an example.

The first power management mode is applicable to a specific link, and this link is any one of the "one link or a plurality of links" between the first MLD and the second MLD. The first power management mode corresponding to each link may be the same or different. While the present disclosure mainly uses, as an example for description, the first power management mode for the affiliated STA corresponding to the second link, the present disclosure is also applicable to the first power management mode for the affiliated STA corresponding to the first link, which is not limited in the embodiments of the present disclosure.

In some embodiments, the peer device associated with the first MLD is the second MLD, the first MLD is a non-AP MLD, and the second MLD is an AP MLD; or alternatively, the first MLD is an AP MLD, and the second MLD is a non-AP MLD.

The non-AP MLD includes one or more affiliated STAs, and the STAs may be referred to as non-AP STAs. The AP MLD includes one or more affiliated APs. The embodiments of the present disclosure do not limit specific types of the first MLD and the second MLD, and the present disclosure is usually illustrated by using an example where the first MLD is a non-AP MLD and the second MLD is an AP MLD.

In some embodiments, the second link is one link different from the first link, or the second link includes a plurality of links different from the first link.

In some embodiments, the first power management mode includes at least one of: an active mode, or a power save mode. An entity in the active mode means that the entity is always in an awake state or is in a constant awake state. An entity in the power save mode means that the entity is in the awake state, a doze state, or an unavailable state.

The power management mode includes at least one of: an active mode indicating a constant awake state, or a power save mode indicating an awake state, a doze state, or an unavailable state.

For the affiliated STA corresponding to each link, the first power management mode is one of the one or more power management modes as described above.

In a case where the affiliated STA is in the awake state, the affiliated STA may perform operations such as transmitting and receiving data, and monitoring channels. In a case where the affiliated STA is in the doze state, the affiliated STA fails to transmit or receive data but is capable of monitoring channels. In a case where the affiliated STA is in the unavailable state, the affiliated STA fails to perform operations such as transmitting and receiving data, and monitoring channels.

In some embodiments, the power save mode includes a fully powered power save mode or a capability adaptation power save mode, wherein the capability adaptation power save mode includes a static capability adaptation power save mode or a dynamic capability adaptation power save mode.

By way of example rather than limitation, the awake state in the power save mode includes at least one of: an awake state in the dynamic capability adaptation power save mode; an awake state in the static capability adaptation power save mode; or an awake state in the fully powered power save mode.

In the awake state in the fully powered power save mode, the affiliated STA maintains operations in either a full-capability operation mode or a high-capability operation mode. That is, the affiliated STA performs, within a supported capability range, operations such as transmitting and receiving data and monitoring channels by adopting a higher bandwidth, more receive chains, more spatial streams, a higher data rate, a higher-order modulation and coding scheme (MCS), and a PPDU format with high processing overhead. The fully powered power save mode may also be referred to as a non-capability adaptation power save mode or a fully powered mode.

In the awake state in the static capability adaptation power save mode, the affiliated STA merely maintains operations in a low-capability operation mode. That is, the affiliated STA performs operations such as transmitting and receiving data and monitoring channels by adopting a low bandwidth, fewer receive chains, fewer spatial streams, a lower data rate, a lower-order MCS, and a PPDU format with low processing overhead. The static capability adaptation power save mode may also be referred to as a non-dynamic capability adaptation power save mode.

In the awake state in the dynamic capability adaptation power save mode, the affiliated STA usually operates in a low-capability operation mode. Upon receiving a specific frame transmitted to the affiliated STA (such as an initial frame including an initial control frame or any other frame defined for mode switching), the affiliated STA switches to the high-capability (or full-capability) operation mode based on an indication of the specific frame, and switches back to the low-capability operation mode upon completion of a current frame exchange.

In some embodiments, the dynamic capability adaptation power save mode has the same meaning as a dynamic power save mode, the non-dynamic capability adaptation power save mode has the same meaning as a non-dynamic power save mode, and the static capability adaptation power save mode has the same meaning as a static power save mode.

By refining specific types of the first power management mode, the present disclosure, compared with the related art in which the power management mode only includes an active mode and a power save mode, enables a more precise indication of the power management mode for the MLD, supports a simultaneous change of the power management mode for the affiliated STAs on all links or part of the links, and also supports a precise change of the power management mode for the affiliated STA on one or more links. The first power management modes of the affiliated STAs on different links upon the change may be different. For example, upon the change of the power management mode, an affiliated STA (STA1) on link1 transitions into a static capability adaptation power save mode, and an affiliated STA (STA2) on link2 transitions into a dynamic capability adaptation power save mode, such that different power management modes are used according to actual needs in different application scenarios.

The present disclosure provides two design schemes for the first frame. In a design scheme 1, the first frame is a Multi-Link Power Management Mode Indication Notification frame, and in a design scheme 2, the first frame is any frame which carries multi-link power management mode indication information.

The design scheme 1 designs a new dedicated frame, which is configured to indicate the first power management mode for at least one of the affiliated STA corresponding to the second link or the affiliated STA corresponding to the first link.

The design scheme 2 is based on a conventional frame format, customizes one or more control fields in the conventional frame format, and indicates, based on the one or more control fields, the first power management mode for at least one of the affiliated STA corresponding to the second link or the affiliated STA corresponding to the first link.

**Description is given hereinafter by taking an example where the first frame is the Multi-Link Power Management Mode Indication Notification frame.**

A first MLD (such as a non-AP MLD) that supports a multi-link power management mode indication, upon determining a power management mode for an affiliated STA corresponding to an established link (or an enabled link) of the first MLD, and determining operation parameters to be adopted in the corresponding power management mode, may transmit a Multi-Link Power Management Mode Indication Notification frame to a second MLD (such as an AP MLD associated with the non-AP MLD), as illustrated in FIG. 4.

FIG. 4 is a schematic diagram of a multi-link power management mode indication according to some embodiments of the present disclosure. In an example where the first MLD is a non-AP MLD and the second MLD is an AP MLD, two links (link1 and link2) are successfully established between the non-AP MLD and the AP MLD, link1 and link2 of the non-AP MLD are both enabled links, and affiliated STAs (STA1 and STA2) corresponding to the two links are both in a fully powered state in the active mode.

In a case where the non-AP MLD prepares to change a power management state of STA1, that is, STA1 prepares to switch from the active mode to another power management mode (such as a dynamic capability adaptation power save mode), the non-AP MLD may transmit a Multi-Link Power Management Mode Indication Notification frame to the AP MLD on link2.

Exemplarily, the affiliated STA (STA2) of the non-AP MLD transmits a first Multi-Link Power Management Mode Indication Notification frame to an affiliated AP (AP2) of the AP MLD on link2, and AP2, upon receiving the first Multi-Link Power Management Mode Indication Notification frame, transmits a first acknowledgment frame. In some embodiments, an interval between the first acknowledgment frame and the first Multi-Link Power Management Mode Indication Notification frame is a short interframe space (SIFS).

By way of example rather than limitation, the Multi-Link Power Management Mode Indication Notification frame carries a Link Identifier subfield and a Power Management subfield. The Link Identifier subfield is configured to indicate a link identifier of link1. For example, a value of 1 in the Link Identifier subfield corresponds to link1; and a value of 1 in the Power Management subfield indicates that STA1 is to be in a power save mode.

By way of example rather than limitation, the Multi-Link Power Management Mode Indication Notification frame carries a Capability Adaptation Power Save Enabled field and a Capability Adaptation Power Save Mode field. In a case where the Capability Adaptation Power Save Enabled field is set to 1, STA1 is instructed to enable a capability adaptation power save mode. In a case where the Capability Adaptation Power Save Mode field is set to 1, STA1 is instructed to enter or transition into a dynamic capability adaptation power save mode.

In some embodiments, in a case where the second MLD (such as the AP MLD) has received the first Multi-Link Power Management Mode Indication Notification frame, and in response to the received first Multi-Link Power Management Mode Indication Notification frame, the second MLD may transmit a second Multi-Link Power Management Mode Indication Notification frame to the first MLD (such as the non-AP MLD) via link1 or link2 within a multi-link power management mode indication transition timeout (or called a transition timeout) period. This case is applied to at least one of the following rules:
1) In some embodiments, a management frame (such as a Beacon frame or an Association Response frame) transmitted by an affiliated AP of the second MLD carries a Multi-Link Power Management Mode Indication Transition Timeout subfield. The Multi-Link Power Management Mode Indication Transition Timeout subfield is configured to indicate a multi-link power management mode indication transition timeout period.
   For example, in FIG. 4, the Beacon frame transmitted by AP1 carries the Multi-Link Power Management Mode Indication Transition Timeout subfield.
   Except for Authentication frames transmitted by the affiliated APs of the second MLD, basic multi-link elements in all management frames carrying the basic multi-link elements may include the Multi-Link Power Management Mode Indication Transition Timeout subfield in a Multi-Link Power Management Mode Indication Capability subfield.
2) In some embodiments, the multi-link power management mode indication transition timeout period starts from an end of PPDU[+SigExt]. Herein, "PPDU" represents a first PPDU transmitted by the second MLD and carries an acknowledgment (ACK) in response to the first Multi-Link Power Management Mode Indication Notification frame. In a case where a signal extension is present, "PPDU[+SigExt]" represents the first PPDU plus the signal extension following the PPDU. In a case where the signal extension is absent, "PPDU[+SigExt]" represents the first PPDU.
   As illustrated in FIG. 4, the first PPDU acts as a first acknowledgment frame corresponding to the first Multi-Link Power Management Mode Indication Notification frame. In a case where the signal extension is absent, the multi-link power management mode indication transition timeout period (abbreviated as a transition timeout period) starts from the end of the first PPDU, and a length of the transition timeout period is indicated by the Multi-Link Power Management Mode Indication Transition Timeout subfield as described above.
3) In some embodiments, subfields in the second Multi-Link Power Management Mode Indication Notification frame have the same values as the subfields in the first Multi-Link Power Management Mode Indication Notification frame.

Exemplarily, a value of a Multi-Link Power Management Mode Indication Control subfield in the second Multi-Link Power Management Mode Indication Notification frame is the same as a value of the Multi-Link Power Management Mode Indication Control subfield in the first Multi-Link Power Management Mode Indication Notification frame; and a value of a Link Power Management Mode Indication Information subfield in the second Multi-Link Power Management Mode Indication Notification frame is the same as a value of the Link Power Management Mode Indication Information subfield in the first Multi-Link Power Management Mode Indication Notification frame.

The value of the subfield in the second Multi-Link Power Management Mode Indication Notification frame is the same as the value of the subfield in the first Multi-Link Power Management Mode Indication Notification frame, which is an optional design. In other designs, a portion of the subfields of the first Multi-Link Power Management Mode Indication Notification frame and the second Multi-Link Power Management Mode Indication Notification frame may be the same, and another portion of the subfields may be different; or, all of the subfields of the first Multi-Link Power Management Mode Indication Notification frame and the second Multi-Link Power Management Mode Indication Notification frame may be the same; or, the subfields in the second Multi-Link Power Management Mode Indication Notification frame may not include any subfield in the first Multi-Link Power Management Mode Indication Notification frame, which is not limited in the embodiments of the present disclosure.

In the case that the first frame is the Multi-Link Power Management Mode Indication Notification frame, a new Multi-Link Power Management Mode Indication Notification frame is designed as a dedicated frame to indicate the multi-link power management mode for the affiliated STA, such that a reliability of information transmission is improved and a possibility of conflict with other information transmission is reduced.

**Description is given hereinafter by taking an example where the first frame carries the multi-link power management mode indication information.**

In some embodiments, the first frame is a PPDU carrying one or more individually addressed quality of service (QoS) data frames, one or more individually addressed QoS null frames, or one or more individually addressed class 3 management frames.

In some embodiments, a multi-link power management mode indication operation is used to indicate a multi-link power management mode for an affiliated STA corresponding to an established link (or an enabled link) of a first MLD; or that a multi-link power management mode operation of the corresponding affiliated STA is changing; and/or whether to enable a dynamic power save operation.

In some embodiments, an MLD or an affiliated STA of the MLD that transmits the first frame is defined as an initiator of the multi-link power management mode indication operation; and an MLD or an affiliated STA of the MLD that receives the first frame is defined as a responder of the multi-link power management mode indication operation.

The first frame includes a Multi-Link Power Management Mode Control subfield, and/or a Multi-Link Dynamic Power Save Mode Enabling Control subfield, and/or a Cross-link Power Management Mode Control subfield.

FIG. 5 is a schematic diagram of a multi-link power management mode indication according to some embodiments of the present disclosure. A first MLD (e.g., a non-AP MLD) as the initiator of the multi-link power management mode indication operation may transmit a first frame to a second MLD (e.g., an AP MLD) on one of established links (or enabled links). The first frame is a PPDU carrying one or more individually addressed QoS data frames, one or more individually addressed QoS null frame, or one or more individually addressed class 3 management frames. The first MLD requests the second MLD as the responder of the multi-link power management mode indication operation to immediately confirm a change of a multi-link power management mode operation and/or a dynamic power save operation. Upon receiving the first frame, the second MLD transmits a second frame (e.g., an acknowledgment frame) as a response to the request of the first MLD. In some embodiments, an interval between the second frame and the first frame is an SIFS.

In the case that the first frame carries the multi-link power management mode indication information, no new design of a dedicated frame is required for the transmission of the multi-link power management mode indication information. Instead, based on a conventional frame format, one or more control fields may be customized in the conventional frame format, and the first power management mode for the affiliated STA corresponding to at least one of the second link or the first link, may be indicated via the control fields, enabling better utilization of the conventional frame format.

In summary, in the method according to the embodiments of the present disclosure, a first frame is transmitted on a first link, wherein the first frame is configured to indicate a first power management mode for at least one of an affiliated STA corresponding to a second link or an affiliated STA corresponding to the first link, such that a cross-link indication or a multi-link indication of the power management mode for the affiliated STA is achieved. Compared with the related art, the cross-link indication of the first power management mode for one or more affiliated STAs, or the multi-link indication of the first power management mode for the plurality of affiliated STAs, is enabled such that the number of frame exchanges is reduced, and indication efficiency is improved.

FIG. 6 is a flowchart of a method for power management according to some embodiments of the present disclosure. The method is performed by a second MLD. The second MLD has established and/or enabled one link or a plurality of links with a first MLD, and the plurality of links include a first link and a second link. The method includes the following step.

**In step 610, the second MLD receives a first frame from the first MLD on the first link.**

The first frame is configured to indicate a first power management mode for at least one of an affiliated STA corresponding to the first MLD on the second link or an affiliated STA corresponding to the first MLD on the first link. The second link is different from the first link in the plurality of links. A peer device associated with the second MLD is the first MLD.

In some embodiments, the first frame is "configured to indicate a first power management mode for at least one of an affiliated STA corresponding to the first MLD on the second link or an affiliated STA corresponding to the first MLD on the first link", which may be equivalently understood or alternatively understood as any one of: configured to indicate that a multi-link power management mode operation is changing for at least one of the affiliated STA corresponding to the second link or the affiliated STA corresponding to the first link; configured to indicate that at least one of the affiliated STA corresponding to the second link or the affiliated STA corresponding to the first link is required to switch from a current power management mode to the first power management mode; or, configured to indicate whether to enable a dynamic (capability adaptation) power save operation for at least one of the affiliated STA corresponding to the second link or the affiliated STA corresponding to the first link. The embodiments of the present disclosure does not impose any restrictions on the understanding of the first frame, and the present disclosure is usually illustrated by using an example where "the first frame is configured to indicate a first power management mode for at least one of an affiliated STA corresponding to the first MLD on the second link or an affiliated STA corresponding to the first MLD on the first link."

The first power management mode is applicable to a specific link, and this link is any one of the "one link or a plurality of links" between the first MLD and the second MLD. The first power management mode corresponding to each link may be the same or different. While the present disclosure mainly uses, as an example for description, the first power management mode for the affiliated STA corresponding to the second link, the present disclosure is also applicable to the first power management mode for the affiliated STA corresponding to the first link, which is not limited in the embodiments of the present disclosure.

In some embodiments, the peer device associated with the first MLD is the second MLD, the first MLD is a non-AP MLD, and the second MLD is an AP MLD; or alternatively, the first MLD is an AP MLD, and the second MLD is a non-AP MLD.

The non-AP MLD includes one or more affiliated STAs, and the STAs may be referred to as non-AP STAs. The AP MLD includes one or more affiliated APs. The embodiments of the present disclosure do not limit specific types of the first MLD and the second MLD, and the present disclosure is usually illustrated by using an example where the first MLD is a non-AP MLD and the second MLD is an AP MLD.

In some embodiments, the second link is one link different from the first link, or the second link includes a plurality of links different from the first link.

In some embodiments, the first power management mode includes at least one of: an active mode, or a power save mode. An entity in the active mode means that the entity is always in an awake state or is in a constant awake state. An entity in the power save mode means that the entity is in the awake state, a doze state, or an unavailable state.

The power management mode includes at least one of: an active mode indicating a constant awake state, or a power save mode indicating an awake state, a doze state, or an unavailable state.

For the affiliated STA corresponding to each link, the first power management mode is one of the one or more power management modes as described above.

In a case where the affiliated STA is in the awake state, the affiliated STA may perform operations such as transmitting and receiving data, and monitoring channels. In a case where the affiliated STA is in the doze state, the affiliated STA fails to transmit or receive data but is capable of monitoring the channels. In a case where the affiliated STA is in the unavailable state, the affiliated STA fails to perform operations such as transmitting and receiving data, and monitoring the channels.

In some embodiments, the power save mode includes a fully powered power save mode or a capability adaptation power save mode, wherein the capability adaptation power save mode includes a static capability adaptation power save mode or a dynamic capability adaptation power save mode.

By way of example rather than limitation, the awake state in the power save mode includes at least one of: an awake state in the dynamic capability adaptation power save mode; an awake state in the static capability adaptation power save mode; or an awake state in the fully powered power save mode.

In the awake state in the fully powered power save mode, the affiliated STA maintains operations in either a full-capability operation mode or a high-capability operation mode. That is, the affiliated STA performs, within a supported capability range, operations such as transmitting and receiving data and monitoring channels by adopting a higher bandwidth, more receive chains, more spatial streams, a higher data rate, a higher-order MCS, and a PPDU format with high processing overhead. The fully powered power save mode may also be referred to as a non-capability adaptation power save mode or a fully powered mode.

In the awake state in the static capability adaptation power save mode, the affiliated STA merely maintains operations in a low-capability operation mode. That is, the affiliated STA performs operations such as transmitting and receiving data and monitoring channels by adopting a low bandwidth, fewer receive chains, fewer spatial streams, a lower data rate, a lower-order MCS, and a PPDU format with low processing overhead. The static capability adaptation power save mode may also be referred to as a non-dynamic capability adaptation power save mode.

In the awake state in the dynamic capability adaptation power save mode, the affiliated STA usually operates in a low-capability operation mode. Upon receiving a specific frame transmitted to the affiliated STA (such as an initial frame including an initial control frame or any other frame defined for mode switching), the affiliated STA switches to a high-capability (or full-capability) operation mode based on an indication of the specific frame, and switches back to the low-capability operation mode upon completion of a current frame exchange.

In some embodiments, the dynamic capability adaptation power save mode has the same meaning as a dynamic power save mode, the non-dynamic capability adaptation power save mode has the same meaning as a non-dynamic power save mode, and the static capability adaptation power save mode has the same meaning as a static power save mode.

By refining specific types of the first power management mode, the present disclosure, compared with the related art in which the power management mode only includes an active mode and a power save mode, enables a more precise indication of the power management mode for the MLD, supports a simultaneous change of the power management mode for the affiliated STAs on all links or part of the links, and also supports a precise change of the power management mode for the affiliated STA on one or more links. The first power management modes of the affiliated STAs on different links upon the change may be different. For example, upon the change of the power management mode, an affiliated STA (STA1) on link1 transitions into a static capability adaptation power save mode, and an affiliated STA (STA2) on link2 transitions into a dynamic capability adaptation power save mode, such that different power management modes are used according to actual needs in different application scenarios.

The present disclosure provides two design schemes for the first frame. In a design scheme 1, the first frame is a Multi-Link Power Management Mode Indication Notification frame, and in a design scheme 2, the first frame is any frame which carries multi-link power management mode indication information.

The design scheme 1 designs a new dedicated frame, which is configured to indicate the first power management mode for at least one of the affiliated STA corresponding to the second link or the affiliated STA corresponding to the first link.

The design scheme 2 is based on a conventional frame format, customizes one or more control fields in the conventional frame format, and indicates, based on the one or more control fields, the first power management mode for at least one of the affiliated STA corresponding to the second link or the affiliated STA corresponding to the first link.

**Description is given hereinafter by taking an example where the first frame is the Multi-Link Power Management Mode Indication Notification frame.**

A first MLD (such as a non-AP MLD) that supports multi-link power management mode indication, upon determining a power management mode for an affiliated STA corresponding to an established link (or an enabled link) of the first MLD, and determining operation parameters to be adopted by the corresponding power management mode, may transmit a Multi-Link Power Management Mode Indication Notification frame to a second MLD (such as an AP MLD associated with the non-AP MLD), as illustrated in FIG. 4.

FIG. 4 is a schematic diagram of a multi-link power management mode indication according to some embodiments of the present disclosure. In an example where the first MLD is a non-AP MLD and the second MLD is an AP MLD, two links (link1 and link2) are successfully established between the non-AP MLD and the AP MLD, link1 and link2 of the non-AP MLD are both enabled links, and affiliated STAs (STA1 and STA2) corresponding to the two links are both in a fully powered state in the active mode.

In a case where the non-AP MLD prepares to change a power management state of STA1, that is, STA1 prepares to switch from the active mode to another power management mode (such as a dynamic capability adaptation power save mode), the non-AP MLD may transmit a Multi-Link Power Management Mode Indication Notification frame to the AP MLD on link2.

Exemplarily, the affiliated STA (STA2) of the non-AP MLD transmits a first Multi-Link Power Management Mode Indication Notification frame to an affiliated AP (AP2) of the AP MLD on link2, and AP2, upon receiving the first Multi-Link Power Management Mode Indication Notification frame, transmits a first acknowledgment frame. In some embodiments, an interval between the first acknowledgment frame and the first Multi-Link Power Management Mode Indication Notification frame is an SIFS.

By way of example rather than limitation, the Multi-Link Power Management Mode Indication Notification frame carries a Link Identifier subfield and a Power Management subfield. The Link Identifier subfield is configured to indicate a link identifier of link1. For example, a value of 1 in the Link Identifier subfield corresponds to link1; and a value of 1 in the Power Management subfield indicates that STA1 is to be in a power save mode.

By way of example rather than limitation, the Multi-Link Power Management Mode Indication Notification frame carries a Capability Adaptation Power Save Enabled field and a Capability Adaptation Power Save Mode field. In a case where the Capability Adaptation Power Save Enabled field is set to 1, STA1 is instructed to enable a capability adaptation power save mode. In a case where the Capability Adaptation Power Save Mode field is set to 1, STA1 is instructed to enter or transition into a dynamic capability adaptation power save mode.

In some embodiments, in a case where the second MLD (such as the AP MLD) has received the first Multi-Link Power Management Mode Indication Notification frame, and in response to the received first Multi-Link Power Management Mode Indication Notification frame, the second MLD may transmit a second Multi-Link Power Management Mode Indication Notification frame to the first MLD (such as the non-AP MLD) via link1 or link2 within a multi-link power management mode indication transition timeout (or called a transition timeout) period. This case is applied to at least one of the following rules:
1) In some embodiments, a management frame (such as a Beacon frame or an Association Response frame) transmitted by an affiliated AP of the second MLD carries a Multi-Link Power Management Mode Indication Transition Timeout subfield. The Multi-Link Power Management Mode Indication Transition Timeout subfield is configured to indicate the multi-link power management mode indication transition timeout period.
   For example, in FIG. 4, the Beacon frame transmitted by AP1 carries the Multi-Link Power Management Mode Indication Transition Timeout subfield.
   Except for authentication frames transmitted by the affiliated APs of the second MLD, basic multi-link elements in all management frames carrying the basic multi-link elements may include the Multi-Link Power Management Mode Indication Transition Timeout subfield in a Multi-Link Power Management Mode Indication Capability subfield.
2) In some embodiments, the multi-link power management mode indication transition timeout period starts from an end of PPDU[+SigExt]. Herein, "PPDU" represents a first PPDU transmitted by the second MLD and carries an acknowledgment (ACK) in response to the first Multi-Link Power Management Mode Indication Notification frame. In a case where a signal extension is present, "PPDU[+SigExt]" represents the first PPDU plus the signal extension following the PPDU. In a case where the signal extension is absent, "PPDU[+SigExt]" represents the first PPDU.
   As illustrated in FIG. 4, the first PPDU acts as a first acknowledgment frame corresponding to the first Multi-Link Power Management Mode Indication Notification frame. In a case where the signal extension is absent, the multi-link power management mode indication transition timeout period (abbreviated as a transition timeout period) starts from the end of the first PPDU.
3) In some embodiments, subfields in the second Multi-Link Power Management Mode Indication Notification frame have the same values as the subfields in the first Multi-Link Power Management Mode Indication Notification frame.

Exemplarily, a value of a Multi-Link Power Management Mode Indication Control subfield in the second Multi-Link Power Management Mode Indication Notification frame, is the same as a value of the Multi-Link Power Management Mode Indication Control subfield in the first Multi-Link Power Management Mode Indication Notification frame; and a value of a Link Power Management Mode Indication Information subfield in the second Multi-Link Power Management Mode Indication Notification frame, is the same as a value of the Link Power Management Mode Indication Information subfield in the first Multi-Link Power Management Mode Indication Notification frame.

The value of the subfield in the second Multi-Link Power Management Mode Indication Notification frame is the same as the value of the subfield in the first Multi-Link Power Management Mode Indication Notification frame, which is an optional design. In other designs, a portion of the subfields of the first Multi-Link Power Management Mode Indication Notification frame and the second Multi-Link Power Management Mode Indication Notification frame may be the same, and another portion of the subfields may be different; or, all of the subfields of the first Multi-Link Power Management Mode Indication Notification frame and the second Multi-Link Power Management Mode Indication Notification frame may be the same; or, the subfields in the second Multi-Link Power Management Mode Indication Notification frame may not include any subfield in the first Multi-Link Power Management Mode Indication Notification frame, which is not limited in the embodiments of the present disclosure.

In the case that the first frame is the Multi-Link Power Management Mode Indication Notification frame, a new Multi-Link Power Management Mode Indication Notification frame is designed as a dedicated frame to indicate the multi-link power management mode for the affiliated STA, such that a reliability of information transmission is improved and a possibility of conflict with other information transmission is reduced.

**Description is given hereinafter by taking an example where the first frame is a frame carrying multi-link power management mode indication information.**

In some embodiments, the first frame is a PPDU carrying one or more individually addressed QoS data frames, one or more individually addressed QoS null frames, or one or more individually addressed class 3 management frames.

In some embodiments, a multi-link power management mode indication operation is used to indicate: a multi-link power management mode for an affiliated STA corresponding to an established link (or an enabled link) of a first MLD; or that a multi-link power management mode operation of the corresponding affiliated STA is changing; and/or whether to enable a dynamic power save operation.

In some embodiments, an MLD or an affiliated STA of the MLD that transmits the first frame is defined as an initiator of the multi-link power management mode indication operation; and an MLD or an affiliated station of the MLD that receives the first frame is defined as a responder of the multi-link power management mode indication operation.

The first frame includes a Multi-Link Power Management Mode Control subfield, and/or a Multi-Link Dynamic Power Save Mode Enabling Control subfield, and/or a Cross-link Power Management Mode Control subfield.

FIG. 5 is a schematic diagram of a multi-link power management mode indication according to some embodiments of the present disclosure. A first MLD (e.g., a non-AP MLD) as an initiator of the multi-link power management mode indication operation may transmit a first frame to a second MLD (e.g., an AP MLD) on one of established links (or enabled links). The first frame is a PPDU carrying one or more individually addressed QoS data frames, one or more individually addressed QoS null frames, or one or more individually addressed class 3 management frames. The first MLD requests the second MLD as the responder of the multi-link power management mode indication operation to immediately confirm a change of a multi-link power management mode operation and/or a dynamic power save operation. Upon receiving the first frame, the second MLD transmits a second frame (e.g., an acknowledgment frame) as a response to the request of the first MLD. In some embodiments, an interval between the second frame and the first frame is an SIFS.

In the case that the first frame carries the multi-link power management mode indication information, no new design of a dedicated frame is required for the transmission of the multi-link power management mode indication information. Instead, based on a conventional frame format, one or more control fields may be customized in the conventional frame format, and the first power management mode for the affiliated STA corresponding to at least one of the second link or the first link, may be indicated via the control fields, enabling better utilization of the conventional frame format.

In summary, in the method according to the embodiments of the present disclosure, a second MLD receives a first frame from a first MLD on a first link, wherein the first frame is configured to indicate a first power management mode for at least one of an affiliated STA corresponding to a second link or an affiliated STA corresponding to the first link; and the second link is different from the first link in the plurality of links, such that a cross-link indication or a multi-link indication of the power management mode for the affiliated STA is achieved. Compared with the related art, the cross-link indication of the first power management mode for one or more affiliated STAs, or the multi-link indication of the first power management mode for the plurality of affiliated STAs, is enabled such that the number of frame exchanges is reduced, and indication efficiency is improved.

Based on the foregoing embodiments illustrated in FIG. 3 or FIG. 6, in the case where the first frame is the Multi-Link Power Management Mode Indication Notification frame, formats of Multi-Link Power Management Mode Indication elements associated with the first frame are described hereinafter.

### Multi-Link Power Management Mode Indication element:

FIG. 7 is a schematic diagram of a format of a Multi-Link Power Management Mode Indication element according to some embodiments of the present disclosure. The Multi-Link Power Management Mode Indication element includes at least one of: an Element ID field, a Length field, an Element ID Extension field, a Multi-Link Power Management Mode Indication Control field, or a Link Power Management Mode Indication Information field. In the embodiments of the present disclosure, the term "subfield" and the term "field" have the same meaning.

For example, the Element ID field occupies 1 octet; the Length field occupies 1 octet; the Element ID Extension field occupies 1 octet; the Multi-Link Power Management Mode Indication Control field occupies a variable number of octets; and the Link Power Management Mode Indication Information field occupies a variable number of octets. The Element ID field, the Length field, and the Element ID Extension field comply with definitions specified in "Elements" chapters of relevant standards.

### Multi-Link Power Management Mode Indication Control field:

In some embodiments, the first frame carries a control field for indicating the first power management mode.

In some embodiments, the control field includes at least one of: a first control field, configured to indicate whether the first power management mode is an active mode or a power save mode; a second control field, configured to indicate whether the power save mode is a fully powered power save mode or a capability adaptation power save mode; or a third control field, configured to indicate that the capability adaptation power save mode is a non-dynamic capability adaptation power save mode or a dynamic capability adaptation power save mode.

Exemplarily, the first control field is a Multi-Link Power Management Mode Indication Bitmap field, the second control field is a Multi-Link Power Save Mode Indication Bitmap field, and the third control field is a Multi-Link Dynamic Power Save Mode Indication Bitmap field.

In some embodiments, at least one of the first control field, the second control field, and the third control field is a bitmap field. In the bitmap field, a bit position *i* corresponds to a link with a link ID *i,* and is configured to indicate the first power management mode for the affiliated STA corresponding to the link with link ID i, where i is an integer.

In some embodiments, the first control field is a first bitmap field, wherein a bit position i in the first bitmap field corresponds to a link with a link ID *i*, and is configured to indicate that the first power management mode for the affiliated STA, corresponding to the link with the link ID *i,* is the active mode or the power save mode, *i* being an integer.

In some embodiments, the second control field is a second bitmap field, wherein a bit position *i* in the second bitmap field corresponds to a link with a link ID *i*, and is configured to indicate that the first power management mode for the affiliated STA, corresponding to the link with the link ID *i*, is the fully powered power save mode or the capability adaptation power save mode, *i* being an integer.

In some embodiments, the third control field is a third bitmap field, wherein a bit position *i* in the third bitmap field corresponds to a link with a link ID *i*, and is configured to indicate that the first power management mode for the affiliated STA, corresponding to the link with the link ID *i*, is the non-dynamic capability adaptation power save mode or the dynamic capability adaptation power save mode, *i* being an integer.

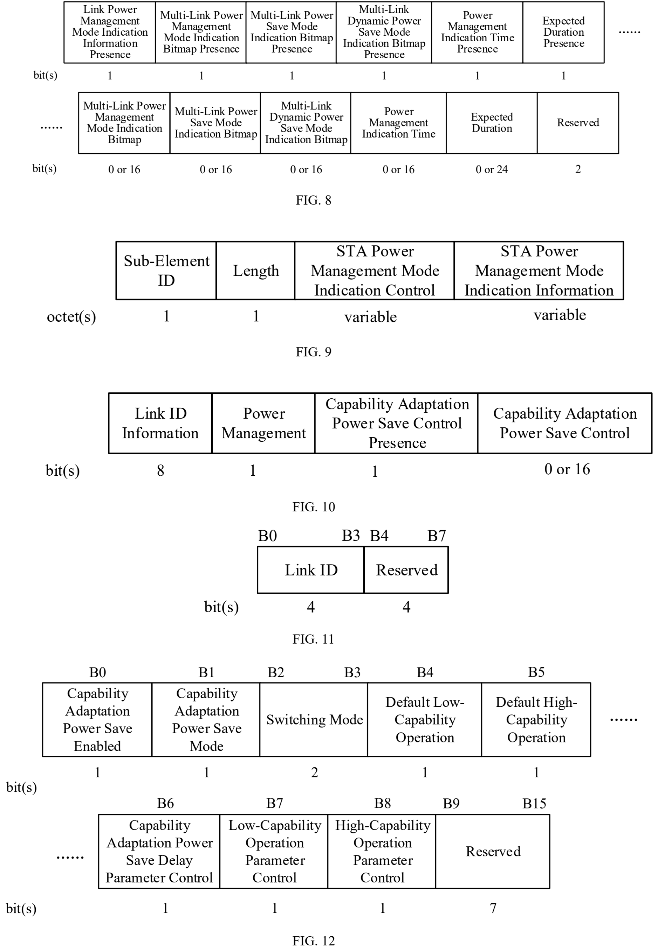

Description is given herein by using an example where the control field is the Multi-Link Power Management Mode Indication Control field. With respect to the Multi-Link Power Management Mode Indication Control field as described above, FIG. 8 is a schematic diagram of a format of the Multi-Link Power Management Mode Indication Control field according to some embodiments of the present disclosure. The Multi-Link Power Management Mode Indication Control field includes at least one of: a Link Power Management Mode Indication Information Presence field, a Multi-Link Power Management Mode Indication Bitmap Presence field, a Multi-Link Power Save Mode Indication Bitmap Presence field, a Multi-Link Dynamic Power Save Mode Indication Bitmap Presence field, a Power Management Indication Time Presence field, an Expected Duration Presence field, a Multi-Link Power Management Mode Indication Bitmap field, a Multi-Link Power Save Mode Indication Bitmap field, a Multi-Link Dynamic Power Save Mode Indication Bitmap field, a Power Management Indication Time field, an Expected Duration field, or a Reserved field.

For example, the Link Power Management Mode Indication Information Presence field occupies 1 bit, the Multi-Link Power Management Mode Indication Bitmap Presence field occupies 1 bit, the Multi-Link Power Save Mode Indication Bitmap Presence field occupies 1 bit, the Multi-Link Dynamic Power Save Mode Indication Bitmap Presence field occupies 1 bit, the Power Management Indication Time Presence field occupies 1 bit, the Expected Duration Presence field occupies 1 bit, the Multi-Link Power Management Mode Indication Bitmap field occupies 0 or 16 bits, the Multi-Link Power Save Mode Indication Bitmap field occupies 0 or 16 bits, the Multi-Link Dynamic Power Save Mode Indication Bitmap field occupies 0 or 16 bits, the Power Management Indication Time field occupies 0 or 16 bits, the Expected Duration field occupies 0 or 24 bits, and the Reserved field occupies 2 bits.

The Link Power Management Mode Indication Information Presence field indicates whether the Link Power Management Mode Indication Information field is present in the Multi-Link Power Management Mode Indication element. In a case where the Link Power Management Mode Indication Information field is present in the Multi-Link Power Management Mode Indication element, the Link Power Management Mode Indication Information Presence field is set to 1. In a case where the Link Power Management Mode Indication Information field is absent in the Multi-Link Power Management Mode Indication element, the Link Power Management Mode Indication Information Presence field is set to 0.

The Multi-Link Power Management Mode Indication Bitmap Presence field indicates whether the Multi-Link Power Management Mode Indication Bitmap field is present in the Multi-Link Power Management Mode Indication Control field. In a case where the Multi-Link Power Management Mode Indication Bitmap field is present in the Multi-Link Power Management Mode Indication Control field, the Multi-Link Power Management Mode Indication Bitmap Presence field is set to 1. In a case where the Multi-Link Power Management Mode Indication Bitmap field is absent in the Multi-Link Power Management Mode Indication Control field, the Multi-Link Power Management Mode Indication Bitmap Presence field is set to 0.

The Multi-Link Power Save Mode Indication Bitmap Presence field indicates whether the Multi-Link Power Save Mode Indication Bitmap field is present in the Multi-Link Power Management Mode Indication Control field. In a case where the Multi-Link Power Save Mode Indication Bitmap field is present in the Multi-Link Power Management Mode Indication Control field, the Multi-Link Power Save Mode Indication Bitmap Presence field is set to 1. In a case where the Multi-Link Power Save Mode Indication Bitmap field is absent in the Multi-Link Power Management Mode Indication Control field, the Multi-Link Power Save Mode Indication Bitmap Presence field is set to 0.

The Power Management Indication Time Presence field indicates whether the Power Management Indication Time field is present in the Multi-Link Power Management Mode Indication Control field. In a case where the Power Management Indication Time field is present in the Multi-Link Power Management Mode Indication Control field, the Power Management Indication Time Presence field is set to 1. In a case where the Power Management Indication Time field is absent in the Multi-Link Power Management Mode Indication Control field, the Power Management Indication Time Presence field is set to 0.

The Expected Duration Presence field indicates whether the Expected Duration field is present in the Multi-Link Power Management Mode Indication Control field. In a case where the Expected Duration field is present in the Multi-Link Power Management Mode Indication Control field, the Expected Duration Presence field is set to 1. In a case where the Expected Duration field is absent in the Multi-Link Power Management Mode Indication Control field, the Expected Duration Presence field is set to 0.

The Multi-Link Power Management Mode Indication Bitmap field indicates a power management mode for an affiliated STA corresponding to an established link (or enabled link) of an MLD. That is, the Multi-Link Power Management Mode Indication Bitmap field indicates which STAs in the affiliated STAs corresponding to the established links (or enabled links) of the MLD is to be in an active mode or a power save mode.

A bit position *i* in the Multi-Link Power Management Mode Indication Bitmap field corresponds to a link with a link ID field being *i*. The *i*^{th} bit is set to 1, indicating that an affiliated STA, corresponding to the link with the link ID field being *i,* may enter or transition into a power save mode. That is, the affiliated STA may be in a doze state or an awake state. The *i*^{th} bit is set to 0, indicating that the affiliated STA, corresponding to the link with the link ID field being *i,* may enter or transition into an active mode. That is, the affiliated STA may be in an awake state of a fully powered power save mode or an awake state of a dynamic capability adaptation power save mode (or called dynamic power save mode). The link with the link ID field being i is an established link or an enabled link of the MLD. In the embodiments of the present disclosure, the affiliated STA may be simply referred to as an STA.

The Multi-Link Power Save Mode Indication Bitmap field indicates a power save mode for an affiliated STA corresponding to an established link (or enabled link) of an MLD. That is, the Multi-Link Power Save Mode Indication Bitmap field indicates which STAs in the affiliated STAs corresponding to the established links (or enabled links) of the MLD is to be in a capability adaptation power save mode.

In some embodiments, a bit position *i* in the Multi-Link Power Save Mode Indication Bitmap field corresponds to a link with a link ID field being *i*. The *i*^{th} bit is set to 1, indicating that an affiliated STA, corresponding to the link with the link ID field being *i*, is to be in the capability adaptation power save mode. The *i*^{th} bit is set to 0, indicating that the affiliated STA, corresponding to the link with the link ID field being *i*, is to be in a non-capability adaptation power save mode, that is, the STA is to be in an awake state of a fully powered power save mode or a doze state. The link with the link ID field being *i* is an established link or an enabled link of the MLD.

The capability adaptation power save mode (or called capability adaptation power save operation mode) allows an STA that is in the awake state and has one or more receive chains to monitor operation channels or to transmit and receive data on the operation channels in a low-capability operation mode (or called low-capability mode). The low-capability operation mode includes the use of a low bandwidth, fewer receive chains, fewer spatial streams, a lower data rate, a lower-order MCS, or a PPDU format with a low processing overhead. Upon receiving a specific frame (such as an initial frame including an initial control frame or any other frame defined for power management mode switching) transmitted to the STA, the STA may determine, based on an operation mode and a type of the capability adaptation power save mode that the STA is in, whether to switch to a high-capability operation mode (or called high-capability mode) for frame exchange. The high-capability operation mode includes the use of a higher bandwidth, more receive chains, more spatial streams, a higher data rate, a higher-order MCS, or a PPDU format with a high processing overhead, within a capability range supported by the STA.

With respect to the capability adaptation power save mode, in a case where the STA is in the non-dynamic capability adaptation power save mode, the STA only maintains operations in the low-capability operation mode. In a case where the STA operates in a dynamic capability adaptation power save mode, the STA, in an awake state, monitors operation channels or transmits and receives data on the operation channels in the low-capability operation mode. Upon receiving a specific frame transmitted to the STA, the STA switches to a high-capability (or full-capability) operation mode based on the indication of the specific frame, and upon completion of a current frame exchange, the STA switches back to the low-capability operation mode for monitoring operation channels or for transmitting and receiving data.

The Multi-Link Dynamic Power Save Mode Indication Bitmap field indicates that an affiliated STA corresponding to an established link (or enabled link) of an MLD is to be in a dynamic capability adaptation power save mode. That is, the Multi-Link Dynamic Power Save Mode Indication Bitmap field indicates which STAs in the affiliated STAs corresponding to the established links (or enabled links) of the MLD is to be in the dynamic capability adaptation power save mode.

A bit position *i* in the Multi-Link Dynamic Power Save Mode Indication Bitmap field corresponds to a link with a link ID field being *i*. The *i*^{th} bit is set to 1, indicating that the affiliated STA corresponding to the link with the link ID field being *i* may be in the dynamic capability adaptation power save mode. The *i*^{th} bit is set to 0, indicating that the affiliated STA corresponding to the link with the link ID field being *i* may be in a non-dynamic capability adaptation power save mode (or called static capability adaptation power save mode).

The link with the link ID field being i is an established link or an enabled link of the MLD. In a case where the STA operates in the dynamic capability adaptation power save mode, the STA, in the awake state, monitors operation channels or transmits and receives data on the operation channels in a low-capability operation mode. In a case where a peer STA (such as an AP associated with the STA) of the STA transmits a PPDU carrying a specific frame to the STA, parameters (such as a bandwidth capability, a receive chain capability, a spatial stream capability, a data rate, a MCS, or a PPDU format) adopted by the STA during the reception of the specific frame are constrained by capability parameters corresponding to the low-capability operation mode, or by an operation mode notification, or by an operation mode specified by an operation mode indication (OMI) process. Upon receiving the specific frame, the STA is capable of supporting the parameters such as the bandwidth capability, the receive chain capability, the spatial stream capability, the data rate, the MCS, or the PPDU format corresponding to the high-capability operation mode until an end of a frame exchange sequence where frame exchange of the specific frame is located.

In some embodiments, the first frame also carries at least one of: a first indication time subfield, configured to indicate an expected activation time point of the first power management mode; or a first duration subfield, configured to indicate a duration required for the first power management mode to remain activated as expected. The expected activation time point is a time point at which the affiliated STA corresponding to the first MLD on the second link is expected to enter or transition into the first power management mode.

Exemplarily, the first indication time subfield is the Power Management Indication Time field, and the first duration subfield is the Expected Duration field.

The Power Management Indication Time field is set to a future time point at which the multi-link power management indication is expected to be activated or to take effect. The Power Management Indication Time field uses a value, of a time synchronization function (TSF) corresponding to a basic service set (BSS) where an STA that transmits a frame carrying the Multi-Link Power Management Mode Indication element is located, as the time point, that is, the 10^{th} to 25^{th} bits of the TSF.

The Expected Duration field indicates time of duration required for the indicated multi-link power management mode to remain activated as expected. The duration starts from an end of a second PPDU. Alternatively, in a case where a signal extension is present, the duration starts from an end of the second PPDU plus the signal extension following the second PPDU. The indicated multi-link power management mode ends after the duration indicated by the Expected Duration field. The second PPDU is transmitted by the first MLD that has received a second frame, and carries an acknowledgment (ACK) in response to the second frame. The second frame is transmitted by the second MLD on the second link or the first link in response to the first frame. The Expected Duration field is measured in time units (TUs), and 1 TU is a time measurement unit equal to 1024 microseconds.

As illustrated in FIG. 4, in an example where the first frame is a first Multi-Link Power Management Mode Indication Notification frame, the second frame is a second Multi-Link Power Management Mode Indication Notification frame which carries the Expected Duration field, the second PPDU acts as the second acknowledgment frame in response to the second Multi-Link Power Management Mode Indication Notification frame, and the signal extension is assumed to be absent, the duration starts from an end of the second acknowledgment frame.

The above formats of the Multi-Link Power Management Mode Indication element and the format of the Multi-Link Power Management Mode Indication Control field are exemplary possibilities. In different embodiments or different designs, the present disclosure does not exclude and limit situations in which at least one of designs of the above fields (such as a position of the field in the frame, an arrangement order of the field relative to other fields, the number of octets occupied by the field, the number of bits occupied by the field, a name of an element, and a name of the field) is changed.

### Link Power Management Mode Indication Information field:

The Link Power Management Mode Indication Information field carries one or more indication information elements for a power management mode for an affiliated STA corresponding to an established link (or enabled link) of an MLD and the one or more information elements are specific to the affiliated STA. The Link Power Management Mode Indication Information field is optional.

In some embodiments, the Link Power Management Mode Indication Information field may carry one or more sub-elements, and identification examples of optional sub-elements carried in the field are listed in Table 1. In a case where the Link Power Management Mode Indication Information field is present, this field includes one or more Per-STA Power Management Indication Info sub-elements, wherein each Per-STA Power Management Indication Info sub-element carries power management mode indication information for an affiliated STA corresponding to an established link (or enabled link) of an MLD. By default, the carried power management mode indication information for the STA is power save mode information for the STA, including dynamic power save mode information for the STA.

**Table 1**

| Sub-Element Identifier | Name | Scalability |
|---|---|---|
| 0 | Per-STA Power Management Indication Info | Yes |
| 1-220 | Reserved | / |
| 221 | Specific or Designated Vendor | Vendor-Defined |
| 222-253 | Reserved | / |
| 254 | Fragment | No |
| 255 | Reserved | No |

### Per-STA Power Management Mode Indication Info sub-element:

FIG. 9 is a schematic diagram of a format of the Per-STA Power Management Mode Indication Info sub-element according to some embodiments of the present disclosure. The Per-STA Power Management Mode Indication Info sub-element includes at least one of: a Sub-Element ID field, a Length field, an STA Power Management Mode Indication Control field, or an STA Power Management Mode Indication Information field.

The Sub-Element ID field occupies 1 octet, the Length field occupies 1 octet, the STA Power Management Mode Indication Control field occupies a variable number of octets, and the STA Power Management mode Indication Information field occupies a variable number of octets.

### STA Power Management Mode Indication Control field:

With respect to the STA Power Management Mode Indication Control field, FIG. 10 is a schematic diagram of a format of the STA Power Management Mode Indication Control field according to some embodiments of the present disclosure. The STA Power Management Mode Indication Control field includes at least one of: a Link ID Information field, a Power Management field, a Capability Adaptation Power Save Control Presence field, or a Capability Adaptation Power Save Control field.

The Link ID Information field occupies 8 bits, the Power Management field occupies 1 bit, the Capability Adaptation Power Save Control Presence field occupies 1 bit, and the Capability Adaptation Power Save Control field occupies 0 or 16 bits.

### Link ID Information field:

With respect to the Link ID Information field, FIG. 11 is a schematic diagram of a format of the Link ID Information field according to some embodiments of the present disclosure. The Link ID Information field includes at least one of: a Link ID field or a Reserved field.

The Link ID field occupies 4 bits from B0 to B3, and the Reserved field occupies 4 bits from B4 to B7.

The Link ID field indicates an identifier of a link corresponding to a specific STA in an established link (or enabled link) of an MLD described by the Per-STA Power Management Mode Indication Info sub-element.

In some embodiments, the link ID is an integer ranging from 0 to 14, which is configured to uniquely identify an affiliated STA of an AP MLD corresponding to the link.

The Power Management field indicates the power management mode for an STA described by the Per-STA Power Management Mode Indication Info sub-element, wherein the STA corresponds to a link indicated by the Link ID Information field carried in the Per-STA Power Management Mode Indication Info sub-element. The Power Management field is set to 1, indicating that the STA is to be in a power save mode (i.e., an awake state or a doze state). The Power Management field is set to 0, indicating that the STA is to be in an active mode, that is, the STA is to be in an awake state which includes an awake state under full power, an awake state under dynamic capability adaptation energy saving, or an awake state under dynamic energy saving.

### Capability Adaptation Power Save Control field:

With respect to the Capability Adaptation Power Save Control field, FIG. 12 is a schematic diagram of a format of the Capability Adaptation Power Save Control field according to some embodiments of the present disclosure. The Capability Adaptation Power Save Control field includes at least one of: a Capability Adaptation Power Save Enabled field, a Capability Adaptation Power Save Mode field, a Switching Mode field, a Default Low-Capability Operation field, a Default High-Capability Operation field, a Capability Adaptation Power Save Delay Parameter Control field, a Low-Capability Operation Parameter Control field, a High-Capability Operation Parameter Control field, or a Reserved field.

The Capability Adaptation Power Save Enabled field occupies 1 bit at B0, the Capability Adaptation Power Save Mode field occupies 1 bit at B1, the Switching Mode field occupies 2 bits at B2 to B3, the Default Low-Capability Operation field occupies 1 bit at B4, the Default High-Capability Operation field occupies 1 bit at B5, the Capability Adaptation Power Save Delay Parameter Control field occupies 1 bit at B6, the Low-Capability Operation Parameter Control field occupies 1 bit at B7, the High-Capability Operation Parameter Control field occupies 1 bit at B8, and the Reserved field occupies 7 bits at B9 to B15.

The Capability Adaptation Power Save Enabled (abbreviated as "CAA PS Enabled") field indicates whether to enable capability adaptation energy saving for the STA. Exemplarily, in a case where the CAA PS Enabled field is set to 1, the capability adaptation energy saving is enabled for the STA; or, in a case where the CAA PS Enabled field is set to 0, the capability adaptation energy saving is disabled for the STA, that is, a capability adaptation power save function is turned off.

The Capability Adaptation Power Save Mode field indicates a capability adaptation power save operation mode. Exemplarily, the Capability Adaptation Power Save Mode field is set to 1, indicating a dynamic capability adaptation power save mode; and, the Capability Adaptation Power Save Mode field is set to 0, indicating a non-dynamic capability adaptation power save mode (or called a static capability adaptation power save mode). Alternatively, the Capability Adaptation Power Save Mode field is set to 0, indicating the dynamic capability adaptation power save mode; and, the Capability Adaptation Power Save Mode field is set to 1, indicating the non-dynamic capability adaptation power save mode.

In the non-dynamic capability adaptation power save mode, the STA only maintains operations in the low-capability operation mode. In some embodiments, in a case where the STA is in the non-dynamic capability adaptation power save mode, the STA maintains operations in the low-capability operation mode during frame exchange, between the STA and an AP associated with the STA, initiated by the AP.

In some embodiments, the first frame is also configured to indicate one or more operation parameters to be adopted by the affiliated STA corresponding to at least one of the second link or the first link in the first power management mode.

In some embodiments, in a case where the first power management mode is a dynamic capability adaptation power save mode, the one or more operation parameters include at least one of:
an operation mode and type of the dynamic capability adaptation power save mode; an operation parameter in a first capability operation mode; or an operation parameter in a second capability operation mode. The capability under the first capability operation mode is lower than the capability under the second capability operation mode.

Exemplarily, the first capability operation mode is a low-capability operation mode, and the second capability operation mode is a high-capability operation mode.

In some embodiments, the first frame also carries at least one of:
a Switching Mode subfield, configured to indicate the operation mode and type of the dynamic capability adaptation power save mode; a first Capability Operation Parameter subfield, configured to indicate an operation parameter in the first capability operation mode; or a second Capability Operation Parameter subfield, configured to indicate an operation parameter in the second capability operation mode.

Exemplarily, the Switching Mode subfield may also be called a Switching Mode field, the first Capability Operation Parameter subfield may also be called a Low-Capability Operation Mode Parameter field, and the second Capability Operation Parameter subfield may also be called a High-Capability Operation Mode Parameter field.

The Switching Mode field indicates a way for the STA in the dynamic capability adaptation power save mode to switch from the low-capability operation mode to the high-capability operation mode. In some embodiments, the Switching Mode field indicates the specific operation mode and type of the dynamic capability adaptation power save mode for the STA, such as the dynamic capability adaptation power save mode based on default operations, or the dynamic capability adaptation power save mode based on mandatory control. Specific definitions of the switching mode field are listed in Table 2.

**Table 2**

| Encoding Value of Switching Mode Field | Definition of Switching Mode Field |
|---|---|
| 0 | Default Switching Mode |
| 1 | First Non-Default Switching Mode (Non-Default Switching Mode 1) |
| 2 | Second Non-Default Switching Mode (Non-Default Switching Mode 2) |
| 3 | Reserved |

The default switching mode indicates that the STA, upon receiving an initial frame transmitted to the STA, switches to the high-capability operation mode for frame exchange, and upon completion of a current frame exchange, the STA switches back to the low-capability operation mode for monitoring channels or transmitting and receiving data. The transmission of the initial frame needs to meet receiving capability requirements of the STA in the low-mode operation mode, such that the STA is capable of receiving the frame in the low-capability operation mode.

In some embodiments, the default switching mode corresponds to the dynamic capability adaptation power save mode based on default operations.

The first non-default switching mode (non-default switching mode 1) indicates that, in a case where the STA receives an initial control frame transmitted to the STA, the STA switches to the high-capability operation mode for frame exchange, and upon completion of a current frame exchange, the STA switches back to the low-capability operation mode for monitoring channels or transmitting and receiving data; or in a case where the STA receives an initial frame that is not the initial control frame, the STA determines, based on the indication of the initial frame, whether to switch to the high-capability operation mode for frame exchange in a current frame exchange sequence.

In some embodiments, the first non-default switching mode corresponds to a dynamic capability adaptation power save mode based on mandatory control.

The second non-default switching mode (non-default switching mode 2) indicates that the STA determines, based on a switching indication carried by a frame transmitted to the STA, whether to switch to the high-capability operation mode for frame exchange in a current frame exchange sequence, wherein the switching indication is an imperative indication.

In some embodiments, the second non-default switching mode corresponds to another dynamic capability adaptation power save mode based on mandatory control, and the second non-default switching mode and the first non-default switching mode are different dynamic capability adaptation power save modes based on mandatory control.

The Default Low-Capability Operation field indicates whether to adopt a default low-capability operation mode. In a case where the STA is required to adopt the default low-capability operation mode, the Default Low-Capability Operation field is set to 1; or, in a case where the STA is required to not adopt the default low-capability operation mode, the Default Low-Capability Operation field is set to 0.

In some embodiments, the default low-capability operation mode may be specified as: having monitoring capability which includes being capable of performing clear channel assessment (CCA) and receiving an initial frame of frame exchange initiated by a peer STA; having an operating bandwidth of 20 MHz; being capable of receiving a non-high throughput PPDU (abbreviated as non-HT PPDU) or non-HT duplicate PPDU; and supporting data rates of 6 Mb/s, 12 Mb/s, or 24 Mb/s.

The Default High-Capability Operation field indicates whether to adopt a default high-capability operation mode. In a case where the STA is required to adopt the default high-capability operation mode, the Default High-Capability Operation field is set to 1; or, in a case where the STA is required to not adopt the default high-capability operation mode, the Default High-Capability Operation field is set to 0.

In some embodiments, the default high-capability operation mode may be specified as a full-capability mode, that is, having capabilities corresponding to an operation mode declared by the STA, including capabilities corresponding to a capability element carried during an association procedure and/or capabilities corresponding to an operation mode defined by an exchanged operation mode notification frame.

The Capability Adaptation Power Save Delay Parameter Control field indicates whether a Capability Adaptation Power Save Delay Parameter field is present in a Capability Adaptation Power Save frame. In a case where a value of the Capability Adaptation Power Save Mode field is equal to 1 and the Capability Adaptation Power Save Delay Parameter field is present in the Capability Adaptation Power Save frame, the Capability Adaptation Power Save Control field is set to 1; or, in a case where the value of the Capability Adaptation Power Save Mode field is equal to 1 and the Capability Adaptation Power Save Delay Parameter field is absent in the Capability Adaptation Power Save frame, the Capability Adaptation Power Save Control field is set to 0.

In some embodiments, in a case where the Capability Adaptation Power Save Delay Parameter field is present in a frame transmitted by an AP, the Capability Adaptation Power Save Control field is set to 0.

The Low-Capability Operation Parameter Control field indicates whether a Low-Capability Operation Parameter field is present. In a case where the Low-Capability Operation Parameter field is present, the Low-Capability Operation Parameter Control field is set to 1. In a case where the Low-Capability Operation Parameter field is absent, the Low-Capability Operation Parameter Control field is set to 0.

The above formats of the Link Power Management Mode Indication Information field, the Per-STA Power Management Mode Indication Info sub-element, the STA Power Management Mode Indication Control field, the Link ID Information field, and the Capability Adaptation Power Save Control field are exemplary possibilities. In different embodiments or different designs, the present disclosure does not exclude and limit situations in which at least one of designs of the above fields (such as a position of the field in the frame, an arrangement order of the field relative to other fields, the number of octets occupied by the field, the number of bits occupied by the field, a name of an element, and a name of the field) is changed.

### STA Power Management Mode Indication Information field:

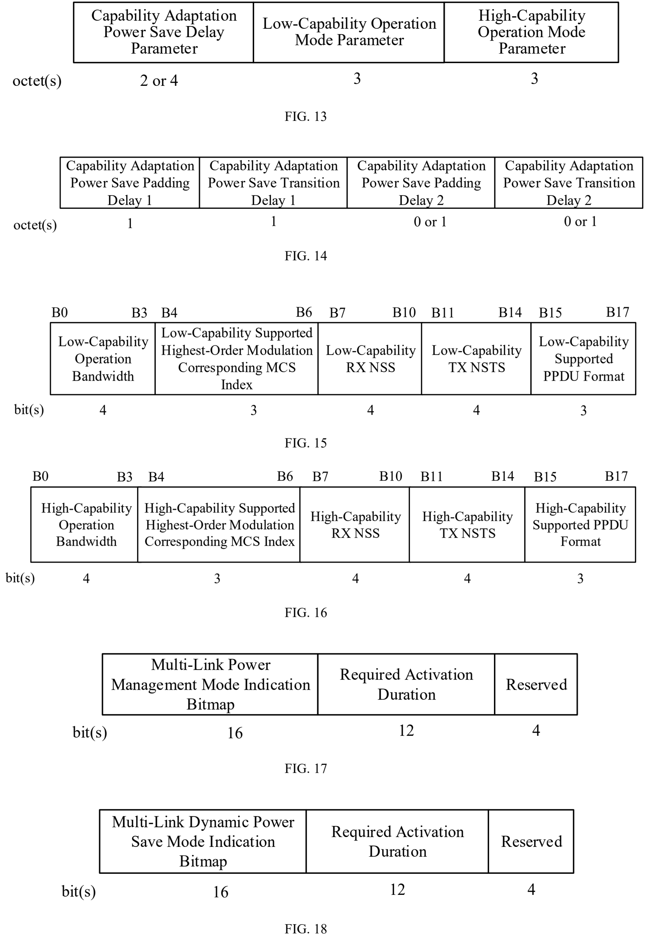

With respect to the above STA Power Management Mode Indication Information field, FIG. 13 is a schematic diagram of a format of the STA Power Management Mode Indication Information field according to some embodiments of the present disclosure. The STA Power Management Mode Indication Information field includes at least one of: a Capability Adaptation Power Save Delay Parameter field, a Low-Capability Operation Mode Parameter field, or a High-Capability Operation Mode Parameter field.

The Capability Adaptation Power Save Delay Parameter field occupies 2 or 4 octets, the Low-Capability Operation Mode Parameter field occupies 3 octets, and the High-Capability Operation Mode Parameter field occupies 3 octets.

### Capability Adaptation Power Save Delay Parameter field:

With respect to the above Capability Adaptation Power Save Delay Parameter field, FIG. 14 is a schematic diagram of a format of the Capability Adaptation Power Save Delay Parameter field according to some embodiments of the present disclosure. The Capability Adaptation Power Save Delay Parameter field includes at least one of: a Capability Adaptation Power Save Padding Delay 1 field, a Capability Adaptation Power Save Transition Delay 1 field, a Capability Adaptation Power Save Padding Delay 2 field, or a Capability Adaptation Power Save Transition Delay 2 field.

The Capability Adaptation Power Save Padding Delay 1 field occupies 1 octet, the Capability Adaptation Power Save Transition Delay 1 field occupies 1 octet, the Capability Adaptation Power Save Padding Delay 2 field occupies 0 or 1 octet, and the Capability Adaptation Power Save Transition Delay 2 field occupies 0 or 1 octet.

The Capability Adaptation Power Save Padding Delay field indicates the minimum media access control (MAC) padding duration of an initial frame requested by the STA.

In some embodiments, the Capability Adaptation Power Save Padding Delay 1 field indicates the minimum MAC padding duration of an initial frame requested by the STA for switching from a low-capability operation mode to a full-capability operation mode. The Capability Adaptation Power Save Padding Delay 2 field indicates the minimum MAC padding duration of an initial frame requested by the STA for switching from the low-capability operation mode to a high-capability operation mode. In a case where the high-capability operation mode is equivalent to the full-capability operation mode, the Capability Adaptation Power Save Padding Delay 2 field is not required or present. Encoding of the Capability Adaptation Power Save Padding Delay field is listed in Table 3.

**Table 3**

| Value of Capability Adaptation Power Save Padding Delay Field | Capability Adaptation Power Save Padding Delay |
|---|---|
| 0 | 0 microseconds |
| 1 | 32 microseconds |
| 2 | 64 microseconds |
| 3 | 128 microseconds |
| 4 | 256 microseconds |
| 5-7 | Reserved |

The Capability Adaptation Power Save Transition Delay field indicates the minimum time delay required for the STA, operating in the capability adaptation power save operation mode, to switch from the high-capability operation mode to the low-capability operation mode during frame exchange.

In some embodiments, the Capability Adaptation Power Save Transition Delay 1 field indicates the minimum time delay required for the STA, operating in the capability adaptation power save operation mode station, to transition from the full-capability operation mode into the low-capability operation mode during frame exchange; the Capability Adaptation Power Save Transition Delay 2 field indicates the minimum time delay required for the STA, operating in the capability adaptation power save operation mode, to transition from the high-capability operation mode into the low-capability operation mode during frame exchange. In a case where the high-capability operation mode is equivalent to the full-capability operation mode, the Capability Adaptation Power Save Transition Delay 2 field is not required or present. Encoding of the Capability Adaptation Power Save Transition Delay field is listed in Table 4.

**Table 4**

| Value of Capability Adaptation Power Save Transition Delay Field | Capability Adaptation Power Save Transition Delay |
|---|---|
| 0 | 0 microseconds |
| 1 | 32 microseconds |
| 2 | 64 microseconds |
| 3 | 128 microseconds |
| 4 | 256 microseconds |
| 5-7 | Reserved |

### Low-Capability Operation Mode Parameter field:

In some embodiments, the first Capability Operation Parameter subfield carries at least one of:
a first Capability Operation Bandwidth field; a first Capability Supported Highest-Order Modulation Corresponding MCS Index field; a first Capability Receive Maximum Number Of Spatial Streams field; a first Capability Transmit Maximum Number Of Spatio-Temporal Streams field; or a first Capability Supported PPDU Format field.

The first Capability Operation Bandwidth field is configured to indicate an operation bandwidth supported for reception and/or transmission in the first capability operation mode. The first Capability Supported Highest-Order Modulation Corresponding MCS Index field is configured to indicate an MCS index corresponding to a highest-order modulation supported in the first capability operation mode. The first Capability Receive Maximum Number Of Spatial Streams field is configured to indicate the maximum number of spatial streams supported for reception in the first capability operation mode. The first Capability Transmit Maximum Number Of Spatio-Temporal Streams field is configured to indicate the maximum number of spatio-temporal streams supported for transmission in the first capability operation mode. The first Capability Supported PPDU Format field is configured to indicate one or more PPDU formats supported for reception and/or transmission in the first capability operation mode.

Exemplarily, the first Capability Operation Parameter subfield is the Low-Capability Operation Mode Parameter field; the first Capability Operation Bandwidth field is a Low-Capability Operation Bandwidth field; the first Capability Supported Highest-Order Modulation Corresponding MCS Index field is an MCS index field corresponding a highest-order modulation supported by the low capability operation; the first Capability Receive Maximum Number Of Spatial Streams field is a Low-Capability Receive Number Of Spatial Streams field; the first Capability Transmit Maximum Number Of Spatio-Temporal Streams field is a Low-Capability Transmit Number of Spatio-Temporal Streams field; and the first Capability Supported PPDU Format field is a Low-Capability Supported PPDU Format field.

For the above Low-Capability Operation Mode Parameter field, FIG. 15 is a schematic diagram of a format of the Low-Capability Operation Mode Parameter field according to some embodiments of the present disclosure. The Low-Capability Operation Mode Parameter field includes at least one of: a Low-Capability Operation Bandwidth field, a Low-Capability Supported Highest-Order Modulation Corresponding MCS Index field, a Low-Capability Receive Number Of Spatial Streams (RX NSS) field, a Low-Capability Transmit Number Of Spatio-Temporal Streams (TX NSTS) field, or a Low-Capability Supported PPDU Format field.

The Low-Capability Operation Bandwidth field occupies 4 bits from B0 to B3, the Low-Capability Supported Highest-Order Modulation Corresponding MCS Index field occupies 3 bits from B4 to B6, the Low-Capability RX NSS field occupies 4 bits from B7 to B10, the Low-Capability TX NSTS field occupies 4 bits from B11 to B14, and the Low-Capability Supported PPDU Format field occupies 3 bits from B15 to B17.

The Low-Capability Operation Bandwidth field indicates an operation bandwidth supported by the STA for reception and transmission in the low-capability operation mode. In some embodiments, the Low-Capability Operation Bandwidth field may be encoded as follows: 0 for 20 MHz; 1 for 40 MHz; 2 for 80 MHz; 3 for 160 MHz or 80+80 MHz; 4 for 320 MHz; and other encoding values are reserved.

The Low-Capability Supported Highest-Order Modulation Corresponding MCS Index field indicates an MCS index corresponding to a highest-order modulation supported by the STA in the low-capability operation mode. In some embodiments, the MCS index corresponding to this field may be encoded as follows: 0 for binary phase shift keying (BPSK), 1 for quadrature phase shift keying (QPSK), 2 for 16 quadrature amplitude modulation (16-QAM), ..., 6 for 2048-QAM, and 7 for 4096-QAM.

The Low-Capability RX NSS field indicates a maximum NSS supported for reception by the STA in the low-capability operation mode, and a value of this field may be set to (NSS-1).

The Low-Capability TX NSTS field indicates a maximum NSTS supported for transmission by the STA in the low-capability operation mode, and a value of this field may be set to (NSTS-1).

The Low-Capability Supported PPDU Format field indicates one or more PPDU formats supported for reception and/or transmission by the STA in the low-capability operation mode, as listed in Table 5. By default, in a case where processing capability requirements of a PPDU format is less than or equal to the supported PPDU format indicated by the STA, the STA also supports receiving and/or transmitting that PPDU format.

**Table 5**

| Encoding Value of Supported PPDU Format Subfield | Definition of Supported PPDU Format Subfield |
|---|---|
| 0 | Non-HT PPDU or non-HT duplicate PPDU |
| 1 | HT PPDU |
| 2 | HE PPDU |
| 3 | Extremely High Throughput (EHT) PPDU |
| 4 | Ultra High Reliability (UHR) PPDU |
| Others | Reserved |

### High-Capability Operation Mode Parameter field:

In some embodiments, the second Capability Operation Parameter subfield carries at least one of:
a second Capability Operation Bandwidth field; a second Capability Supported Highest-Order Modulation Corresponding MCS Index field; a second Capability Receive Maximum Number Of Spatial Streams field; a second Capability Transmit Maximum Number Of Spatio-Temporal Streams field; or a second Capability Supported PPDU Format field.

The second Capability Operation Bandwidth field, is configured to indicate an operation bandwidth supported for reception and/or transmission in the second capability operation mode. The second Capability Supported Highest-Order Modulation Corresponding MCS Index field, is configured to indicate an MCS index corresponding to a highest-order modulation supported in the second capability operation mode. The second Capability Receive Maximum Number Of Spatial Streams field, is configured to indicate the maximum number of spatial streams supported for reception in the second capability operation mode. The second Capability Transmit Maximum Number Of Spatio-Temporal Streams field, is configured to indicate the maximum number of spatio-temporal streams supported for transmission in the second capability operation mode. The second Capability Supported PPDU Format field is configured to indicate one or more PPDU formats supported for reception and/or transmission in the second capability operation mode.

Exemplarily, the second Capability Operation Parameter subfield is the High-Capability Operation Mode Parameter field; the second Capability Operation Bandwidth field is a High-Capability Operation Bandwidth field; the second Capability Supported Highest-Order Modulation Corresponding MCS Index field is an MCS index field corresponding a highest-order modulation supported by the high-capability operation; the second Capability Receive Maximum Number Of Spatial Streams field is a High-Capability Receive Number Of Spatial Streams field; the second Capability Transmit Maximum Number Of Spatio-Temporal Streams field is a High-Capability Transmit Number of Spatio-Temporal Streams field; and the second Capability Supported PPDU Format field is a High-Capability Supported PPDU Format field.

For the above High-Capability Operation Mode Parameter field, FIG. 16 is a schematic diagram of a format of the High-Capability Operation Mode Parameter field according to some embodiments of the present disclosure. The High-Capability Operation Mode Parameter field includes at least one of: a High-Capability Operation Bandwidth field, a High-Capability Supported Highest-Order Modulation Corresponding MCS Index field, a High-Capability RX NSS field, a High-Capability TX NSTS field, or a High-Capability Supported PPDU Format field.

The High-Capability Operation Bandwidth field occupies 4 bits from B0 to B3, the High-Capability Supported Highest-Order Modulation Corresponding MCS Index field occupies 3 bits from B4 to B6, the High-Capability RX NSS field occupies 4 bits from B7 to B10, the High-Capability TX NSTS field occupies 4 bits from B11 to B14, and the High-Capability Supported PPDU Format field occupies 3 bits from B15 to B17.

The High-Capability Operation Bandwidth field indicates an operation bandwidth supported by the STA for reception and transmission in the high-capability operation mode. In some embodiments, the High-Capability Operation Bandwidth field may be encoded as follows: 0 for 20 MHZ; 1 for 40 MHz; 2 for 80 MHz; 3 for 160 MHz or 80+80 MHz; 4 for 320 MHz; and other encoding values are reserved.

The High-Capability Supported Highest-Order Modulation Corresponding MCS Index field indicates an MCS index corresponding to a highest-order modulation supported by the STA in the high-capability operation mode. In some embodiments, the MCS index corresponding to this field may be encoded as follows: 0 for BPSK, 1 for QPSK, 2 for 16-QAM, ..., 6 for 2048-QAM, and 7 for 4096-QAM.

The High-Capability RX NSS field indicates a maximum NSS supported for reception by the STA in the high-capability operation mode, and a value of this field may be set to (NSS-1).

The High-Capability TX NSTS field indicates a maximum NSTS supported for transmission by the STA in the high-capability operation mode, and a value of this field may be set to (NSTS-1).

The High-Capability Supported PPDU Format field indicates one or more PPDU formats supported for reception and/or transmission by the STA in the high-capability operation mode, as listed in Table 5. By default, in a case where processing capability requirements of a PPDU format is less than or equal to the supported PPDU format indicated by the STA, the STA also supports receiving and/or transmitting that PPDU format.

The above formats of the STA Power Management Mode Indication Information field, the Capability Adaptation Power Save Delay Parameter field, the Low-Capability Operation Mode Parameter field, and the High-Capability Operation Mode Parameter field are exemplary possibilities. In different embodiments or different designs, the present disclosure does not exclude and limit situations in which at least one of designs of the above fields (such as a position of the field in the frame, an arrangement order of the field relative to other fields, the number of octets occupied by the field, the number of bits occupied by the field, a name of an element, and a name of the field) is changed.

**A Multi-Link Power Management Mode Indication Notification frame and related fields are described hereinafter.**

The Multi-Link Power Management Mode Indication Notification frame is configured to indicate a power management mode for a related affiliated STA of an MLD that transmits this notification frame, and indicate one or more operation parameters to be adopted by the corresponding power management mode. Alternatively, the Multi-Link Power Management Mode Indication Notification frame is used by an AP MLD as a response to another Multi-Link Power Management Mode Indication Notification frame received from a non-AP MLD.

Information contained in action fields of the Multi-Link Power Management Mode Indication Notification frame is listed in Table 6.

**Table 6**

| Order | Information |
|---|---|
| 1 | Category |
| 2 | Protected UHR Action |
| 3 | Dialog Token |
| 4 | Multi-Link Power Management Mode Indication Element |

The Category field is defined according to relevant contents in the IEEE 802.11 standard.

The Protected UHR Action field contains 1 octet, which follows the Category field and is configured to distinguish or identity the UHR action frame format.

The Dialog Token field is set by an MLD performing the multi-link power management mode indication to a non-zero value selected by the MLD, and is set by a peer STA (such as an AP MLD associated with the MLD) to a value copied from a received corresponding Multi-Link Power Management Mode Indication Notification frame.

The Multi-Link Power Management Mode Indication element is configured to indicate the power management mode (such as an active mode, a power save mode, or a dynamic capability adaptation power save mode) for the related affiliated STA of the MLD and the one or more operation parameters to be adopted by the corresponding power management mode. For definitions of the Multi-Link Power Management Mode Indication element, reference may be made to the above description, which are not elaborated herein.

Based on the above embodiments in FIG. 3 or FIG. 6, in a case where the first frame carries multi-link power management mode indication information, formats of control subfields related to the multi-link power management mode indication associated with the first frame are described hereinafter.

### Variants of the control subfields related to the multi-link power management mode indication:

In an MAC frame format defined by related protocols, an HT Control field may be carried in a QoS data frame, a QoS null frame, a management frame, and a Control Wrapper frame. The HT Control field includes 32 bits in total. In a case where both bits B0 and B1 in the HT Control field are set to 1, the HT Control field is indicated as an HE variant HT Control field, and bits B2 to B31 are occupied by an Aggregation-Control (abbreviated as A-Control) subfield. The A-Control subfield includes a Control List subfield and a Padding subfield, and the Control List subfield includes one or more Control subfields. Each Control subfield includes a 4-bit Control ID subfield and a Control Information subfield with a variable length, wherein the Control ID subfield indicates a type of information carried in the Control Information subfield.

In some embodiments, the first frame carries a control field, wherein the control field includes at least one of:
a fourth control field, configured to indicate the first power management mode for an affiliated STA corresponding to each link in a plurality of links, wherein the first power management mode includes an active mode or a power save mode; a fifth control field, configured to indicate whether an affiliated STA corresponding to each link in a plurality of links is to enable a dynamic capability adaptation power save mode; or, a sixth control field, configured to indicate the first power management mode for an affiliated STA corresponding to a link with a link ID i, wherein the first power management mode is an active mode, a power save mode, or a dynamic capability adaptation power save mode.

Exemplarily, the fourth control field is a Multi-Link Power Management Mode Control subfield, the fifth control field is a Multi-Link Dynamic Power Save Mode Enabling Control subfield, and the sixth control field is a Cross-link Power Management Mode Control subfield.

In some embodiments, at least one of the fourth control field, the fifth control field, and the sixth control field includes a Required Activation Duration subfield. Alternatively, none of the fourth control field, the fifth control field, and the sixth control field includes the Required Activation Duration subfield. Herein, the Required Activation Duration subfield is configured to indicate a duration required for the first power management mode to be activated.

To facilitate the multi-link power management mode indication operation, the Multi-Link Power Management Mode Control subfield, the Multi-Link Dynamic Power Save Mode Enabling Control subfield, and the Cross-Link Power Management Mode Control subfield are defined, as listed in Table 7.

**Table 7**

| Control ID Value | Control Subfield Variant | Meaning and Application |
|---|---|---|
| Preset value (e.g., 7) | Multi-Link Power Management Mode Control | Configured for an MLD to indicate a power management mode (including an active mode and a power save mode) for an affiliated STA corresponding to one or more established (or enabled) links of the MLD |
| Preset value (e.g., 8) | Multi-Link Dynamic Power Save Mode Enabling Control | Configured for an MLD to indicate whether an affiliated STA corresponding to one or more established (or enabled) links is to enable a dynamic power save mode |
| Preset value (e.g., 8) | Cross-Link Power management Mode Control | Configured for an MLD to indicate a power management mode |
| | | (including an active mode, a power save mode, and an enable/disable dynamic power save mode) for an affiliated STA corresponding to one established (or enabled) link of the MLD |

### Multi-Link Power Management Mode Control subfield:

The Multi-Link Power Management Mode Control subfield is configured for an MLD to indicate a power management mode (including an active mode and a power save mode) for an affiliated STA corresponding to one or more established (or enabled) links of the MLD. A Control Information subfield of the Multi-Link Power Management Mode Control subfield includes information on the power management mode for the affiliated STA corresponding to the one or more established (or enabled) links of the MLD.

In some embodiments, the fourth control field includes a fourth bitmap field, wherein a bit position *i* in the fourth bitmap field corresponds to a link with a link ID *i*, and is configured to indicate that the first power management mode for the affiliated STA corresponding to the link with the link ID *i* is the active mode or the power save mode, wherein *i* is an integer.

FIG. 17 is a schematic diagram of a format of the Multi-Link Power Management Mode Control subfield according to some embodiments of the present disclosure. The Multi-Link Power Management Mode Control subfield includes at least one of: a Multi-Link Power Management Mode Indication Bitmap field, a Required Activation Duration field, and a Reserved field.

The Multi-Link Power Management Mode Indication Bitmap field occupies 16 bits, the Required Activation Duration field occupies 12 bits, and the Reserved field occupies 4 bits.

The Multi-Link Power Management Mode Indication Bitmap subfield indicates the power management mode for the affiliated STAs corresponding to the established (or enabled) links of the MLD. That is, the Multi-Link Power Management Mode Indication Bitmap subfield indicates which STAs in the affiliated STAs corresponding to the established (or enabled) links of the MLD is to be in the active mode or the power save mode.

In some embodiments, a bit position *i* in the Multi-Link Power Management Mode Indication Bitmap subfield corresponds to a link with a link ID subfield being *i*. The *i*^{th} bit is set to 1, indicating that an affiliated STA, corresponding to the link with the link ID field being *i*, may enter or transition into the power save mode. That is, the affiliated STA may be in a doze state or an awake state. The *i*^{th} bit is set to 0, indicating that the affiliated STA, corresponding to the link with the link ID field being *i*, may enter or transition into the active mode. That is, the affiliated STA may be in an awake state of a fully powered power save mode or an awake state of a dynamic power save mode. The link with the link ID subfield being *i* is an established link or an enabled link of the MLD.

The Required Activation Duration field indicates an expected duration required for the indicated multi-link power management mode to be activated or to take effect. The Required Activation Duration field is measured in TUs, wherein 1 TU is a time measurement unit equal to 1024 microseconds. The duration starts from an end of a second PPDU. Alternatively, in a case where a signal extension is present, the duration starts from an end of the second PPDU plus the signal extension following the second PPDU and ends after the duration indicated by the Required Activation Duration field. The second PPDU is transmitted by a second MLD that receives the first frame and carries an acknowledgment (ACK) in response to the first frame.

As illustrated in FIG. 5, in a case where the first frame carries the Required Activation Duration field, a second frame is a second PPDU, wherein the second PPDU carries an acknowledgment in response to the first frame. In a case where the signal extension is absent, the duration starts from an end of the second PPDU.

In some embodiments, the Multi-Link Power Management Mode Control subfield, the Multi-Link Dynamic Power Save Mode Enabling Control subfield, and the Cross-Link Power Management Mode Control subfield share a Required Activation Duration field.

In some embodiments, each of the Multi-Link Power Management Mode Control subfield, the Multi-Link Dynamic Power Save Mode Enabling Control subfield, and the Cross-Link Power Management Mode Control subfield carries a Required Activation Duration field.

In the case where each of the three subfields carries the Required Activation Duration field, the Required Activation Duration fields for the affiliated STAs on different links may be different or the same.

### Multi-Link Dynamic Power Save Mode Enabling Control subfield:

The Multi-Link Dynamic Power Save Mode Enabling Control subfield is configured for the MLD to indicate whether the affiliated STAs corresponding to one or more established (or enabled) links are to enable a dynamic power save mode. In some embodiments, a Control Information subfield of the Multi-Link Dynamic Power Save Mode Enabling Control subfield is configured to indicate whether the affiliated STAs corresponding to one or more established (or enabled) links of the MLD are to enable the dynamic power save mode.

In some embodiments, the fifth control field includes a fifth bitmap field, wherein a bit position *i* in the fifth bitmap field corresponds to a link with a link ID *i*, and is configured to indicate whether the first power management mode for an affiliated STA corresponding to the link with the link ID *i* enables a dynamic capability adaptation power save mode, wherein, *i* is an integer.

FIG. 18 is a schematic diagram of a format of the Multi-Link Dynamic Power Save Mode Enabling Control subfield according to some embodiments of the present disclosure. The Multi-Link Dynamic Power Save Mode Enabling Control subfield includes at least one of: a Multi-Link Dynamic Power Save Mode Indication Bitmap field, a Required Activation Duration field, or a Reserved field.

The Multi-Link Dynamic Power Save Mode Indication Bitmap field occupies 16 bits, the Required Activation Duration field occupies 12 bits, and the Reserved field occupies 4 bits.

For definitions of the Multi-Link Dynamic Power Save Mode Indication Bitmap subfield, reference may be made to the description of the embodiment illustrated in FIG. 8, which are not elaborated herein.

The Required Activation Duration field is referenced in the Multi-Link Power Management Mode Control subfield for a specific description and is not repeated herein.

### Cross-Link Power Management Mode Control subfield:

The Cross-Link Power Management Mode Control subfield is configured for an MLD to indicate a power management mode for an affiliated STA corresponding to an established (or enabled) link of the MLD, i.e., to indicate an active mode, a power save mode, or whether to enable dynamic power save mode, wherein the established (or enabled) link is different from the first link.

A Control Information subfield of the Cross-Link Power Management Mode Control subfield includes information on the power management mode for the affiliated STA corresponding to the established (or enabled) link of the MLD, specifically including information on whether the STA is to be in the active mode or the power save mode, and on whether to enable the dynamic power save mode.

In some embodiments, the sixth control field includes at least one of: a Link ID subfield, a Power Management Mode subfield, or a Capability Adaptation Power Save Control subfield. The Link ID subfield is configured to indicate a link ID. The Power Management Mode subfield is configured to indicate that the first power management mode for the affiliated STA corresponding to the link with the link ID *i* is the active mode or the power save mode. The Capability Adaptation Power Save Control subfield is configured to indicate that the first power management mode of the affiliated STA corresponding to the link with the link ID *i* is a non-dynamic capability adaptation power save mode or the dynamic capability adaptation power save mode.

In some embodiments, the sixth control field also carries at least one of:
a first Capability Operation Parameter Information subfield, or a second Capability Operation Parameter Information subfield; wherein, capabilities corresponding to the first Capability Operation Parameter Information subfield are lower than capabilities corresponding to the second Capability Operation Parameter Information subfield.

Exemplarily, the first Capability Operation Parameter Information subfield is a Low-Capability Operation Parameter Information field, and the second Capability Operation Parameter Information subfield is a High-Capability Operation Parameter Information field.

In some embodiments, a format adopted by the first Capability Operation Parameter Information subfield includes: a Mode Index Subfield or a first Capability Operation Parameter subfield, wherein the first Capability Operation Parameter subfield is configured to indicate one or more operation parameters in the first capability operation mode. A format adopted by the second Capability Operation Parameter Information subfield includes: a Mode Index subfield or a second Capability Operation Parameter subfield, wherein the second Capability Operation Parameter subfield is configured to indicate one or more operation parameters in the second capability operation mode. Capabilities corresponding to the first capability operation mode are lower than capabilities corresponding to the second capability operation mode. A mode index value of the Mode Index subfield is configured to indicate one or more operation parameters corresponding to a Capability Adaptation Power Save Operation Mode Parameter Control subfield carrying the mode index value.

Exemplarily, the first Capability Operation Parameter subfield is a Low-Capability operation Mode Parameter subfield, and the second Capability Operation Parameter subfield is a High-Capability Operation Mode Parameter subfield.

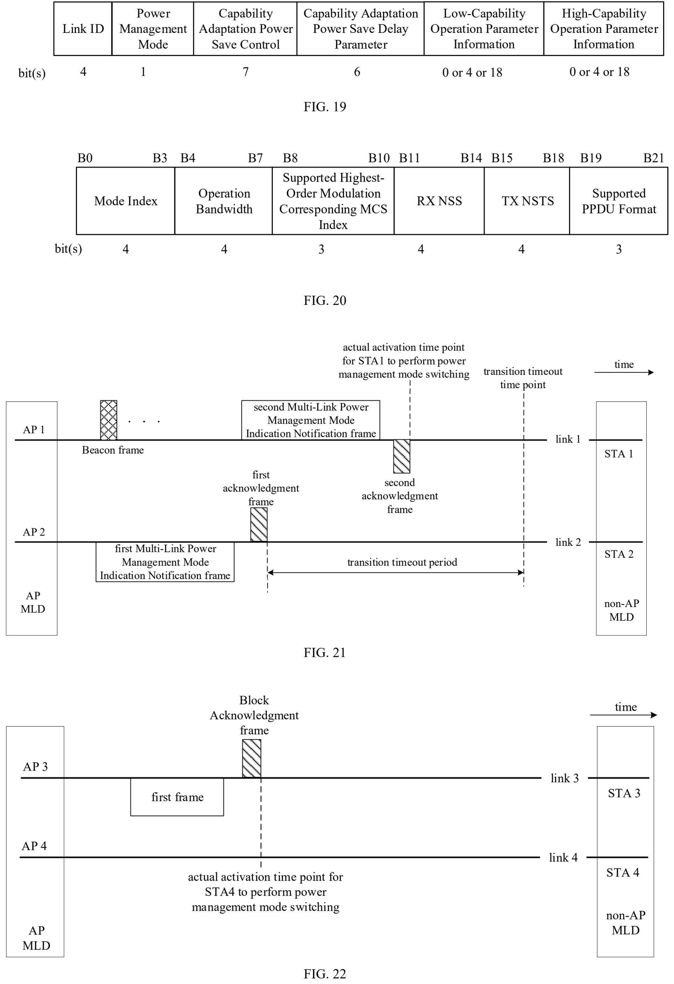

FIG. 19 is a schematic diagram of a format of the Cross-Link Power Management Mode Control subfield according to some embodiments of the present disclosure. The Cross-Link Power Management Mode Control subfield includes at least one of: a Link ID field, a Power Management Mode field, a Capability Adaptation Power Save Control field, a Capability Adaptation Power Save Delay Parameter field, a Low-Capability Operation Parameter Information field, or a High-Capability Operation Parameter Information field.

As illustrated in FIG. 19, the Link ID field occupies 4 bits, the Power Management Mode field occupies 1 bit, the Capability Adaptation Power Save Control field occupies 7 bits, the Capability Adaptation Power Save Delay Parameter field occupies 6 bits, the Low-Capability Operation Parameter Information field occupies 0, 4, or 18 bits, and the High-Capability Operation Parameter Information field occupies 0, 4, or 18 bits.

The Link ID subfield indicates an identifier of a link, i.e., a link ID, where the STA corresponding to the established (or enabled) link of the MLD described by the Cross-Link Power Management Mode Control subfield is located.

In some embodiments, a value of the link ID is an integer ranging from 0 to 14, configured to uniquely identify an affiliated STA of an AP MLD corresponding to the link.

The Power Management Mode subfield indicates whether the affiliated STA indicated by the link ID subfield is to be in the active mode or the power save mode. The bit occupied by the Power Management Mode subfield is set to 1, indicating that the STA indicated by the Link ID subfield is to be in a power save mode, that is, in a doze state or an awake state. The bit occupied by the Power Management Mode subfield is set to 0, indicating that the STA indicated by the Link ID subfield is to be in an active mode, that is, in an awake state of a fully powered power save mode or an awake state of a dynamic power save mode.

For definitions of the Capability Adaptation Power Save Control subfield, reference may be made to the description of the embodiment illustrated in FIG. 12, which are not elaborated herein.

For definitions of the Capability Adaptation Power Save Delay Parameter subfield, reference may be made to the description of the embodiment illustrated in FIG. 14, which are not elaborated herein.

The Low-Capability Operation Parameter Information field adopts one of the following two formats:
1) A Mode Index subfield, wherein a value of the Mode Index subfield is configured to indicate corresponding operation parameters defined by the Capability Adaptation Power Save Operation Mode Parameter Control subfield carrying the value. The Capability Adaptation Power Save Operation Mode Parameter Control subfield is configured to define the operation parameters corresponding to a specified low-capability operation that the STA may adopt upon enabling (or entering into) the capability adaptation power save operation mode, and a corresponding operation mode of the low-capability operation may be identified by a mode index.
2) A Low-Capability Operation Mode Parameter subfield, which is referenced in the description of the embodiment in FIG. 15 and is not repeated herein.

The High-Capability Operation Parameter Information field adopts one of the following two formats:
1) A Mode Index subfield, wherein a value of the Mode Index subfield is configured to indicate corresponding operation parameters defined by the Capability Adaptation Power Save Operation Mode Parameter Control subfield carrying the value. The Capability Adaptation Power Save Operation Mode Parameter Control subfield is configured to define the operation parameters corresponding to a specified high-capability operation that the STA may adopt upon enabling (or entering into) the capability adaptation power save operation mode, and a corresponding operation mode of the high-capability operation may be identified by a mode index.
2) A High-Capability Operation Mode Parameter subfield, which refers to the description of the embodiment in FIG. 16 and is not repeated herein.

### Capability Adaptation Power Save Operation Mode Parameter Control subfield:

The Capability Adaptation Power Save Operation Mode Parameter Control subfield is configured to define operation parameters corresponding to a specified low-capability operation or high-capability operation that the STA may adopt upon enabling (or entering into) a capability adaptation power save operation mode, and an operation mode corresponding to the low-capability operation or high-capability operation may be identified by a mode index. A format of the Capability Adaptation Power Save Operation Mode Parameter Control subfield is illustrated in FIG. 20. FIG. 20 is a schematic diagram of the format of the Capability Adaptation Power Save Operation Mode Parameter Control subfield according to some embodiments of the present disclosure, wherein the Capability Adaptation Power Save Operation Mode Parameter Control subfield includes at least one of: a Mode Index field, an Operation Bandwidth field, a Supported Highest-Order Modulation Corresponding MCS Index field, an RX NSS field, a TX NSTS field, or a Supported PPDU Format field.

The Mode Index field occupies 4 bits from B0 to B3, the Operation Bandwidth field occupies 4 bits from B4 to B7, the Supported Highest-Order Modulation Corresponding MCS Index field occupies 3 bits from B8 to B10, the RX NSS field occupies 4 bits from B11 to B14, the TX NSTS field occupies 4 bits from B15 to B18, and the Supported PPDU Format field occupies 3 bits from B19 to B21.

The Mode Index subfield indicates an identifier corresponding to an operation mode for capability adaptation power save operation defined by the Capability Adaptation Power Save Operation Mode Parameter subfield where the Mode Index subfield is located.

For definitions of other subfields, reference may be made to the description of the embodiment illustrated in FIG. 15 or FIG. 16, which are not elaborated herein.

The above formats of the Multi-Link Power Management Mode Indication Notification frame and related fields, the variants of subfields related to the multi-link power management mode indication, the Multi-Link Power Management Mode Control subfield, the Multi-Link Dynamic Power Save Mode Enabling Control subfield, the Cross-Link Power Management Mode Control subfield, and the Capability Adaptation Power Save Operation Mode Parameter Control subfield are exemplary possibilities. In different embodiments or different designs, the present disclosure does not exclude and limit situations in which at least one of designs of the above field (such as a position of the field in the frame, an arrangement order of the field relative to other fields, the number of octets occupied by the field, the number of bits occupied by the field, a name of an element, and a name of the field) is changed.

### Actual activation time point at which an affiliated STA corresponding to a first MLD on a second link enters a first power management mode:

In the above embodiments, a peer device associated with the first MLD is a second MLD. The actual activation time point at which the affiliated STA corresponding to the first MLD on the second link enters the first power management mode is determined based on one of:

a first time point (i.e., an end of a second PPDU), wherein the second PPDU carries an acknowledgment for the first frame or for a second frame, the second frame is transmitted by the second MLD on the second link or the first link, and is configured to respond to the first frame; a second time point (i.e., a transition timeout time point or an expected activation time point of the first power management mode), wherein the expected activation time point is a time point at which the affiliated STA corresponding to the first MLD on the second link is expected to enter the first power management mode; or a third time point at which the affiliated STA corresponding to the first MLD on the second link completes frame exchange.

In some embodiments, the actual activation time point at which the affiliated STA corresponding to the first MLD on the first link enters the first power management mode is determined based on one of:
a first time point (i.e., an end of a second PPDU), wherein the second PPDU carries an acknowledgment for the first frame or for a second frame, the second frame is transmitted by the second MLD on the first link, and is configured to respond to the first frame; a second time point (i.e., a transition timeout time point or an expected activation time point of the first power management mode), wherein the expected activation time point is a time point at which the affiliated STA corresponding to the first link of the first MLD is expected to enter the first power management mode; or a third time point at which the affiliated STA corresponding to the first link of the first MLD completes frame exchange.

The expected activation time point is a time point at which an affiliated STA corresponding to at least one link of a plurality of links is expected to enter the first power management mode, and the at least one link includes the first link and/or the second link.

The first power management mode is applicable to a specific link, and this link is any one of one or more links. The first power management mode corresponding to each link may be the same or different. The actual activation time point corresponding to each link may be the same or different. While the present disclosure mainly uses, as an example for description, the first power management mode for the affiliated STA corresponding to the second link, the present disclosure is also applicable to the first power management mode for the affiliated STA corresponding to the first link, which is not limited in the embodiments of the present disclosure.

### First time point:

In some embodiments, the actual activation time point is the first time point.

In some embodiments, in a case where the second PPDU carries an acknowledgment for the second frame, as illustrated in FIG. 21, the second MLD is an AP MLD, the second link is link1, the first frame is a first Multi-Link Power Management Mode Indication Notification frame, the second frame is the second first Multi-Link Power Management Mode Indication Notification frame, and the second PPDU acts as a second acknowledgment frame.

The second Multi-Link Power Management Mode Indication Notification frame is transmitted by an affiliated AP (i.e., AP1) of the AP MLD on link1. An affiliated STA corresponding to the first MLD on the second link is STA1. The actual activation time point at which STA1 enters the first power management mode is an end of the second acknowledgment frame.

In some embodiments, in a case where the second PPDU carries an acknowledgment for the first frame, as illustrated in FIG. 22, the second PPDU is a Block Acknowledgment frame, the second link is link4, an affiliated STA corresponding to the first MLD on the second link is STA4, and the actual activation time point at which STA4 enters the first power management mode is an end of the Block Acknowledgment frame.

In some embodiments, the first time point is an end of the second PPDU, or an end of a signal extension following the second PPDU.

In some embodiments, the first frame and/or the second frame are also configured to indicate an expected activation time point, wherein the expected activation time point is a time point at which an affiliated STA corresponding to the first MLD on at least one of the second link or the first link is expected to enter the first power management mode.

Exemplarily, in FIG. 21, the second Multi-Link Power Management Mode Indication Notification frame serves as the second frame, and is configured to indicate the expected activation time point of the first power management mode, and the expected activation time point is an end of the second acknowledgment frame; while in FIG. 22, the first frame is configured to indicate the expected activation time point of the first power management mode, and the expected activation time point is an end of the Block Acknowledgment frame.

In some embodiments, the first frame and/or the second frame are also configured to indicate an expected activation time point, wherein the expected activation time point is a time point at which an affiliated STA corresponding to the first MLD on the first link is expected to enter the first power management mode.

In some embodiments, the second frame carries at least one of: a first indication time subfield, configured to indicate an expected activation time point of the first power management mode, wherein the expected activation time point is a time point at which the affiliated STA corresponding to the first MLD on the second link is expected to enter the first power management mode; or a first duration subfield, configured to indicate a duration required for the first power management mode to remain activated as expected, wherein the duration starts from an end of the second PPDU or from an end of a signal extension following the second PPDU. For specific implementation details, reference may be made to the embodiment illustrated in FIG. 8, which are not elaborated herein.

In some embodiments, the second frame carries at least one of: a first indication time subfield, configured to indicate an expected activation time point of the first power management mode, wherein the expected activation time point is a time point at which the affiliated STA corresponding to the first MLD on the first link is expected to enter the first power management mode; or a first duration subfield, configured to indicate a duration required for the first power management mode to remain activated as expected, wherein the duration starts from an end of the second PPDU or from an end of a signal extension following the second PPDU.

In some embodiments, a second STA enters the first power management mode at a time point corresponding to a first determination delay following the first time point, in a case where the second STA is not a transmission opportunity (TXOP) holder or a TXOP responder; wherein the second STA is one of a plurality of affiliated STAs of the first MLD, and the second STA is associated with the second link, and the first determination delay is caused by the second STA determining whether the second STA is the TXOP holder or the TXOP responder.

In some embodiments, a first STA enters the first power management mode at a time point corresponding to a first determination delay following the first time point, in a case where the first STA is not a TXOP holder or a TXOP responder; wherein the first STA is one of a plurality of affiliated STAs of the first MLD, and the first STA is associated with the first link, and the first determination delay is caused by the first STA determining whether the first STA is the TXOP holder or the TXOP responder.

In some embodiments, the actual activation time point for the second STA to enter the first power management mode is a time point corresponding to the first determination delay following the first time point, in a case where the second STA is not a TXOP holder or a TXOP responder; wherein the second STA is one of a plurality of affiliated STAs of the first MLD, and the second STA is associated with the second link, and the first determination delay is caused by the second STA determining whether the second STA is the TXOP holder or the TXOP responder.

In some embodiments, the actual activation time point for the first STA to enter the first power management mode is a time point corresponding to the first determination delay following the first time point, in a case where the first STA is not a TXOP holder or a TXOP responder; wherein the first STA is one of a plurality of affiliated STAs of the first MLD, and the first STA is associated with the second link, and the first determination delay is caused by the first STA determining whether the first STA is the TXOP holder or the TXOP responder.

In a case where the actual activation time point is the first time point, the STA may enter the first power management mode upon reception of an acknowledgment, without waiting for an excessively long period of time.

### Second time point:

In some embodiments, at the second time point, a second STA enters the first power management mode, wherein the second STA is one of a plurality of affiliated STAs of the first MLD, and the second STA is associated with the second link.

In some embodiments, at the second time point, a first STA enters the first power management mode, wherein the first STA is one of a plurality of affiliated STAs of the first MLD, and the first STA is associated with the first link.

In some embodiments, the actual activation time point at which the second STA enters the first power management mode is the second time point, wherein the second STA is one of a plurality of affiliated STAs of the first MLD, and the second STA is associated with the second link.

In some embodiments, the actual activation time point at which the first STA enters the first power management mode is the second time point, wherein the first STA is one of a plurality of affiliated STAs of the first MLD, and the first STA is associated with the first link.

In some embodiments, the first MLD receives a third frame from the second MLD prior to the transmission of the first frame by the first MLD, wherein the third frame is configured to indicate a transition timeout time point.

In some embodiments, prior to the transmission of the first frame by the first MLD, the second MLD transmits a third frame, which is configured to indicate a transition timeout time point.

In some embodiments, the transition timeout time point is indicated by a transition timeout period after a first moment, wherein the first moment is an end of the first PPDU or an end of a signal extension following the first PPDU, and the first PPDU carries an acknowledgment for the first frame.

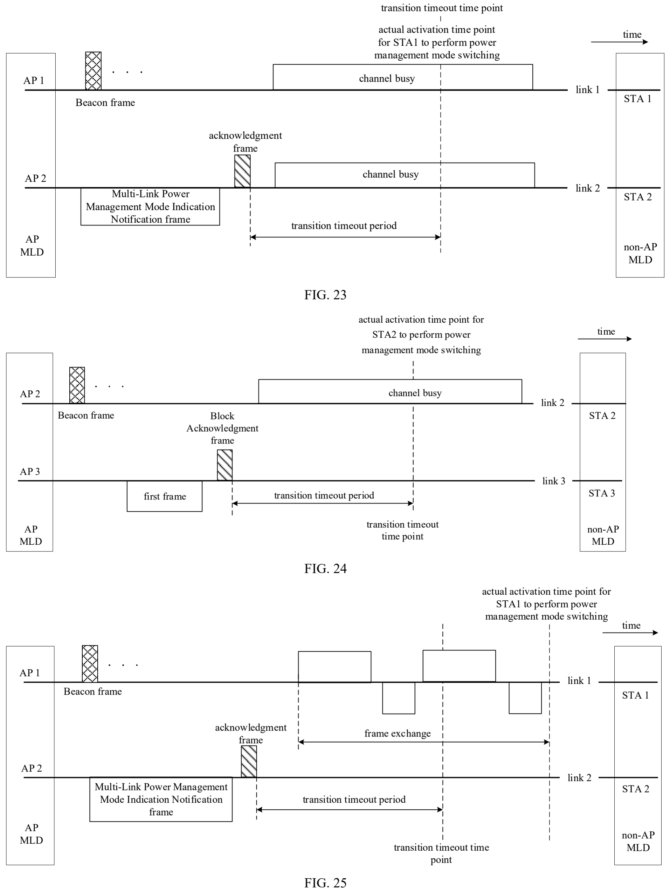

As illustrated in FIG. 23, the first MLD is a non-AP MLD, the second MLD is an AP MLD, the second STA is STA1, the first frame is a Multi-Link Power Management Mode Indication Notification frame, the third frame is a Beacon frame, and the first PPDU is an acknowledgment frame. In a case where the first moment is an end of the first PPDU, the transition timeout time point is indicated by the transition timeout period after the end of the first PPDU.

The transition timeout time point is an actual time point at which the power management mode transition of STA1 becomes active or takes effect. At the transition timeout time point, STA1 enters the first power management mode.

As illustrated in FIG. 24, the first MLD is a non-AP MLD, the second MLD is an AP MLD, the second STA is STA2, the third frame is a Beacon frame, and the first PPDU is a Block Acknowledgment frame. In a case where the first moment is an end of the first PPDU, the transition timeout time point is indicated by the transition timeout period after the end of the first PPDU.

The transition timeout time point is an actual time point at which the power management mode transition of STA2 becomes active or takes effect. At the transition timeout time point, STA2 enters the first power management mode.

In some embodiments, in a case where the second STA neither initiates nor engages in frame exchange at the expected activation time point, the second STA enters the first power management mode at the second time point. The expected activation time point is a time point at which the affiliated STA, corresponding to the first MLD on the second link, is expected to enter the first power management mode.

In some embodiments, in a case where the first STA neither initiates nor engages in frame exchange at the expected activation time point, the first STA enters the first power management mode at the second time point. The expected activation time point is a time point at which the affiliated STA, corresponding to the first MLD on the first link, is expected to enter the first power management mode.

In some embodiments, in the case where the second STA neither initiates nor engages in frame exchange at the expected activation time point, the actual activation time point at which the second STA enters the first power management mode is the second time point. The expected activation time point is a time point at which the affiliated STA, corresponding to the first MLD on the second link, is expected to enter the first power management mode.

In some embodiments, in the case where the first STA neither initiates nor engages in frame exchange at the expected activation time point, the actual activation time point at which the first STA enters the first power management mode is the second time point. The expected activation time point is a time point at which the affiliated STA, corresponding to the first MLD on the first link, is expected to enter the first power management mode.

In some embodiments, in the case where the second STA neither initiates nor engages in frame exchange at the expected activation time point, the second STA enters the first power management mode at a time point corresponding to a second determination delay after the second time point. The second determination delay is caused by the first MLD determining whether the frame exchange is initiated with the second MLD.

In some embodiments, in the case where the first STA neither initiates nor engages in frame exchange at the expected activation time point, the first STA enters the first power management mode at a time point corresponding to a second determination delay after the second time point. The second determination delay is caused by the first MLD determining whether the frame exchange is initiated with the second MLD.

In some embodiments, in the case where the second STA neither initiates nor engages in frame exchange at the expected activation time point, the actual activation time point at which the second STA enters the first power management mode is a time point corresponding to the second determination delay after the second time point. The second determination delay is caused by the first MLD determining whether the frame exchange is initiated with the second MLD.

In some embodiments, in the case where the first STA neither initiates nor engages in frame exchange at the expected activation time point, the actual activation time point at which the first STA enters the first power management mode is a time point corresponding to the second determination delay after the second time point. The second determination delay is caused by the first MLD determining whether the frame exchange is initiated with the second MLD.

In some embodiments, in the case where the second STA neither initiates nor engages in frame exchange at the expected activation time point, the second STA may no longer initiate frame exchange during a currently acquired TXOP.

In some embodiments, the frame exchange is not initiated in a case where the second STA determines that a received PPDU is not transmitted to the second STA itself.

In a case where the actual activation time point is the second time point, the STA enters the first power management mode after the transition timeout period, without waiting for the channel to exit a busy state, thereby reducing wait time.

### Third time point:

In some embodiments, in a case where the second STA initiates or engages in frame exchange at the expected activation time point, and/or where the second STA is a TXOP holder, the second STA enters the first power management mode at a third time point. The second STA is one of a plurality of affiliated STAs of the first MLD, and the second STA is associated with the second link. The expected activation time point is a time point at which the affiliated STA, corresponding to the first MLD on the second link, is expected to enter the first power management mode.

In some embodiments, in a case where the first STA initiates or engages in frame exchange at the expected activation time point, and/or where the first STA is a TXOP holder, the first STA enters the first power management mode at a third time point. The first STA is one of a plurality of affiliated STAs of the first MLD, and the first STA is associated with the first link. The expected activation time point is a time point at which the affiliated STA, corresponding to the first MLD on the first link, is expected to enter the first power management mode.

In some embodiments, in the case where the second STA initiates or engages in frame exchange at the expected activation time point, and/or where the second STA is a TXOP holder, the actual activation time point at which the second STA enters the first power management mode is the third time point. The second STA is one of a plurality of affiliated STAs of the first MLD, and the second STA is associated with the second link. The expected activation time point is a time point at which the affiliated STA, corresponding to the first MLD on the second link, is expected to enter the first power management mode.

In some embodiments, in the case where the first STA initiates or engages in frame exchange at the expected activation time point, and/or where the first STA is a TXOP holder, the actual activation time point at which the first STA enters the first power management mode is the third time point. The first STA is one of a plurality of affiliated STAs of the first MLD, and the first STA is associated with the first link. The expected activation time point is a time point at which the affiliated STA, corresponding to the first MLD on the first link, is expected to enter the first power management mode.

As illustrated in FIG. 25, the first MLD is a non-AP MLD, the second MLD is an AP MLD, the second STA is STA1, the expected activation time point is the transition timeout time point, and the third time point is the time point at which the second STA completes frame exchange. Since the first MLD and the second MLD do not complete frame exchange at the transition timeout time point, STA1 enters the first power management mode at the time point when frame exchange is completed.

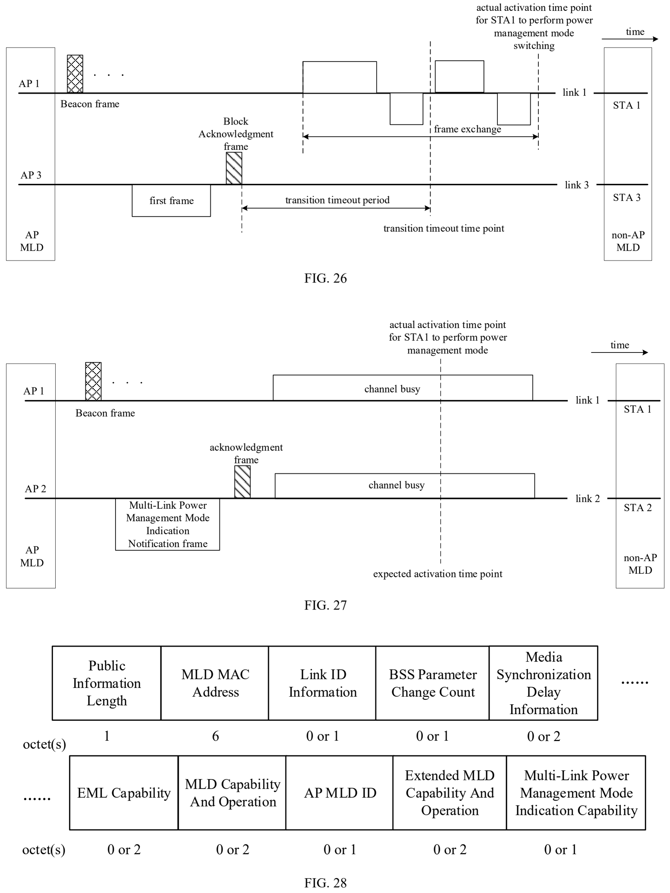

As illustrated in FIG. 26, the first MLD is a non-AP MLD, the second MLD is an AP MLD, the second STA is STA1, the expected activation time point is the transition timeout time point, and the third time point is the time point at which the second STA completes frame exchange. Since the first MLD and the second MLD do not complete frame exchange at the transition timeout time point, STA1 enters the first power management mode at the time point when frame exchange is completed.

In some embodiments, a second AP does not actively initiate frame exchange with the second STA prior to the expected activation time point, in a case where the second AP is the TXOP holder. The second AP is an affiliated AP of the second MLD, and the second AP is associated with the second link.

In some embodiments, a first AP does not actively initiate frame exchange with the first STA prior to the expected activation time point, in a case where the first AP is the TXOP holder. The second AP is an affiliated AP of the second MLD, and the first AP is associated with the first link.

In some embodiments, the frame exchange is initiated in a case where the second STA determines that a received PPDU is transmitted to the second STA itself.

In some embodiments, the frame exchange is initiated by the first MLD or by the second MLD.

In a case where the actual activation time point is the third time point, the STA enters the first power management mode upon completion of the frame exchange, such that normal execution of the frame exchange is not affected.

### Expected activation time point:

The first power management mode is applicable to a specific link, and this link is any one of one or more links. The first power management mode corresponding to each link may be the same or different. The expected activation time point corresponding to each link may be the same or different. While the present disclosure mainly uses, as an example for description, the first power management mode for the affiliated STA corresponding to the second link, the present disclosure is also applicable to the first power management mode for the affiliated STA corresponding to the first link, which is not limited in the embodiments of the present disclosure.

In some embodiments, the expected activation time point is determined based on at least one of:
the first time point; a transition timeout time point of the first power management mode; or a field in the first frame configured to indicate the expected activation time point. The expected activation time point is a time point at which the affiliated STA, corresponding to the first MLD on at least one of the second link or the first link, is expected to enter the first power management mode. The transition timeout time point is indicated by a third frame transmitted by a second MLD.

**The expected activation time point is determined based on the first time point:**
In some embodiments, in a case where the first frame does not carry a field for indicating the expected activation time point and the first MLD receives the second frame, the expected effective time point is determined based on the first time point.

In a case where the first frame is a Multi-Link Power Management Mode Indication Notification frame, a Power Management Indication Time subfield and/or an Expected Duration subfield is assumed to be absent in a Multi-Link Power Management Mode Indication element, and the first MLD receives the second frame from the second MLD, the expected activation time point is determined based on the first time point.

The first time point is an end of a second PPDU, which carries an acknowledgment for the first frame or for the second frame. The second frame is transmitted by the second MLD on the second link or the first link and is configured to respond to the first frame. For specific implementation details, reference may be made to the above embodiments related to the first time point, which are not elaborated herein.

**The expected activation time point is determined based on the transition timeout time point of the first power management mode:**
In some embodiments, in a case where the first frame does not carry a field for indicating the expected activation time point and the first MLD does not receive the second frame, the expected activation time point is determined based on the transition timeout time point of the first power management mode.

In a case where the first frame is a Multi-Link Power Management Mode Indication Notification frame, a Power Management Indication Time subfield and/or an Expected Duration subfield is assumed to be absent in a Multi-Link Power Management Mode Indication element, and the first MLD does not receive the second frame from the second MLD, the expected activation time point is determined based on the transition timeout time point of the first power management mode.

Specifically, a transition timeout period starts from an end of PPDU[+SigExt]. Herein, "PPDU" represents a first PPDU transmitted by the second MLD and carries an acknowledgment in response to the Multi-Link Power Management Mode Indication Notification frame. In a case where a signal extension is present, "PPDU[+SigExt]" represents the first PPDU plus a signal extension following the first PPDU. In a case where the signal extension is absent, "PPDU[+SigExt]" represents the first PPDU.

As illustrated in FIG. 4, in a case where the first frame is the first Multi-Link Power Management Mode Indication Notification frame, the first PPDU is the first acknowledgment frame in response to the first Multi-Link Power Management Mode Indication Notification frame. In a case where the signal extension is absent, the transition timeout period starts from the end of the first acknowledgment frame.

In a case where the first frame carries multi-link power management mode indication information, and where an Expected Activation Duration subfield is not included in a Multi-Link Power Management Mode Control subfield, and/or a Multi-Link Dynamic Power Save Mode Enabling Control subfield, and/or a Cross-link Power Management Mode Control subfield carried by the first MLD, or where a value of the carried Expected Activation Duration subfield is 0, the expected activation time point is determined based on the transition timeout time point of the first power management mode.

Specifically, a transition timeout period starts from an end of PPDU[+SigExt]. Herein, "PPDU" represents the first PPDU transmitted by the second MLD and carries an acknowledgment in response to the first frame. In a case where a signal extension is present, "PPDU[+SigExt]" represents the first PPDU plus a signal extension following the first PPDU. In a case where the signal extension is absent, "PPDU[+SigExt]" represents the first PPDU.

As illustrated in FIG. 5, in a case where the first frame carries multi-link power management mode indication information, the first PPDU is the second frame in response to the first frame and carries an acknowledgment for the first frame. In this case, the second frame is both the first PPDU and the second PPDU. In a case where the signal extension is absent, the transition timeout period starts from an end of the second frame.

**The expected activation time point is determined based on the field for indicating the expected activation time point.**

In some embodiments, in a case where the first frame carries a field for indicating the expected activation time point, the expected activation time point is determined based on the field for indicating the expected activation time point.

In a case where the first frame is a Multi-Link Power Management Mode Indication Notification frame, and a Power Management Indication Time subfield and/or an Expected Duration subfield is present in a Multi-Link Power Management Mode Indication element, the expected activation time point is determined based on the Power Management Indication Time subfield and/or the Expected Duration subfield.

In a case where the first frame carries multi-link power management mode indication information, and an Expected Activation Duration subfield is included in a Multi-Link Power Management Mode Control subfield, and/or a Multi-Link Dynamic Power Save Mode Enabling Control subfield, and/or a Cross-link Power Management Mode Control subfield carried by the first MLD, the expected activation time point is determined based on the Expected Activation Duration subfield.

Specifically, the expected activation duration starts from an end of the PPDU[+SigExt]. Herein, "PPDU" represents the first PPDU transmitted by the second MLD and carries an acknowledgment to the first frame. In a case where a signal extension is present, "PPDU[+SigExt]" represents the first PPDU plus a signal extension following the first PPDU. In a case where the signal extension is absent, "PPDU[+SigExt]" represents the first PPDU.

Since the order of magnitude of the expected activation duration is usually milliseconds and the order of magnitude of the transition timeout period is usually microseconds, the expected activation duration is generally longer than the transition timeout period.

As illustrated in FIG. 5, in a case where the first frame carries multi-link power management mode indication information, the first PPDU acts as a second frame in response to the first frame and carries an acknowledgment for the first frame. In this case, the second frame is both the first PPDU and the second PPDU. In a case where the signal extension is absent, the transition timeout period starts from an end of the second frame.

In some embodiments, the first frame is a Multi-Link Power Management Mode Indication Notification frame, which carries a Power Management Indication Time subfield and/or an Expected Duration subfield. The Power Management Indication Time subfield and/or the Expected Duration subfield is configured to indicate the expected activation time point, and the actual activation time point at which the affiliated STA, corresponding to the first MLD on the second link, enters the first power management mode is the expected activation time point.

As illustrated in FIG. 27, the first MLD is a non-AP MLD, the second MLD is an AP MLD, the affiliated STA corresponding to the first MLD on the second link is STA1, the first frame is a Multi-Link Power Management Mode Indication Notification frame, which carries a Power Management Indication Time subfield and/or an Expected Duration subfield, and the Power Management Indication Time subfield and/or the Expected Duration subfield is configured to indicate the expected activation time point.

The expected activation time point is the same as the actual time point at which the power management mode transition of STA1 takes effect or becomes active, and thus, at the expected activation time point, STA1 enters the first power management mode.

For the above multi-link power management mode, in a case where a first MLD (i.e., a non-AP MLD) is associated with a second MLD (i.e., an AP MLD) and establishes a plurality of links (such as link1 and link2) with the AP MLD, the non-AP MLD (or the AP MLD) is enabled to indicate, via a multi-link (or cross-link) power management mode indication operation, the multi-link power management mode for an affiliated STA corresponding to an established (or enabled) link of the MLD, or indicate that a multi-link power management mode operation of the corresponding affiliated STA is changing, and/or whether to enable a dynamic power save operation. Rules of the multi-link (or cross-link) power management mode indication operation are described hereinafter.
1. For the multi-link (or cross-link) power management mode indication initiated by the first MLD (non-AP MLD), in a case where an affiliated STA (e.g., STA1) of the first MLD is indicated to be in a first power management mode and the power management mode of the STA is required to be switched from an active mode to an indicated power save mode, or from an awake state in a dynamic power save mode to a doze state, or from an active mode to an awake state in a dynamic power save mode, or from an awake state in one dynamic power save mode to an awake state in another dynamic power save mode as indicated (for example, dynamic power save operation parameters such as low-capability operation parameters or high-capability operation parameters are updated), at least one of the following rules is required to be followed.
   (1) At an expected activation time point (T0) of the power management mode, in a case where an affiliated STA of a non-AP MLD is neither a TXOP holder nor a TXOP responder, the affiliated STA enters the indicated power management mode after T0 + a determination delay (abbreviated as "T-delay"), wherein the determination delay is a possible delay caused by the affiliated STA determining that the affiliated STA is not the TXOP holder or the TXOP responder. In some embodiments, the determination delay may be 0.
      In some embodiments, in a case where the affiliated STA is receiving a PPDU at the expected activation time point, the affiliated STA enters the indicated power management mode upon confirming that the PPDU is not transmitted to the affiliated STA itself. That is, the determination delay is a time interval from the expected activation time point to a time point at which the PPDU is confirmed not to be transmitted to the affiliated STA itself.
   (2) At an expected activation time point of the power management mode, in a case where an affiliated AP, corresponding to an AP MLD associated with an affiliated STA (set as STA1) of a non-AP MLD, is a TXOP holder and has initiated frame exchange with STA1, STA1 enters the indicated power management mode upon completion of the frame exchange.
      In some embodiments, in a case where an affiliated STA is receiving a PPDU at the expected activation time point, the affiliated STA participates in frame exchange upon confirming that the PPDU is transmitted to the affiliated STA itself, until the end of the frame exchange; and STA1 enters the indicated power management mode upon completion of the frame exchange.
   (3) At an expected activation time point of the power management mode, in a case where an affiliated STA (set as STA1) of a non-AP MLD is a TXOP holder and has initiated or is initiating frame exchange with an AP, STA1 enters the indicated power management mode upon completion of the frame exchange (or completion of the TXOP).
   (4) At an expected activation time point of the power management mode, in a case where an affiliated AP (set as AP1), corresponding to an AP MLD associated with an affiliated STA (STA1) of a non-AP MLD, is a TXOP holder and has not initiated frame exchange with STA1 or is transmitting a PPDU which does not carry a frame transmitted to STA1, AP1 no longer initiates frame exchange with STA1 during a currently acquired TXOP.
2. For the multi-link (or cross-link) power management mode indication initiated by the first MLD (non-AP MLD), in a case where an affiliated STA (set as STA1) of the first MLD is indicated to change the power management mode, and the power management mode of the STA is switched from a current power save mode (i.e., a doze state or an awake state) or the doze state, to an indicated active mode or an awake state in a dynamic power save mode, at least one of the following rules is required to be followed.
   (1) At an expected activation time point of the power management mode, in a case where an affiliated STA (set as STA1) of a non-AP MLD is a TXOP holder, and/or has initiated or is initiating frame exchange with an AP, STA1 enters the indicated power management mode upon completion of the frame exchange (or completion of the TXOP); or in a case where STA1 does not initiate frame exchange with the AP, STA1 enters the indicated power management mode at the expected activation time point.
   (2) Prior to the expected activation time point of the power management mode, in a case where an affiliated AP (set as AP1) of an AP MLD associated with an affiliated STA (STA1) of a non-AP MLD is a TXOP holder, AP1 does not actively initiate frame exchange with STA1.
3. For the multi-link (or cross-link) power management mode indication initiated by the first MLD (non-AP MLD), in a case where an affiliated STA (set as STA1) of the first MLD is indicated to change the power management mode and the power management mode of the STA is required to be switched from an awake state of a dynamic power save mode to an active mode, or from an awake state in one dynamic power save mode to an awake state in another dynamic power save mode as indicated (for example, dynamic power save operation parameters such as low-capability operation parameters or high-capability operation parameters are updated), at least one of the following rules is required to be followed.
   (1) At an expected activation time point of the power management mode, in a case where the affiliated STA (set as STA1) of a non-AP MLD is in frame exchange with an affiliated AP of an AP MLD associated with STA1, STA1 enters the indicated power management mode upon completion of the frame exchange (or completion of a TXOP).
   (2) At an expected activation time point of the power management mode, in a case where STA1 is not in frame exchange with the AP, STA1 enters the indicated power management mode after the expected activation time point + a determination delay, wherein the determination delay is a possible delay caused by STA1 determining whether STA1 is currently participating in the frame exchange with the AP. In some embodiments, the determination delay may be 0.

In some embodiments, in a case where the affiliated STA is receiving a PPDU at the expected activation time point, the STA enters the indicated power management mode upon confirming that the PPDU is not transmitted to the STA itself. That is, the determination delay is a time interval from an expected activation time point to the time of confirming that the PPDU is not transmitted to the STA itself.

### Capability information of the second MLD:

In some embodiments, the first MLD receives capability information from a second MLD, wherein the second MLD is a peer device associated with the first MLD, and the capability information is configured to indicate that the second MLD supports cross-link power management capability or multi-link power management capability.

In some embodiments, the second MLD transmits capability information, wherein the capability information is configured to indicate that the second MLD supports cross-link power management capability or multi-link power management capability.

In some embodiments, a Multi-Link Power Management Mode Indication Capability subfield may be configured to indicate that the second MLD supports the cross-link power management capability or the multi-link power management capability.

The Multi-Link Power Management Mode Indication Capability subfield indicates whether a multi-link (or cross-link) power management mode is supported and also indicates a multi-link power management mode indication transition timeout period. A basic multi-link element includes the Multi-Link Power Management Mode Indication Capability subfield, and the basic multi-link element is carried in a management frame. Exemplarily, a Multi-Link Power Management Mode Indication Capability subfield is added to a Public Information field of the basic multi-link element, as illustrated in FIG. 28.

### Public Information field of Basic Multi-Link element:

FIG. 28 is a schematic diagram of a format of the Public Information field of the Basic Multi-Link element according to some embodiments of the present disclosure. The Public Information field of the Basic Multi-Link element includes at least one of: a Public Information Length field, an MLD MAC Address field, a Link ID Information field, a BSS Parameter Change Count field, a Media Synchronization Delay Information field, an Enhanced Multi-Link (EML) Capability field, an MLD Capability And Operation field, an AP MLD ID field, an Extended MLD Capability And Operation field, or a Multi-Link Power Management Mode Indication Capability field.

The Public Information Length field occupies 1 octet, the MLD MAC Address field occupies 6 octets, the Link ID Information field occupies 0 or 1 octet, the BSS Parameter Change Count field occupies 0 or 1 octet, the Media Synchronization Delay Information field occupies 0 or 2 octets, the EML Capability field occupies 0 or 2 octets, the MLD Capability And Operation field occupies 0 or 2 octets, the AP MLD ID field occupies 0 or 1 octet, the Extended MLD Capability And Operation field occupies 0 or 2 octets, and the Multi-Link Power Management Mode Indication Capability field occupies 0 or 1 octet.

A Multi-Link Power Management Mode Indication Support field (or subfield) indicates whether the MLD described in the basic multi-link element supports the multi-link power management mode indication operation. In a case where the MLD supports the multi-link power management mode indication operation, the Multi-Link Power Management Mode Indication Support subfield is set to 1; and in a case where the MLD does not support the multi-link power management mode indication operation, the Multi-Link Power Management Mode Indication Support subfield is set to 0. Alternatively, in a case where the MLD supports the multi-link power management mode indication operation, the Multi-Link Power Management Mode Indication Support subfield is set to 0; and in a case where the MLD does not support the multi-link power management mode indication operation, the Multi-Link Power Management Mode Indication Support subfield is set to 1.

A Multi-Link Power Management Mode Indication Transition Timeout field (or subfield) represents a timeout value for frame exchange of the multi-link power management mode indication notification during the multi-link power management mode indication.

### Multi-Link Power Management Mode Indication Capability field:

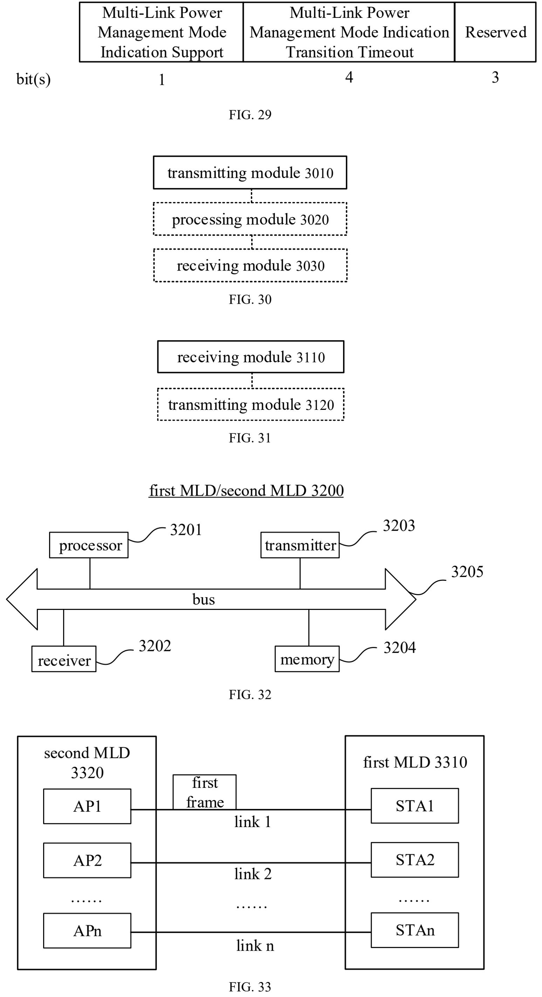

For the above Multi-Link Power Management Mode Indication Capability field (or subfield), FIG. 29 is a schematic diagram of a format of the Multi-Link Power Management Mode Indication Capability field according to some embodiments of the present disclosure. The Multi-Link Power Management Mode Indication Capability field includes at least one of: the Multi-Link Power Management Mode Indication Support field, the Multi-Link Power Management Mode Indication Transition Timeout field, and a Reserved field.

The Multi-Link Power Management Mode Indication Support field occupies 1 octet, the Multi-Link Power Management Mode Indication Transition Timeout field occupies 4 octets, and the Reserved field occupies 3 octets.

In a case where the frame transmitted by the affiliated AP of the AP MLD includes the Multi-Link Power Management Mode Indication Transition Timeout subfield, settings of the Multi-Link Power Management Mode Indication Transition Timeout subfield may be defined by using encoding examples of the Multi-Link Power Management Mode Indication Transition Timeout subfield defined in Table 8. In the table, 1 TU is a time measurement unit equal to 1024 microseconds.

**Table 8**

| Value of Transition Timeout Subfield | Transition Timeout |
|---|---|
| 0 | 0 |
| 1 | 128 microseconds |
| 2 | 256 microseconds |
| 3 | 512 microseconds |
| 4 | 1 TU |
| 5 | 2 TUs |
| 6 | 4 TUs |
| 7 | 8 TUs |
| 8 | 16 TUs |
| 9 | 32 TUs |
| 10 | 64 TUs |
| 11-15 | Reserved |

The above format of the Public Information field of the Basic Multi-Link element, and the format of the Multi-Link Power Management Mode Indication Capability field of the basic multi-link element are exemplary. In different embodiments or different designs, the present disclosure does not exclude and limit situations in which at least one of designs of the above fields (such as a position of the field in the frame, an arrangement order of the field relative to other fields, the number of octets occupied by the field, the number of bits occupied by the field, a name of an element, and a name of the field) is changed.

The present disclosure provides the following embodiments as examples for description of the first frame being the Multilink Power Management Mode Indication Notification frame, or the first frame being the frame carrying the multilink power management mode indication information, and the actual activation time point at which the affiliated STA corresponding to the first MLD on the second link enters the first power management mode.

### Embodiment 1: The first frame is the Multi-Link Power Management Mode Indication Notification frame, and the actual activation time point is the first time point.

FIG. 21 is a schematic diagram of a method for power management according to some embodiments of the present disclosure. The first MLD is a non-AP MLD, and the second MLD is an AP MLD. The non-AP MLD is associated with the AP MLD, and two links (link1 and link2) are established between the non-AP MLD and the AP MLD.

The AP MLD transmits a Beacon frame and carries a basic multi-link element and a multi-link power management mode indication transition timeout (or called transition timeout) period in the Beacon frame, and indicates support for a multi-link power management mode indication (that is, a Multi-Link Power Management Mode Indication Support subfield is set to 1). The multi-link power management mode indication transition timeout period is indicated by a Multi-Link Power Management Mode Indication Transition Timeout subfield.

Prior to switch of the power management mode, affiliated stations STA1 and STA2 of the non-AP MLD are in an active mode.

The non-AP MLD may indicate, via a multi-link (or cross-link) power management mode indication operation, a multi-link power management mode for an affiliated STA corresponding to an established (or enabled) link of the non-AP MLD, or indicate that a multi-link power management mode operation of the corresponding affiliated STA is changing, and/or whether to enable a dynamic power save operation.

Exemplarily, the affiliated STA (STA2) of the non-AP MLD acquires a TXOP on link2 and transmits a first Multi-Link Power Management Mode Indication Notification frame, indicating that STA1 on link1 is required to switch from the active mode to a dynamic capability adaptation power save mode. Upon receiving the first Multi-Link Power Management Mode Indication Notification frame on link2, the AP MLD transmits a first acknowledgment frame, and transmits, within a transition timeout period, a corresponding second Multi-Link Power Management Mode Indication Notification frame to STA1 on link1. Upon receiving the second Multi-Link Power Management Mode Indication Notification frame, STA1 replies to the AP MLD with a second acknowledgment frame. At the first time point, the power management mode of STA1 is switched from the active mode to the dynamic capability adaptation power save mode.

**Embodiment 2: The first frame is the Multi-Link Power Management Mode Indication Notification frame, and the actual activation time point is the second time point.**

FIG. 23 is a schematic diagram of a method for power management according to some embodiments of the present disclosure. The first MLD is a non-AP MLD, and the second MLD is an AP MLD. The non-AP MLD is associated with the AP MLD, and two links (link1 and link2) are established between the non-AP MLD and the AP MLD.

The AP MLD transmits a Beacon frame and carries a basic multi-link element and a multi-link power management mode indication transition timeout (or called transition timeout) period in the Beacon frame, and indicates support for multi-link power management mode indication (that is, a Multi-Link Power Management Mode Indication Support subfield is set to 1). The multi-link power management mode indication transition timeout period is indicated by a Multi-Link Power Management Mode Indication Transition Timeout subfield.

Prior to switch of the power management mode, affiliated stations STA1 and STA2 of the non-AP MLD are in an active mode.

The non-AP MLD may indicate, via a multi-link (or cross-link) power management mode indication operation, a multi-link power management mode for an affiliated STA corresponding to an established (or enabled) link of the non-AP MLD, or indicate that a multi-link power management mode operation of the corresponding affiliated STA is changing, and/or whether to enable a dynamic power save operation.

Exemplarily, the affiliated STA (STA2) of the non-AP MLD acquires a TXOP on link2 and transmits a Multi-Link Power Management Mode Indication Notification frame, indicating that STA1 on link1 is required to switch from the active mode to a power save mode (i.e., to a doze state or an awake state). Upon receiving the Multi-Link Power Management Mode Indication Notification frame on link2, the AP MLD transmits an acknowledgment frame. However, the affiliated AP (AP1) of the AP MLD is in a channel busy state and fails to transmit a corresponding Multi-Link Power Management Mode Indication Notification frame to STA1 within a multi-link power management mode indication transition timeout period. Upon expiration of the transition timeout, STA1 remains the channel busy state, but is not in a frame exchange state. Therefore, at the second time point (i.e., the transition timeout time point), the power management mode of STA1 is switched from the active mode to the power save mode (i.e., to a doze state or an awake state).

**Embodiment 3: The first frame is the Multi-Link Power Management Mode Indication Notification frame, and the actual activation time point is the third time point.**

FIG. 25 is a schematic diagram of a method for power management according to some embodiments of the present disclosure. The first MLD is a non-AP MLD, and the second MLD is an AP MLD. The non-AP MLD is associated with the AP MLD, and two links (link1 and link2) are established between the non-AP MLD and the AP MLD.

The AP MLD transmits a Beacon frame and carries a basic multi-link element and a multi-link power management mode indication transition timeout (or called transition timeout) period in the Beacon frame, and indicates support for multi-link power management mode indication (that is, a Multi-Link Power Management Mode Indication Support subfield is set to 1). The multi-link power management mode indication transition timeout period is indicated by a Multi-Link Power Management Mode Indication Transition Timeout subfield.

Prior to switch of the power management mode, affiliated stations STA1 and STA2 of the non-AP MLD are in an active mode.

The non-AP MLD may indicate, via a multi-link (or cross-link) power management mode indication operation, a multi-link power management mode for an affiliated STA corresponding to an established (or enabled) link of the non-AP MLD, or indicate that a multi-link power management mode operation of the corresponding affiliated STA is changing, and/or whether to enable a dynamic power save operation.

Exemplarily, the affiliated station STA2 of the non-AP MLD acquires a TXOP on link2 and transmits a Multi-Link Power Management Mode Indication Notification frame, indicating that STA1 on link1 is required to switch from the active mode to a dynamic capability adaptation power save mode. Upon receiving the Multi-Link Power Management Mode Indication Notification frame on link2, the AP MLD transmits an acknowledgment frame but fails to transmit a corresponding Multi-Link Power Management Mode Indication Notification frame to the non-AP MLD within a transition timeout period. Upon expiration of the transition timeout, STA1 is in a frame exchange state, and does not immediately perform a power management mode switch until the frame exchange participated by STA1 ends. Upon completion of the frame exchange participated by STA1, the power management mode of STA1 is switched from the active mode to the dynamic capability adaptation power save mode.

**Embodiment 4: The first frame carries the multi-link power management mode indication information.**

FIGS. 22, 24, and 26 each is a schematic diagram of a method for power management according to some embodiments of the present disclosure. These three examples may be used in combination, wherein the first MLD is a non-AP MLD, and the second MLD is an AP MLD. The non-AP MLD is associated with the AP MLD, and four links (link1, link2, link3, and link4) are established between the non-AP MLD and the AP MLD.

The AP MLD transmits a Beacon frame and carries a basic multi-link element and a multi-link power management mode indication transition timeout (or called transition timeout) period in the Beacon frame, and indicates support for multi-link power management mode indication (that is, a Multi-Link Power Management Mode Indication Support subfield is set to 1). The multi-link power management mode indication transition timeout period is indicated by a Multi-Link Power Management Mode Indication Transition Timeout subfield.

Prior to switch of the power management mode, affiliated stations STA1, STA3, and STA4 of the non-AP MLD are in an active mode, and STA2 is in an awake state of a dynamic capability adaptation power save mode.

The non-AP MLD may indicate, via a multi-link (or cross-link) power management mode indication operation, a multi-link power management mode for an affiliated STA corresponding to an established (or enabled) link of the non-AP MLD, or indicate that a multi-link power management mode operation of the corresponding affiliated STA is changing, and/or whether to enable a dynamic power save operation.

Exemplarily, the affiliated station STA3 of the non-AP MLD acquires a TXOP on link3 and transmits a first frame carrying one or more individually addressed QoS data frames, one or more individually addressed QoS null frames, or one or more individually addressed class 3 management frames. The first frame may include a Multi-Link Power Management Mode Control subfield, and/or a Multi-Link Dynamic Power Save Mode Enabling Control subfield, and/or a Cross-Link Power Management Mode Control subfield. These subfields are configured to indicate that STA1 and STA4 are required to switch from the active mode to the dynamic capability adaptation power save mode, and that STA2 is required to switch from the awake state of the dynamic capability adaptation power save mode to a power save mode (i.e., a doze state or an awake state).

Upon receiving the first frame on link2, the AP MLD replies with a Block Acknowledgment frame. Then, upon expiration of the transition timeout, STA1 is in a frame exchange state, and does not immediately perform a power management mode switch until the frame exchange participated by STA1 ends. Upon completion of the frame exchange participated by STA1, the power management mode of STA1 is switched from the active mode to the dynamic capability adaptation power save mode. While, since STA2 does not participate in frame exchange at the transition timeout time point, STA2 switches, at the transition timeout time point, from the awake state of the dynamic capability adaptation power save mode to the power save mode (i.e., a doze state or an awake state). STA4 switches from the active mode to the dynamic capability adaptation power save mode at an end of the Block Acknowledgment frame.

In the above embodiments, the embodiment corresponding to FIG. 3 and the embodiment corresponding to FIG. 6 may be implemented alone or in combination, which is not limited in this disclosure.

FIG. 30 is a block diagram of a first multi-link device according to some embodiments of the present disclosure. The device may be implemented as the first MLD or as a part of the first MLD through software, hardware, or a combination thereof. The first multi-link device has established and/or enabled one link or a plurality of links with a second multi-link device, and the plurality of links include a first link and a second link. The first multi-link device includes:
a transmitting module 3010, configured to transmit a first frame on the first link, wherein the first frame is configured to indicate a first power management mode for at least one of an affiliated STA corresponding to the second link or an affiliated STA corresponding to the first link; the second link is different from the first link in the plurality of links, and the first multi-link device is a peer device associated with the second multi-link device.

In a possible design of this embodiment, the first frame is "configured to indicate a first power management mode for at least one of an affiliated STA corresponding to the second link or an affiliated STA corresponding to the first link," which may be equivalently understood or alternatively understood as any one of: configured to indicate that a multi-link power management mode operation is changing for at least one of the affiliated STA corresponding to the second link or the affiliated STA corresponding to the first link; configured to indicate that at least one of the affiliated STA corresponding to the second link or the affiliated STA corresponding to the first link is required to switch from a current power management mode to the first power management mode; or, configured to indicate whether to enable a dynamic (capability adaptation) power save operation for at least one of the affiliated STA corresponding to the second link or the affiliated STA corresponding to the first link. The embodiments of the present disclosure does not impose any restrictions on the understanding of the first frame, and the present disclosure is usually illustrated by taking "the first frame is configured to indicate a first power management mode for at least one of an affiliated STA corresponding to the second link or an affiliated STA corresponding to the first link" as an example.

The first power management mode is applicable to a specific link, and this link is any one of the "one link or a plurality of links" between the first MLD and the second MLD. The first power management mode corresponding to each link may be the same or different. While the present disclosure mainly uses, as an example for description, the first power management mode for the affiliated STA corresponding to the second link, the present disclosure is also applicable to the first power management mode for the affiliated STA corresponding to the first link, which is not limited in the embodiments of the present disclosure.

In a possible design of this embodiment, the second link is one link different from the first link, or the second link includes a plurality of links different from the first link.

In a possible design of this embodiment, the first power management mode includes at least one of: an active mode, or a power save mode. An entity in the active mode means that the entity is always in an awake state or is in a constant awake state. An entity in the power save mode means that the entity is in the awake state, a doze state, or an unavailable state.

The power management mode includes at least one of: an active mode indicating a constant awake state, or a power save mode indicating an awake state, a doze state, or an unavailable state.

For the affiliated STA corresponding to each link, the first power management mode is one of the one or more power management modes as described above.

In a case where the affiliated STA is in the awake state, the affiliated STA may perform operations such as transmitting and receiving data, and monitoring channels. In a case where the affiliated STA is in the doze state, the affiliated STA fails to transmit or receive data but is capable of monitoring the channels. In a case where the affiliated STA is in the unavailable state, the affiliated STA fails to perform operations such as transmitting and receiving data, and monitoring the channels.

In a possible design of this embodiment, the power save mode includes a fully powered power save mode or a capability adaptation power save mode, wherein the capability adaptation power save mode includes a static capability adaptation power save mode or a dynamic capability adaptation power save mode.

By way of example rather than limitation, the awake state in the power save mode includes at least one of: an awake state in the dynamic capability adaptation power save mode; an awake state in the static capability adaptation power save mode; or an awake state in the fully powered power save mode.

In the awake state in the fully powered power save mode, the affiliated STA maintains operations in either a full-capability operation mode or a high-capability operation mode. That is, the affiliated STA performs, within a supported capability range, operations such as transmitting and receiving data and monitoring channels by adopting a higher bandwidth, more receive chains, more spatial streams, a higher data rate, a higher-order MCS, and a PPDU format with high processing overhead. The fully powered power save mode may also be referred to as a non-capability adaptation power save mode or a fully powered mode.

In the awake state in the static capability adaptation power save mode, the affiliated STA merely maintains operations in a low-capability operation mode. That is, the affiliated STA performs operations such as transmitting and receiving data and monitoring channels by adopting a low bandwidth, fewer receive chains, fewer spatial streams, a lower data rate, a lower-order MCS, and a PPDU format with low processing overhead. The static capability adaptation power save mode may also be referred to as a non-dynamic capability adaptation power save mode.

In the awake state in the dynamic capability adaptation power save mode, the affiliated STA usually operates in a low-capability operation mode. Upon receiving a specific frame transmitted to the affiliated STA (such as an initial frame including an initial control frame or any other frame defined for mode switching), the affiliated STA switches to the high-capability (or full-capability) operation mode based on an indication of the specific frame, and switches back to the low-capability operation mode upon completion of a current frame exchange.

In a possible design of this embodiment, the dynamic capability adaptation power save mode has the same meaning as a dynamic power save mode, the non-dynamic capability adaptation power save mode has the same meaning as a non-dynamic power save mode, and the static capability adaptation power save mode has the same meaning as a static power save mode.

By refining specific types of the first power management mode, the present disclosure, compared with the related art in which the power management mode only includes an active mode and a power save mode, enables a more precise indication of the power management mode for the MLD, supports a simultaneous change of the power management mode for the affiliated STAs on all links or part of the links, and also supports a precise change of the power management mode for the affiliated STA on one or more links. The first power management modes of the affiliated STAs on different links upon the change may be different. For example, upon the change of the power management mode, an affiliated STA (STA1) on link1 transitions into a static capability adaptation power save mode, and an affiliated STA (STA2) on link2 transitions into a dynamic capability adaptation power save mode, such that different power management modes are used according to actual needs in different application scenarios.

The present disclosure provides two design schemes for the first frame. In a design scheme 1, the first frame is a Multi-Link Power Management Mode Indication Notification frame, and in a design scheme 2, the first frame is any frame which carries multi-link power management mode indication information.

The design scheme 1 designs a new dedicated frame, which is configured to indicate the first power management mode for at least one of the affiliated STA corresponding to the second link or the affiliated STA corresponding to the first link.

The design scheme 2 is based on a conventional frame format, customizes one or more control fields in the conventional frame format, and indicates, based on the one or more control fields, the first power management mode for at least one of the affiliated STA corresponding to the second link or the affiliated STA corresponding to the first link.

**Description is given hereinafter by taking an example where the first frame is the Multi-Link Power Management Mode Indication Notification frame.**

A first multi-link device (such as a non-AP MLD) that supports a multi-link power management mode indication, upon determining a power management mode for an affiliated STA corresponding to an established link (or an enabled link) of the first MLD, and determining operation parameters to be adopted in the corresponding power management mode, may transmit a Multi-Link Power Management Mode Indication Notification frame to a second MLD (such as an AP MLD associated with the non-AP MLD), as illustrated in FIG. 4.

FIG. 4 is a schematic diagram of a multi-link power management mode indication according to some embodiments of the present disclosure. In an example where the first multi-link device is a non-AP MLD and the second multi-link device is an AP MLD, two links (link1 and link2) are successfully established between the non-AP MLD and the AP MLD, link1 and link2 of the non-AP MLD are both enabled links, and affiliated STAs (STA1 and STA2) corresponding to the two links are both in a fully powered state in the active mode.

In a case where the non-AP MLD prepares to change a power management state of STA1, that is, STA1 prepares to switch from the active mode to another power management mode (such as a dynamic capability adaptation power save mode), the non-AP MLD may transmit a Multi-Link Power Management Mode Indication Notification frame to the AP MLD on link2.

Exemplarily, the affiliated STA (STA2) of the non-AP MLD transmits a first Multi-Link Power Management Mode Indication Notification frame to an affiliated AP (AP2) of the AP MLD on link2, and AP2, upon receiving the first Multi-Link Power Management Mode Indication Notification frame, transmits a first acknowledgment frame. In some embodiments, an interval between the first acknowledgment frame and the first Multi-Link Power Management Mode Indication Notification frame is an SIFS.

By way of example rather than limitation, the Multi-Link Power Management Mode Indication Notification frame carries a Link Identifier subfield and a Power Management subfield. The Link Identifier subfield is configured to indicate a link identifier of link1. For example, a value of 1 in the Link Identifier subfield corresponds to link1; and a value of 1 in the Power Management subfield indicates that STA1 is to be in a power save mode.

By way of example rather than limitation, the Multi-Link Power Management Mode Indication Notification frame carries a Capability Adaptation Power Save Enabled field and a Capability Adaptation Power Save Mode field. In a case where the Capability Adaptation Power Save Enabled field is set to 1, STA1 is instructed to enable a capability adaptation power save mode. In a case where the Capability Adaptation Power Save Mode field is set to 1, STA1 is instructed to enter or transition into a dynamic capability adaptation power save mode.

In a possible design of this embodiment, in a case where the second multi-link device (such as the AP MLD) has received the first Multi-Link Power Management Mode Indication Notification frame, and in response to the received first Multi-Link Power Management Mode Indication Notification frame, the second multi-link device may transmit a second Multi-Link Power Management Mode Indication Notification frame to the first multi-link device (such as the non-AP MLD) via link1 or link2 within a multi-link power management mode indication transition timeout (or called a transition timeout) period. This case is applied to at least one of the following rules:

1) In a possible design of this embodiment, a management frame (such as a Beacon frame or an Association Response frame) transmitted by an affiliated AP of the second multi-link device carries a Multi-Link Power Management Mode Indication Transition Timeout subfield. The Multi-Link Power Management Mode Indication Transition Timeout subfield is configured to indicate a multi-link power management mode indication transition timeout period.

For example, in FIG. 4, the Beacon frame transmitted by AP1 carries the Multi-Link Power Management Mode Indication Transition Timeout subfield.

Except for authentication frames transmitted by the affiliated APs of the second MLD, basic multi-link elements in all management frames carrying the basic multi-link elements may include the Multi-Link Power Management Mode Indication Transition Timeout subfield in a Multi-Link Power Management Mode Indication Capability subfield.

2) In a possible design of this embodiment, the multi-link power management mode indication transition timeout period starts from an end of PPDU[+SigExt]. Herein, "PPDU" represents a first PPDU transmitted by the second multi-link device and carries an acknowledgment (ACK) in response to the first Multi-Link Power Management Mode Indication Notification frame. In a case where a signal extension is present, "PPDU[+SigExt]" represents the first PPDU plus the signal extension following the PPDU. In a case where the signal extension is absent, "PPDU[+SigExt]" represents the first PPDU.

As illustrated in FIG. 4, the first PPDU acts as a first acknowledgment frame corresponding to the first Multi-Link Power Management Mode Indication Notification frame. In a case where the signal extension is absent, the multi-link power management mode indication transition timeout period (abbreviated as a transition timeout period) starts from the end of the first PPDU, and a length of the transition timeout period is indicated by the Multi-Link Power Management Mode Indication Transition Timeout subfield as described above.

3) In a possible design of this embodiment, subfields in the second Multi-Link Power Management Mode Indication Notification frame have the same values as the subfields in the first Multi-Link Power Management Mode Indication Notification frame.

Exemplarily, a value of a Multi-Link Power Management Mode Indication Control subfield in the second Multi-Link Power Management Mode Indication Notification frame is the same as a value of a Multi-Link Power Management Mode Indication Control subfield in the first Multi-Link Power Management Mode Indication Notification frame; and a value of a Link Power Management Mode Indication Information subfield in the second Multi-Link Power Management Mode Indication Notification frame is the same as a value of a Link Power Management Mode Indication Information subfield in the first Multi-Link Power Management Mode Indication Notification frame.

The value of the subfield in the second Multi-Link Power Management Mode Indication Notification frame is the same as the value of the subfield in the first Multi-Link Power Management Mode Indication Notification frame, which is an optional design. In other designs, a portion of the subfields of the first Multi-Link Power Management Mode Indication Notification frame and the second Multi-Link Power Management Mode Indication Notification frame may be the same, and another portion of the subfields may be different; or, all of the subfields of the first Multi-Link Power Management Mode Indication Notification frame and the second Multi-Link Power Management Mode Indication Notification frame may be the same; or, the subfields in the second Multi-Link Power Management Mode Indication Notification frame may not include any subfield in the first Multi-Link Power Management Mode Indication Notification frame, which is not limited in the embodiments of the present disclosure.

In the case that the first frame is the Multi-Link Power Management Mode Indication Notification frame, a new Multi-Link Power Management Mode Indication Notification frame is designed as a dedicated frame to indicate the multi-link power management mode for the affiliated STA, such that a reliability of information transmission is improved and a possibility of conflict with other information transmission is reduced.

**Description is given hereinafter by taking an example where the first frame carries the multi-link power management mode indication information.**

In a possible design of this embodiment, the first frame is a PPDU carrying one or more individually addressed QoS data frames, one or more individually addressed QoS null frames, or one or more individually addressed class 3 management frames.

In a possible design of this embodiment, a multi-link power management mode indication operation is used to indicate a multi-link power management mode for an affiliated STA corresponding to an established link (or an enabled link) of a first multi-link device; or that a multi-link power management mode operation of the corresponding affiliated STA is changing; and/or whether to enable a dynamic power save operation.

In a possible design of this embodiment, an MLD or an affiliated STA of the MLD that transmits the first frame is defined as an initiator of the multi-link power management mode indication operation; and an MLD or an affiliated STA of the MLD that receives the first frame is defined as a responder of the multi-link power management mode indication operation.

The first frame includes a Multi-Link Power Management Mode Control subfield, and/or a Multi-Link Dynamic Power Save Mode Enabling Control subfield, and/or a Cross-Link Power Management Mode Control subfield.

FIG. 5 is a schematic diagram of a multi-link power management mode indication according to some embodiments of the present disclosure. A first multi-link device (e.g., a non-AP MLD) as the initiator of the multi-link power management mode indication operation may transmit a first frame to a second multi-link device (e.g., an AP MLD) on one of established links (or enabled links). The first frame is a PPDU carrying one or more individually addressed QoS data frames, one or more individually addressed QoS null frame, or one or more individually addressed class 3 management frames. The first multi-link device requests the second multi-link device as the responder of the multi-link power management mode indication operation to immediately confirm a change of a multi-link power management mode operation and/or a dynamic power save operation. Upon receiving the first frame, the second multi-link device transmits a second frame (e.g., an acknowledgment frame) as a response to the request of the first multi-link device. In some embodiments, an interval between the second frame and the first frame is an SIFS.

In the case that the first frame carries the multi-link power management mode indication information, no new design of a dedicated frame is required for the transmission of the multi-link power management mode indication information. Instead, based on a conventional frame format, one or more control fields may be customized in the conventional frame format, and the first power management mode for the affiliated STA corresponding to at least one of the second link or the first link, may be indicated via the control fields, enabling better utilization of the conventional frame format.

In the case where the first frame is the Multi-Link Power Management Mode Indication Notification frame, formats of Multi-Link Power Management Mode Indication elements associated with the first frame are described hereinafter.

**Multi-link Power Management Mode Indication element:** FIG. 7 is a schematic diagram of a format of a Multi-Link Power Management Mode Indication element according to some embodiments of the present disclosure. For specific implementation details, reference may be made to the embodiment illustrated in FIG. 7, which are not elaborated herein.

### Multi-Link Power Management Mode Indication Control field:

In a possible design of this embodiment, the first frame carries a control field for indicating the first power management mode.

In an example, the control field is a Multi-Link Power Management Mode Indication Control field. With respect to the Multi-Link Power Management Mode Indication Control field, FIG. 8 is a schematic diagram of a format of the Multi-Link Power Management Mode Indication Control field according to some embodiments of the present disclosure. For specific implementation details, reference may be made to the embodiment illustrated in FIG. 8, which are not elaborated herein.

In a possible design of this embodiment, the control field includes at least one of: a first control field, configured to indicate whether the first power management mode is an active mode or a power save mode; a second control field, configured to indicate whether the power save mode is a fully powered power save mode or a capability adaptation power save mode; or a third control field, configured to indicate that the capability adaptation power save mode is a non-dynamic capability adaptation power save mode or a dynamic capability adaptation power save mode.

Exemplarily, the first control field is a Multi-Link Power Management Mode Indication Bitmap field, the second control field is a Multi-Link Power Save Mode Indication Bitmap field, and the third control field is a Multi-Link Dynamic Power Save Mode Indication Bitmap field.

In a possible design of this embodiment, at least one of the first control field, the second control field, and the third control field is a bitmap field. In the bitmap field, a bit position i corresponds to a link with a link ID i, and is configured to indicate the first power management mode for the affiliated STA corresponding to the link with link ID i, where i is an integer.

In a possible design of this embodiment, the first control field is a first bitmap field, wherein a bit position i in the first bitmap field corresponds to a link with a link ID i, and is configured to indicate that the first power management mode for the affiliated STA, corresponding to the link with the link ID i, is the active mode or the power save mode, i being an integer.

In a possible design of this embodiment, the second control field is a second bitmap field, wherein a bit position i in the second bitmap field corresponds to a link with a link ID i, and is configured to indicate that the first power management mode for the affiliated STA, corresponding to the link with the link ID i, is the fully powered power save mode or the capability adaptation power save mode, i being an integer.

In a possible design of this embodiment, the third control field is a third bitmap field, wherein a bit position i in the third bitmap field corresponds to a link with a link ID i, and is configured to indicate that the first power management mode for the affiliated STA, corresponding to the link with the link ID i, is the non-dynamic capability adaptation power save mode or the dynamic capability adaptation power save mode, i being an integer.

The Multi-Link Power Management Mode Indication Bitmap field indicates a power management mode for an affiliated STA corresponding to an established link (or enabled link) of an MLD. That is, the Multi-Link Power Management Mode Indication Bitmap field indicates which STAs in the affiliated STAs corresponding to the established links (or enabled links) of the MLD is to be in an active mode or a power save mode.

A bit position i in the Multi-Link Power Management Mode Indication Bitmap field corresponds to a link with a link ID field being *i*. The *i*^{th} bit is set to 1, indicating that an affiliated STA, corresponding to the link with the link ID field being *i*, is to be in a power save mode. That is, the affiliated STA is to be in a doze state or an awake state. The *i*^{th} bit is set to 0, indicating that the affiliated STA, corresponding to the link with the link ID field being i, may enter or transition into an active mode. That is, the affiliated STA may be in an awake state of a fully powered power save mode or an awake state of a dynamic capability adaptation power save mode (or called dynamic power save mode). The link with the link ID field being i is an established link or an enabled link of the MLD. In the embodiments of the present disclosure, the affiliated STA may be simply referred to as an STA.

The Multi-Link Power Save Mode Indication Bitmap field indicates a power save mode for an affiliated STA corresponding to an established link (or enabled link) of an MLD. That is, the Multi-Link Power Save Mode Indication Bitmap field indicates which STAs in the affiliated STAs corresponding to the established links (or enabled links) of the MLD is to be in a capability adaptation power save mode.

In a possible design of this embodiment, the first frame also carries at least one of: a first indication time subfield, configured to indicate an expected activation time point of the first power management mode; or a first duration subfield, configured to indicate a duration required for the first power management mode to remain activated as expected. The expected activation time point is a time point at which the affiliated STA corresponding to the first MLD on the second link is expected to enter or transition into the first power management mode.

Exemplarily, the first indication time subfield is the Power Management Indication Time field, and the first duration subfield is the Expected Duration field.

### Link Power Management Mode Indication Information field:

The Link Power Management Mode Indication Information field carries one or more indication information elements for a power management mode for an affiliated STA corresponding to an established link (or enabled link) of an MLD and the one or more indication information elements are specific to the affiliated STA. The Link Power Management Mode Indication Information field is optional. For specific implementation details, reference may be made to the description of the Link Power Management Mode Indication Information field in method embodiments, which are not elaborated herein.

### Per-STA Power Management Mode Indication Info sub-element:

FIG. 9 is a schematic diagram of a format of the Per-STA Power Management Mode Indication Info sub-element according to some embodiments of the present disclosure. The Per-STA Power Management Mode Indication Info sub-element includes at least one of: a Sub-Element ID field, a Length field, an STA Power Management Mode Indication Control field, or an STA Power Management Mode Indication Information field. For specific implementation details, reference may be made to the embodiment illustrated in FIG. 9, which are not elaborated herein.

### STA Power Management Mode Indication Control field:

With respect to the STA Power Management Mode Indication Control field, FIG. 10 is a schematic diagram of a format of the STA Power Management Mode Indication Control field according to some embodiments of the present disclosure. The STA Power Management Mode Indication Control field includes at least one of: a Link ID Information field, a Power Management field, a Capability Adaptation Power Save Control Presence field, or a Capability Adaptation Power Save Control field. For specific implementation details, reference may be made to the embodiment illustrated in FIG. 10, which are not elaborated herein.

### Link ID Information field:

With respect to the Link ID Information field, FIG. 11 is a schematic diagram of a format of the Link ID Information field according to some embodiments of the present disclosure. The Link ID Information field includes at least one of: a Link ID field or a Reserved field. For specific implementation details, reference may be made to the embodiment illustrated in FIG. 11, which are not elaborated herein.

### Capability Adaptation Power Save Control field:

With respect to the Capability Adaptation Power Save Control field, FIG. 12 is a schematic diagram of a format of the Capability Adaptation Power Save Control field according to some embodiments of the present disclosure. The Capability Adaptation Power Save Control field includes at least one of: a Capability Adaptation Power Save Enabled field, a Capability Adaptation Power Save Mode field, a Switching Mode field, a Default Low-Capability Operation field, a Default High-Capability Operation field, a Capability Adaptation Power Save Delay Parameter Control field, a Low-Capability Operation Parameter Control field, a High-Capability Operation Parameter Control field, or a Reserved field. For specific implementation details, reference may be made to the embodiment illustrated in FIG. 12, which are not elaborated herein.

In a possible design of this embodiment, the first frame is also configured to indicate one or more operation parameters to be adopted by the affiliated STA corresponding to at least one of the second link or the first link in the first power management mode.

In a possible design of this embodiment, in a case where the first power management mode is a dynamic capability adaptation power save mode, the one or more operation parameters include at least one of:

an operation mode and type of the dynamic capability adaptation power save mode; an operation parameter in a first capability operation mode; or an operation parameter in a second capability operation mode. The capability under the first capability operation mode is lower than the capability under the second capability operation mode.

Exemplarily, the first capability operation mode is a low-capability operation mode, and the second capability operation mode is a high-capability operation mode.

In a possible design of this embodiment, the first frame also carries at least one of: a Switching Mode subfield, configured to indicate the operation mode and type of the dynamic capability adaptation power save mode; a first Capability Operation Parameter subfield, configured to indicate an operation parameter in the first capability operation mode; or a second Capability Operation Parameter subfield, configured to indicate an operation parameter in the second capability operation mode.

Exemplarily, the Switching Mode subfield may be called a Switching Mode field, the first Capability Operation Parameter subfield may be called a Low-Capability Operation Mode Parameter field, and the second Capability Operation Parameter subfield may be called a High-Capability Operation Mode Parameter field.

### STA Power Management Mode Indication Information field:

With respect to the above STA Power Management Mode Indication Information field, FIG. 13 is a schematic diagram of a format of the STA Power Management Mode Indication Information field according to some embodiments of the present disclosure. The STA Power Management Mode Indication Information field includes at least one of: a Capability Adaptation Power Save Delay Parameter field, a Low-Capability Operation Mode Parameter field, or a High-Capability Operation Mode Parameter field. For specific implementation details, reference may be made to the embodiment illustrated in FIG. 13, which are not elaborated herein.

### Capability Adaptation Power Save Delay Parameter field:

With respect to the above Capability Adaptation Power Save Delay Parameter field, FIG. 14 is a schematic diagram of a format of the Capability Adaptation Power Save Delay Parameter field according to some embodiments of the present disclosure. The Capability Adaptation Power Save Delay Parameter field includes at least one of: a Capability Adaptation Power Save Padding Delay 1 field, a Capability Adaptation Power Save Transition Delay 1 field, a Capability Adaptation Power Save Padding Delay 2 Field, or a Capability Adaptation Power Save Transition Delay 2 field. For specific implementation details, reference may be made to the embodiment illustrated in FIG. 14, which are not elaborated herein.

### Low-Capability Operation Mode Parameter field:

In a possible design of this embodiment, the first Capability Operation Parameter subfield carries at least one of:
a first Capability Operation Bandwidth field; a first Capability Supported Highest-Order Modulation Corresponding MCS Index field; a first Capability Receive Maximum Number Of Spatial Streams field; a first Capability Transmit Maximum Number Of Spatio-Temporal Streams field; or a first Capability Supported PPDU Format field.

The first Capability Operation Bandwidth field is configured to indicate an operation bandwidth supported for reception and/or transmission in the first capability operation mode. The first Capability Supported Highest-Order Modulation Corresponding MCS Index field, is configured to indicate an MCS index corresponding to a highest-order modulation supported in the first capability operation mode. The first Capability Transmit Maximum Number Of Spatio-Temporal Streams field, is configured to indicate the maximum number of spatial streams supported for reception in the first capability operation mode. The first Capability Transmit Maximum Number Of Spatio-Temporal Streams field, is configured to indicate the maximum number of spatio-temporal streams supported for transmission in the first capability operation mode. The first Capability Supported PPDU Format field is configured to indicate one or more PPDU formats supported for reception and/or transmission in the first capability operation mode.

Exemplarily, the first Capability Operation Parameter subfield is a Low-Capability Operation Mode Parameter field; the first Capability Operation Bandwidth field is a Low-Capability Operation Bandwidth field; the first Capability Supported Highest-Order Modulation Corresponding MCS Index field is an MCS index field corresponding a highest-order modulation supported by the low capability operation; the first Capability Receive Maximum Number Of Spatial Streams field is a Low-Capability Receive Number Of Spatial Streams field; the first Capability Transmit Maximum Number Of Spatio-Temporal Streams field is a Low-Capability Transmit Number Of Spatio-Temporal Streams field; and the first Capability Supported PPDU Format field is a Low-Capability Supported PPDU Format field.

For the above Low-Capability Operation Mode Parameter field, FIG. 15 is a schematic diagram of a format of the Low-Capability Operation Mode Parameter field according to some embodiments of the present disclosure. The Low-Capability Operation Mode Parameter field includes at least one of: a Low-Capability Operation Bandwidth field, a Low-Capability Supported Highest-Order Modulation Corresponding MCS Index field, a Low-Capability Receive Number Of Spatial Streams (RX NSS) field, a Low-Capability Transmit Number Of Spatio-Temporal Streams (TX NSTS) field, or a Low-Capability Supported PPDU Format field. For specific implementation details, reference may be made to the embodiment illustrated in FIG. 15, which are not elaborated herein.

### High-Capability Operation Mode Parameter field:

In a possible design of this embodiment, the second Capability Operation Parameter subfield carries at least one of:
a second Capability Operation Bandwidth field; a second Capability Supported Highest-Order Modulation Corresponding MCS Index field; a second Capability Receive Maximum Number Of Spatial Streams field; a second Capability Transmit Maximum Number Of Spatio-Temporal Streams field; or a second Capability Supported PPDU Format field.

The second Capability Operation Bandwidth field, is configured to indicate an operation bandwidth supported for reception and/or transmission in the second capability operation mode. The second Capability Supported Highest-Order Modulation Corresponding MCS Index field, is configured to indicate an MCS index corresponding to a highest-order modulation supported in the second capability operation mode. The second Capability Receive Maximum Number Of Spatial Streams field, is configured to indicate the maximum number of spatial streams supported for reception in the second capability operation mode. The second Capability Transmit Maximum Number Of Spatio-Temporal Streams field, is configured to indicate the maximum number of spatio-temporal streams supported for transmission in the second capability operation mode. The second Capability Supported PPDU Format field is configured to indicate one or more PPDU formats supported for reception and/or transmission in the second capability operation mode.

Exemplarily, the second Capability Operation Parameter subfield is a High-Capability Operation Mode Parameter field; the second Capability Operation Bandwidth field is a High-Capability Operation Bandwidth field; the second Capability Supported Highest-Order Modulation Corresponding MCS Index field is an MCS index field corresponding a highest-order modulation supported by the high-capability operation; the second Capability Receive Maximum Number Of Spatial Streams field is a High-Capability Receive Number Of Spatial Streams field; the second Capability Transmit Maximum Number Of Spatio-Temporal Streams field is a High-Capability Transmit Number Of Spatio-Temporal Streams field; and the second Capability Supported PPDU Format field is a High-Capability Supported PPDU Format field.

For the above High-Capability Operation Mode Parameter field, FIG. 16 is a schematic diagram of a format of the High-Capability Operation Mode Parameter field according to some embodiments of the present disclosure. The High-Capability Operation Mode Parameter field includes at least one of: a High-Capability Operation Bandwidth field, a High-Capability Supported Highest-Order Modulation Corresponding MCS Index field, a High-Capability RX NSS field, a High-Capability TX NSTS field, or a High-Capability Supported PPDU Format field. For specific implementation details, reference may be made to the embodiment illustrated in FIG. 16, which are not elaborated herein.

**A Multi-Link Power Management Mode Indication Notification frame and related fields are described hereinafter.**

The Multi-Link Power Management Mode Indication Notification frame is configured to indicate a power management mode for a related affiliated STA of an MLD that transmits this notification frame, and indicate one or more operation parameters to be adopted by the corresponding power management mode. Alternatively, the Multi-Link Power Management Mode Indication Notification frame is used by an AP MLD as a response to another Multi-Link Power Management Mode Indication Notification frame received from a non-AP MLD.

In a case where the first frame carries multi-link power management mode indication information, formats of control subfields related to the multi-link power management mode indication associated with the first frame are described hereinafter.

**Variants of the control subfields related to the multi-link power management mode indication:**
In an MAC frame format defined by related protocols, an HT Control field may be carried in a QoS data frame, a QoS null frame, a management frame, and a Control Wrapper frame. The HT Control field includes 32 bits in total. In a case where both bits B0 and B1 in the HT Control field are set to 1, the HT Control field is indicated as an HE variant HT Control field, and bits B2 to B31 are occupied by an A-Control subfield. The A-Control subfield includes a Control List subfield and a Padding subfield, and the Control List subfield includes one or more Control subfields. Each Control subfield includes a 4-bit Control ID subfield and a Control Information subfield with a variable length, wherein the Control ID subfield indicates a type of information carried in the Control Information subfield.

In a possible design of this embodiment, the first frame carries a control field, wherein the control field includes at least one of:
a fourth control field, configured to indicate the first power management mode for an affiliated STA corresponding to each link in a plurality of links, wherein the first power management mode includes an active mode or a power save mode; a fifth control field, configured to indicate whether an affiliated STA corresponding to each link in a plurality of links is to enable a dynamic capability adaptation power save mode; or, a sixth control field, configured to indicate the first power management mode for an affiliated STA corresponding to a link with a link ID i, wherein the first power management mode is an active mode, a power save mode, or a dynamic capability adaptation power save mode.

Exemplarily, the fourth control field is a Multi-Link Power Management Mode Control subfield, the fifth control field is a Multi-Link Dynamic Power Save Mode Enabling Control subfield, and the sixth control field is a Cross-Link Power Management Mode Control subfield.

In a possible design of this embodiment, at least one of the fourth control field, the fifth control field, and the sixth control field includes a Required Activation Duration subfield. Alternatively, none of the fourth control field, the fifth control field, and the sixth control field includes the Required Activation Duration subfield. Herein, the Required Activation Duration subfield is configured to indicate a duration required for the first power management mode to be activated.

To facilitate the multi-link power management mode indication operation, the Multi-Link Power Management Mode Control subfield, the Multi-Link Dynamic Power Save Mode Enabling Control subfield, and the Cross-Link Power Management Mode Control subfield are defined, as listed in Table 7.

### Multi-Link Power Management Mode Control subfield:

The Multi-Link Power Management Mode Control subfield is configured for an MLD to indicate a power management mode (including an active mode and a power save mode) for an affiliated STA corresponding to one or more established (or enabled) links of the MLD. A Control Information subfield of the Multi-Link Power Management Mode Control subfield includes information on the power management mode for the affiliated STA corresponding to the one or more established (or enabled) links of the MLD.

In a possible design of this embodiment, the fourth control field includes a fourth bitmap field, wherein a bit position i in the fourth bitmap field corresponds to a link with a link ID *i*, and is configured to indicate that the first power management mode for the affiliated STA corresponding to the link with the link ID i is the active mode or the power save mode, wherein i is an integer.

FIG. 17 is a schematic diagram of a format of the Multi-Link Power Management Mode Control subfield according to some embodiments of the present disclosure. The Multi-Link Power Management Mode Control subfield includes at least one of: a Multi-Link Power Management Mode Indication Bitmap field, a Required Activation Duration field, and a Reserved field. For specific implementation details, reference may be made to the embodiment illustrated in FIG. 17, which are not elaborated herein.

### Multi-Link Dynamic Power Save Mode Enabling Control subfield:

The Multi-Link Dynamic Power Save Mode Enabling Control subfield is configured for the MLD to indicate whether the affiliated STAs corresponding to one or more established (or enabled) links are to enable a dynamic power save mode. In some embodiments, a Control Information subfield of the Multi-Link Dynamic Power Save Mode Enabling Control subfield is configured to indicate whether the affiliated STAs corresponding to one or more established (or enabled) links of the MLD are to enable the dynamic power save mode.

In a possible design of this embodiment, the fifth control field includes a fifth bitmap field, wherein a bit position i in the fifth bitmap field corresponds to a link with a link ID *i*, and is configured to indicate whether the first power management mode for an affiliated STA corresponding to the link with the link ID i enables a dynamic capability adaptation power save mode, wherein, i is an integer.

FIG. 18 is a schematic diagram of a format of the Multi-Link Dynamic Power Save Mode Enabling Control subfield according to some embodiments of the present disclosure. The Multi-Link Dynamic Power Save Mode Enabling Control subfield includes at least one of: a Multi-Link Dynamic Power Save Mode Indication Bitmap field, a Required Activation Duration field, or a Reserved field. For specific implementation details, reference may be made to the embodiment illustrated in FIG. 18, which are not elaborated herein.

### Cross-Link Power Management Mode Control subfield:

The Cross-Link Power Management Mode Control subfield is configured for an MLD to indicate a power management mode for an affiliated STA corresponding to an established (or enabled) link of the MLD, i.e., to indicate an active mode, a power save mode, or whether to enable dynamic power save mode, wherein this established (or enabled) link is different from the first link.

A Control Information subfield of the Cross-Link Power Management Mode Control subfield includes information on the power management mode for the affiliated STA corresponding to the established (or enabled) link of the MLD, specifically including information on whether the STA is to be in the active mode or the power save mode, and on whether to enable the dynamic power save mode.

In a possible design of this embodiment, the sixth control field includes at least one of: a Link ID subfield, a Power Management Mode subfield, or a Capability Adaptation Power Save Control subfield. The Link ID subfield is configured to indicate a link ID. The Power Management Mode subfield is configured to indicate that the first power management mode for the affiliated STA corresponding to the link with the link ID i is the active mode or the power save mode. The Capability Adaptation Power Save Control subfield is configured to indicate that the first power management mode of the affiliated STA corresponding to the link with the link ID i is a non-dynamic capability adaptation power save mode or the dynamic capability adaptation power save mode.

In a possible design of this embodiment, the sixth control field also carries at least one of:
a first Capability Operation Parameter Information subfield, or a second Capability Operation Parameter Information subfield; wherein, capabilities corresponding to the first Capability Operation Parameter Information subfield are lower than capabilities corresponding to the second Capability Operation Parameter Information subfield.

Exemplarily, the first Capability Operation Parameter Information subfield is a Low-Capability Operation Parameter Information field, and the second Capability Operation Parameter Information subfield is a High-Capability Operation Parameter Information field.

In a possible design of this embodiment, a format adopted by the first Capability Operation Parameter Information subfield includes: a Mode Index subfield or a first Capability Operation Parameter subfield, wherein the first Capability Operation Parameter subfield is configured to indicate one or more operation parameters in the first capability operation mode. A format adopted by the second Capability Operation Parameter Information subfield includes: a Mode Index subfield or a second Capability Operation Parameter subfield, wherein the second Capability Operation Parameter subfield is configured to indicate one or more operation parameters in the second capability operation mode. Capabilities corresponding to the first capability operation mode are lower than capabilities corresponding to the second capability operation mode. A mode index value of the Mode Index subfield is configured to indicate one or more operation parameters corresponding to a Capability Adaptation Power Save Operation Mode Parameter Control subfield carrying the mode index value.

Exemplarily, the first Capability Operation Parameter subfield is a Low-Capability Operation Mode Parameter subfield, and the second Capability Operation Parameter subfield is a High-Capability Operation Mode Parameter subfield.

FIG. 19 is a schematic diagram of a format of the Cross-Link Power Management Mode Control subfield according to some embodiments of the present disclosure. The Cross-Link Power Management Mode Control subfield includes at least one of: a Link ID field, a Power Management Mode field, a Capability Adaptation Power Save Control field, a Capability Adaptation Power Save Delay Parameter field, a Low-Capability Operation Parameter Information field, or a High-Capability Operation Parameter Information field. For specific implementation details, reference may be made to the embodiment of FIG. 19, which are not elaborated herein.

The Low-Capability Operation Parameter Information field adopts one of the following two formats:
1) A Mode Index subfield, wherein a value of the Mode Index subfield is configured to indicate corresponding operation parameters defined by the Capability Adaptation Power Save Operation Mode Parameter Control subfield carrying the value. The Capability Adaptation Power Save Operation Mode Parameter Control subfield is configured to define the operation parameters corresponding to a specified low-capability operation that the STA may adopt upon enabling (or entering into) the capability adaptation power save operation mode, and a corresponding operation mode of the low-capability operation may be identified by a mode index.
2) A Low-Capability Operation Mode Parameter subfield, which is referenced in the description of the embodiment in FIG. 15 and is not repeated herein.

The High-Capability Operation Parameter Information field adopts one of the following two formats:
1) A Mode Index subfield, wherein a value of the Mode Index subfield is configured to indicate corresponding operation parameters defined by the Capability Adaptation Power Save Operation Mode Parameter Control subfield carrying the value. The Capability Adaptation Power Save Operation Mode Parameter Control subfield is configured to define the operation parameters corresponding to a specified high-capability operation that the STA may adopt upon enabling (or entering into) the capability adaptation power save operation mode, and a corresponding operation mode of the high-capability operation may be identified by a mode index.
2) A High-capability Operation Mode Parameter subfield, which refers to the description of the embodiment in FIG. 16 and is not repeated herein.

### Capability Adaptation Power Save Operation Mode Parameter Control subfield:

The Capability Adaptation Power Save Operation Mode Parameter Control subfield is configured to define operation parameters corresponding to a specified low-capability operation or high-capability operation that the STA may adopt upon enabling (or entering into) a capability adaptation power save operation mode, and an operation mode corresponding to the low-capability operation or high-capability operation may be identified by a mode index. A format of the Capability Adaptation Power Save Operation Mode Parameter Control subfield is illustrated in FIG. 20. FIG. 20 is a schematic diagram of the format of the Capability Adaptation Power Save Operation Mode Parameter Control subfield according to some embodiments of the present disclosure, wherein the Capability Adaptation Power Save Operation Mode Parameter Control subfield includes at least one of: a Mode Index field, an Operation Bandwidth field, a Supported Highest-Order Modulation Corresponding MCS Index field, an RX NSS field, a TX NSTS field, or a Supported PPDU Format field. For specific implementation details, reference may be made to the embodiment illustrated in FIG. 20, which are not elaborated herein.

**An actual activation time point at which an affiliated STA corresponding to the first multi-link device on a second link enters a first power management mode:**

In the above designs, a peer device associated with the first multi-link device is a second multi-link device. The actual activation time point at which the affiliated STA corresponding to the first multi-link device on the second link enters the first power management mode is determined based on one of:
a first time point (i.e., an end of a second PPDU), wherein the second PPDU carries an acknowledgment for the first frame or for a second frame, the second frame is transmitted by the second multi-link device on the second link or the first link, and is configured to respond to the first frame; a second time point (i.e., a transition timeout time point or an expected activation time point of the first power management mode), wherein the expected activation time point is a time point at which the affiliated STA corresponding to the first multi-link device on the second link is expected to enter the first power management mode; or a third time point at which the affiliated STA corresponding to the first multi-link device on the second link completes frame exchange.

In a possible design of this embodiment, the actual activation time point at which the affiliated STA corresponding to the first multi-link device on the first link enters the first power management mode is determined based on one of:
a first time point (i.e., an end of a second PPDU), wherein the second PPDU carries an acknowledgment for the first frame or for a second frame, the second frame is transmitted by the second multi-link device on the first link, and is configured to respond to the first frame; a second time point (i.e., a transition timeout time point or an expected activation time point of the first power management mode), wherein the expected activation time point is a time point at which the affiliated STA corresponding to the first link of the first multi-link device is expected to enter the first power management mode; or a third time point at which the affiliated STA corresponding to the first link of the first multi-link device completes frame exchange.

The expected activation time point is a time point at which an affiliated STA corresponding to at least one link of a plurality of links is expected to enter the first power management mode, and the at least one link includes the first link and/or the second link.

The first power management mode is applicable to a specific link, and this link is any one of one or more links. The first power management mode corresponding to each link may be the same or different. The actual activation time point corresponding to each link may be the same or different. While the present disclosure mainly uses, as an example for description, the first power management mode for the affiliated STA corresponding to the second link, the present disclosure is also applicable to the first power management mode for the affiliated STA corresponding to the first link, which is not limited in the embodiments of the present disclosure.

### First time point:

In a possible design of this embodiment, in a case where the second PPDU carries an acknowledgment for the second frame, as illustrated in FIG. 21, the second multi-link device is an AP MLD, the second link is link1, the first frame is a first Multi-Link Power Management Mode Indication Notification frame, the second frame is the second first Multi-Link Power Management Mode Indication Notification frame, and the second PPDU acts as a second acknowledgment frame.

The second Multi-Link Power Management Mode Indication Notification frame is transmitted by an affiliated AP (i.e., AP1) of the AP MLD on link1. An affiliated STA corresponding to the first multi-link device on the second link is STA1. The actual activation time point at which STA1 enters the first power management mode is an end of the second acknowledgment frame.

In a possible design of this embodiment, in a case where the second PPDU carries an acknowledgment for the first frame, as illustrated in FIG. 22, the second PPDU is a Block Acknowledgment frame, the second link is link4, an affiliated STA corresponding to the first multi-link device on the second link is STA4, and the actual activation time point at which STA4 enters the first power management mode is an end of the Block Acknowledgment frame.

In a possible design of this embodiment, the first time point is an end of the second PPDU, or an end of a signal extension following the second PPDU.

In a possible design of this embodiment, the first frame and/or the second frame are also configured to indicate an expected activation time point, wherein the expected activation time point is a time point at which an affiliated STA corresponding to the first multi-link device on at least one of the second link or the first link is expected to enter the first power management mode.

Exemplarily, in FIG. 21, the second Multi-Link Power Management Mode Indication Notification frame serves as the second frame, and is configured to indicate the expected activation time point of the first power management mode, and the expected activation time point is an end of the second acknowledgment frame; while in FIG. 22, the first frame is configured to indicate the expected activation time point of the first power management mode, and the expected activation time point is an end of the Block Acknowledgment frame.

In a possible design of this embodiment, the second frame carries at least one of: a first indication time subfield, configured to indicate an expected activation time point of the first power management mode, wherein the expected activation time point is a time point at which the affiliated STA corresponding to the first multi-link device on the second link is expected to enter the first power management mode; or a first duration subfield, configured to indicate a duration required for the first power management mode to remain activated as expected, wherein the duration starts from an end of the second PPDU or from an end of a signal extension following the second PPDU. For specific implementation details, reference may be made to the embodiment illustrated in FIG. 8, which are not elaborated herein.

In a possible design of this embodiment, the second frame carries at least one of: a first indication time subfield, configured to indicate an expected activation time point of the first power management mode, wherein the expected activation time point is a time point at which the affiliated STA corresponding to the first multi-link device on the first link is expected to enter the first power management mode; or a first duration subfield, configured to indicate a duration required for the first power management mode to remain activated as expected, wherein the duration starts from an end of the second PPDU or from an end of a signal extension following the second PPDU.

In a possible design of this embodiment, a second STA enters the first power management mode at a time point corresponding to a first determination delay following the first time point, in a case where the second STA is not a transmission opportunity (TXOP) holder or a TXOP responder; wherein the second STA is one of a plurality of affiliated STAs of the first multi-link device, and the second STA is associated with the second link, and the first determination delay is caused by the second STA determining whether the second STA is the TXOP holder or the TXOP responder.

In a possible design of this embodiment, a first STA enters the first power management mode at a time point corresponding to a first determination delay following the first time point, in a case where the first STA is not a TXOP holder or a TXOP responder; wherein the first STA is one of a plurality of affiliated STAs of the first multi-link device, and the first STA is associated with the first link, and the first determination delay is caused by the first STA determining whether the first STA is the TXOP holder or the TXOP responder.

In a possible design of this embodiment, the actual activation time point for the second STA to enter the first power management mode is a time point corresponding to the first determination delay following the first time point, in a case where the second STA is not a TXOP holder or a TXOP responder; wherein the second STA is one of a plurality of affiliated STAs of the first multi-link device, and the second STA is associated with the second link, and the first determination delay is caused by the second STA determining whether the second STA is the TXOP holder or the TXOP responder.

In a possible design of this embodiment, the actual activation time point for the first STA to enter the first power management mode is a time point corresponding to the first determination delay following the first time point, in a case where the first STA is not a TXOP holder or a TXOP responder; wherein the first STA is one of a plurality of affiliated STAs of the first multi-link device, and the first STA is associated with the second link, and the first determination delay is caused by the first STA determining whether the first STA is the TXOP holder or the TXOP responder.

In a case where the actual activation time point is the first time point, the STA may enter the first power management mode upon reception of an acknowledgment, without waiting for an excessively long period of time.

### Second time point:

In a possible design of this embodiment, at the second time point, a second STA enters the first power management mode, wherein the second STA is one of a plurality of affiliated STAs of the first multi-link device, and the second STA is associated with the second link.

In a possible design of this embodiment, at the second time point, a first STA enters the first power management mode, wherein the first STA is one of a plurality of affiliated STAs of the first multi-link device, and the first STA is associated with the first link.

In a possible design of this embodiment, the actual activation time point at which the second STA enters the first power management mode is the second time point, wherein the second STA is one of a plurality of affiliated STAs of the first multi-link device, and the second STA is associated with the second link.

In a possible design of this embodiment, the actual activation time point at which the first STA enters the first power management mode is the second time point, wherein the first STA is one of a plurality of affiliated STAs of the first multi-link device, and the first STA is associated with the first link.

In a possible design of this embodiment, the first multi-link device receives a third frame from the second multi-link device prior to the transmission of the first frame by the first multi-link device, wherein the third frame is configured to indicate a transition timeout time point.

In a possible design of this embodiment, prior to the transmission of the first frame by the first multi-link device, the second multi-link device transmits a third frame, which is configured to indicate a transition timeout time point.

In a possible design of this embodiment, the transition timeout time point is indicated by a transition timeout period after a first moment, wherein the first moment is an end of the first PPDU or an end of a signal extension following the first PPDU, and the first PPDU carries an acknowledgment for the first frame.

As illustrated in FIG. 23, the first multi-link device is a non-AP MLD, the second multi-link device is an AP MLD, the second STA is STA1, the first frame is a Multi-Link Power Management Mode Indication Notification frame, the third frame is a Beacon frame, and the first PPDU is an acknowledgment frame. In a case where the first moment is an end of the first PPDU, the transition timeout time point is indicated by the transition timeout period after the end of the first PPDU.

The transition timeout time point is an actual time point at which the power management mode transition of STA1 becomes active or takes effect. At the transition timeout time point, STA1 enters the first power management mode.

As illustrated in FIG. 24, the first multi-link device is a non-AP MLD, the second multi-link device is an AP MLD, the second STA is STA2, the third frame is a Beacon frame, and the first PPDU is a Block Acknowledgment frame. In a case where the first moment is an end of the first PPDU, the transition timeout time point is indicated by the transition timeout period after the end of the first PPDU.

The transition timeout time point is an actual time point at which the power management mode transition of STA2 becomes active or takes effect. At the transition timeout time point, STA2 enters the first power management mode.

In a possible design of this embodiment, in a case where the second STA neither initiates nor engages in frame exchange at the expected activation time point, the second STA enters the first power management mode at the second time point. The expected activation time point is a time point at which the affiliated STA, corresponding to the first multi-link device on the second link, is expected to enter the first power management mode.

In a possible design of this embodiment, in a case where the first STA neither initiates nor engages in frame exchange at the expected activation time point, the first STA enters the first power management mode at the second time point. The expected activation time point is a time point at which the affiliated STA, corresponding to the first multi-link device on the first link, is expected to enter the first power management mode.

In a possible design of this embodiment, in the case where the second STA neither initiates nor engages in frame exchange at the expected activation time point, the actual activation time point at which the second STA enters the first power management mode is the second time point. The expected activation time point is a time point at which the affiliated STA, corresponding to the first multi-link device on the second link, is expected to enter the first power management mode.

In a possible design of this embodiment, in the case where the first STA neither initiates nor engages in frame exchange at the expected activation time point, the actual activation time point at which the first STA enters the first power management mode is the second time point. The expected activation time point is a time point at which the affiliated STA, corresponding to the first multi-link device on the first link, is expected to enter the first power management mode.

In a possible design of this embodiment, in the case where the second STA neither initiates nor engages in frame exchange at the expected activation time point, the second STA enters the first power management mode at a time point corresponding to a second determination delay after the second time point. The second determination delay is caused by the first multi-link device determining whether the frame exchange is initiated with the second multi-link device.

In a possible design of this embodiment, in the case where the first STA neither initiates nor engages in frame exchange at the expected activation time point, the first STA enters the first power management mode at a time point corresponding to a second determination delay after the second time point. The second determination delay is caused by the first multi-link device determining whether the frame exchange is initiated with the second multi-link device.

In a possible design of this embodiment, in the case where the second STA neither initiates nor engages in frame exchange at the expected activation time point, the actual activation time point at which the second STA enters the first power management mode is a time point corresponding to the second determination delay after the second time point. The second determination delay is caused by the first multi-link device determining whether the frame exchange is initiated with the second multi-link device.

In a possible design of this embodiment, in the case where the first STA neither initiates nor engages in frame exchange at the expected activation time point, the actual activation time point at which the first STA enters the first power management mode is a time point corresponding to the second determination delay after the second time point. The second determination delay is caused by the first multi-link device determining whether the frame exchange is initiated with the second multi-link device.

In a possible design of this embodiment, in the case where the second STA neither initiates nor engages in frame exchange at the expected activation time point, the second STA may no longer initiate frame exchange during a currently acquired TXOP.

In a possible design of this embodiment, the frame exchange is not initiated in a case where the second STA determines that a received PPDU is not transmitted to the second STA itself.

In a case where the actual activation time point is the second time point, the STA enters the first power management mode after the transition timeout period, without waiting for the channel to exit a busy state, thereby reducing wait time.

### Third time point:

In a possible design of this embodiment, in a case where the second STA initiates or engages in frame exchange at the expected activation time point, and/or where the second STA is a TXOP holder, the second STA enters the first power management mode at a third time point. The second STA is one of a plurality of affiliated STAs of the first multi-link device, and the second STA is associated with the second link. The expected activation time point is a time point at which the affiliated STA, corresponding to the first multi-link device on the second link, is expected to enter the first power management mode.

In a possible design of this embodiment, in a case where the first STA initiates or engages in frame exchange at the expected activation time point, and/or where the first STA is a TXOP holder, the first STA enters the first power management mode at a third time point. The first STA is one of a plurality of affiliated STAs of the first multi-link device, and the first STA is associated with the first link. The expected activation time point is a time point at which the affiliated STA, corresponding to the first multi-link device on the first link, is expected to enter the first power management mode.

In a possible design of this embodiment, in the case where the second STA initiates or engages in frame exchange at the expected activation time point, and/or where the second STA is a TXOP holder, the actual activation time point at which the second STA enters the first power management mode is the third time point. The second STA is one of a plurality of affiliated STAs of the first multi-link device, and the second STA is associated with the second link. The expected activation time point is a time point at which the affiliated STA, corresponding to the first multi-link device on the second link, is expected to enter the first power management mode.

In a possible design of this embodiment, in the case where the first STA initiates or engages in frame exchange at the expected activation time point, and/or where the first STA is a TXOP holder, the actual activation time point at which the first STA enters the first power management mode is the third time point. The first STA is one of a plurality of affiliated STAs of the first multi-link device, and the first STA is associated with the first link. The expected activation time point is a time point at which the affiliated STA, corresponding to the first multi-link device on the first link, is expected to enter the first power management mode.

As illustrated in FIG. 25, the first multi-link device is a non-AP MLD, the second multi-link device is an AP MLD, the second STA is STA1, the expected activation time point is the transition timeout time point, and the third time point is the time point at which the second STA completes frame exchange. Since the first multi-link device and the second multi-link device do not complete frame exchange at the transition timeout time point, STA1 enters the first power management mode at the time point when frame exchange is completed.

As illustrated in FIG. 26, the first multi-link device is a non-AP MLD, the second multi-link device is an AP MLD, the second STA is STA1, the expected activation time point is the transition timeout time point, and the third time point is the time point at which the second STA completes frame exchange. Since the first multi-link device and the second multi-link device do not complete frame exchange at the transition timeout time point, STA1 enters the first power management mode at the time point when frame exchange is completed.

In a possible design of this embodiment, a second AP does not actively initiate frame exchange with the second STA prior to the expected activation time point, in a case where the second AP is the TXOP holder. The second AP is an affiliated AP of the second multi-link device, and the second AP is associated with the second link.

In a possible design of this embodiment, a first AP does not actively initiate frame exchange with the first STA prior to the expected activation time point, in a case where the first AP is the TXOP holder. The second AP is an affiliated AP of the second multi-link device, and the first AP is associated with the first link.

In a possible design of this embodiment, the frame exchange is initiated in a case where the second STA determines that a received PPDU is transmitted to the second STA itself.

In a possible design of this embodiment, the frame exchange is initiated by the first multi-link device or by the second multi-link device.

In a case where the actual activation time point is the third time point, the STA enters the first power management mode upon completion of the frame exchange, such that normal execution of the frame exchange is not affected.

### Expected activation time point:

The first power management mode is applicable to a specific link, and this link is any one of one or more links. The first power management mode corresponding to each link may be the same or different. The expected activation time point corresponding to each link may be the same or different. While the present disclosure mainly uses, as an example for description, the first power management mode for the affiliated STA corresponding to the second link, the present disclosure is also applicable to the first power management mode for the affiliated STA corresponding to the first link, which is not limited in the embodiments of the present disclosure.

In a possible design of this embodiment, the expected activation time point is determined based on at least one of:
the first time point; a transition timeout time point of the first power management mode; or a field in the first frame configured to indicate the expected activation time point. The expected activation time point is a time point at which the affiliated STA, corresponding to the first multi-link device on at least one of the second link or the first link, is expected to enter the first power management mode. The transition timeout time point is indicated by a third frame transmitted by a second multi-link device.

### The expected activation time point is determined based on the first time point:

In a possible design of this embodiment, in a case where the first frame does not carry a field for indicating the expected activation time point and the first multi-link device receives the second frame, the expected effective time point is determined based on the first time point.

In a case where the first frame is a Multi-Link Power Management Mode Indication Notification frame, a Power Management Indication Time subfield and/or an Expected Duration subfield is assumed to be absent in a Multi-Link Power Management Mode Indication element, and the first multi-link device receives the second frame from the second multi-link device, the expected activation time point is determined based on the first time point.

The first time point is an end of a second PPDU, which carries an acknowledgment for the first frame or for the second frame. The second frame is transmitted by the second multi-link device on the second link or the first link and is configured to respond to the first frame. For specific implementation details, reference may be made to the above embodiments related to the first time point, which are not elaborated herein.

### The expected activation time point is determined based on the transition timeout time point of the first power management mode:

In a possible design of this embodiment, in a case where the first frame does not carry a field for indicating the expected activation time point and the first multi-link device does not receive the second frame, the expected activation time point is determined based on the transition timeout time point of the first power management mode.

In a case where the first frame is a Multi-Link Power Management Mode Indication Notification frame, a Power Management Indication Time subfield and/or an Expected Duration subfield is assumed to be absent in a Multi-Link Power Management Mode Indication element, and the first multi-link device does not receive the second frame from the second multi-link device, the expected activation time point is determined based on the transition timeout time point of the first power management mode.

Specifically, a transition timeout period starts from an end of PPDU[+SigExt]. Herein, "PPDU" represents a first PPDU transmitted by the second multi-link device and carries an acknowledgment in response to the Multi-Link Power Management Mode Indication Notification frame. In a case where a signal extension is present, "PPDU[+SigExt]" represents the first PPDU plus a signal extension following the first PPDU. In a case where the signal extension is absent, "PPDU[+SigExt]" represents the first PPDU.

As illustrated in FIG. 4, in a case where the first frame is the first Multi-Link Power Management Mode Indication Notification frame, the first PPDU is the first acknowledgment frame in response to the first Multi-Link Power Management Mode Indication Notification frame. In a case where the signal extension is absent, the transition timeout period starts from the end of the first acknowledgment frame.

In a case where the first frame carries multi-link power management mode indication information, and where an Expected Activation Duration subfield is not included in a Multi-Link Power Management Mode Control subfield, and/or a Multi-Link Dynamic Power Save Mode Enabling Control subfield, and/or a Cross-link Power Management Mode Control subfield carried by the first multi-link device, or where a value of the carried Expected Activation Duration subfield is 0, the expected activation time point is determined based on the transition timeout time point of the first power management mode.

Specifically, a transition timeout period starts from an end of PPDU[+SigExt]. Herein, "PPDU" represents the first PPDU transmitted by the second multi-link device and carries an acknowledgment in response to the first frame. In a case where a signal extension is present, "PPDU[+SigExt]" represents the first PPDU plus a signal extension following the first PPDU. In a case where the signal extension is absent, "PPDU[+SigExt]" represents the first PPDU.

As illustrated in FIG. 5, in a case where the first frame carries multi-link power management mode indication information, the first PPDU is the second frame in response to the first frame and carries an acknowledgment for the first frame. In this case, the second frame is both the first PPDU and the second PPDU. In a case where the signal extension is absent, the transition timeout period starts from an end of the second frame.

**The expected activation time point is determined based on the field for indicating the expected activation time point.**

In a possible design of this embodiment, in a case where the first frame carries a field for indicating the expected activation time point, the expected activation time point is determined based on the field for indicating the expected activation time point.

In a case where the first frame is a Multi-Link Power Management Mode Indication Notification frame, and a Power Management Indication Time subfield and/or an Expected Duration subfield is present in a Multi-Link Power Management Mode Indication element, the expected activation time point is determined based on the Power Management Indication Time subfield and/or the Expected Duration subfield.

In a case where the first frame carries multi-link power management mode indication information, and an Expected Activation Duration subfield is included in a Multi-Link Power Management Mode Control subfield, and/or a Multi-Link Dynamic Power Save Mode Enabling Control subfield, and/or a Cross-link Power Management Mode Control subfield carried by the first multi-link device, the expected activation time point is determined based on the Expected Activation Duration subfield.

Specifically, the expected activation duration starts from an end of the PPDU[+SigExt]. Herein, "PPDU" represents the first PPDU transmitted by the second multi-link device and carries an acknowledgment to the first frame. In a case where a signal extension is present, "PPDU[+SigExt]" represents the first PPDU plus a signal extension following the first PPDU. In a case where the signal extension is absent, "PPDU[+SigExt]" represents the first PPDU.

Since the order of magnitude of the expected activation duration is usually milliseconds and the order of magnitude of the transition timeout period is usually microseconds, the expected activation duration is generally longer than the transition timeout period.

As illustrated in FIG. 5, in a case where the first frame carries multi-link power management mode indication information, the first PPDU acts as a second frame in response to the first frame and carries an acknowledgment for the first frame. In this case, the second frame is both the first PPDU and the second PPDU. In a case where the signal extension is absent, the transition timeout period starts from an end of the second frame.

In a possible design of this embodiment, the first frame is a Multi-Link Power Management Mode Indication Notification frame, which carries a Power Management Indication Time subfield and/or an Expected Duration subfield. The Power Management Indication Time subfield and/or the Expected Duration subfield is configured to indicate the expected activation time point, and the actual activation time point at which the affiliated STA, corresponding to the first multi-link device on the second link, enters the first power management mode is the expected activation time point.

As illustrated in FIG. 27, the first multi-link device is a non-AP MLD, the second multi-link device is an AP MLD, the affiliated STA corresponding to the first multi-link device on the second link is STA1, the first frame is a Multi-Link Power Management Mode Indication Notification frame, which carries a Power Management Indication Time subfield and/or an Expected Duration subfield, and the Power Management Indication Time subfield and/or the Expected Duration subfield is configured to indicate the expected activation time point.

The expected activation time point is the same as the actual time point at which the power management mode transition of STA1 takes effect or becomes active, and thus, at the expected activation time point, STA1 enters the first power management mode.

For the above multi-link power management mode, in a case where a first multi-link device (i.e., a non-AP MLD) is associated with a second multi-link device (i.e., an AP MLD) and establishes a plurality of links (such as link1 and link2) with the AP MLD, the non-AP MLD (or the AP MLD) is enabled to indicate, via a multi-link (or cross-link) power management mode indication operation, the multi-link power management mode for an affiliated STA corresponding to an established (or enabled) link of the MLD, or indicate that a multi-link power management mode operation of the corresponding affiliated STA is changing, and/or whether to enable a dynamic power save operation. Rules of the multi-link (or cross-link) power management mode indication operation are described hereinafter.
1. For the multi-link (or cross-link) power management mode indication initiated by the first multi-link device (non-AP MLD), in a case where an affiliated STA (e.g., STA1) of the first multi-link device is indicated to be in a first power management mode and the power management mode of the STA is required to be switched from an active mode to an indicated power save mode, or from an awake state in a dynamic power save mode to a doze state, or from an active mode to an awake state in a dynamic power save mode, or from an awake state in one dynamic power save mode to an awake state in another dynamic power save mode as indicated (for example, dynamic power save operation parameters such as low-capability operation parameters or high-capability operation parameters are updated), at least one of the following rules is required to be followed.
   (1) At an expected activation time point (T0) of the power management mode, in a case where an affiliated STA of a non-AP MLD is neither a TXOP holder nor a TXOP responder, the affiliated STA enters the indicated power management mode after T0 + a determination delay (abbreviated as "T-delay"), wherein the determination delay is a possible delay caused by the affiliated STA determining that the affiliated STA is not the TXOP holder or the TXOP responder. In some embodiments, the determination delay may be 0.
      In a possible design of this embodiment, in a case where the affiliated STA is receiving a PPDU at the expected activation time point, the affiliated STA enters the indicated power management mode upon confirming that the PPDU is not transmitted to the affiliated STA itself. That is, the determination delay is a time interval from the expected activation time point to a time point at which the PPDU is confirmed not to be transmitted to the affiliated STA itself.
   (2) At an expected activation time point of the power management mode, in a case where an affiliated AP, corresponding to an AP MLD associated with an affiliated STA (set as STA1) of a non-AP MLD, is a TXOP holder and has initiated frame exchange with STA1, STA1 enters the indicated power management mode upon completion of the frame exchange.
      In a possible design of this embodiment, in a case where an affiliated STA is receiving a PPDU at the expected activation time point, the affiliated STA participates in frame exchange upon confirming that the PPDU is transmitted to the affiliated STA itself, until the end of the frame exchange; and STA1 enters the indicated power management mode upon completion of the frame exchange.
   (3) At an expected activation time point of the power management mode, in a case where an affiliated STA (set as STA1) of a non-AP MLD is a TXOP holder and has initiated or is initiating frame exchange with an AP, STA1 enters the indicated power management mode upon completion of the frame exchange (or completion of the TXOP).
   (4) At an expected activation time point of the power management mode, in a case where an affiliated AP (set as AP1), corresponding to an AP MLD associated with an affiliated STA (STA1) of a non-AP MLD, is a TXOP holder and has not initiated frame exchange with STA1 or is transmitting a PPDU which does not carry a frame transmitted to STA1, AP1 no longer initiates frame exchange with STA1 during a currently acquired TXOP.
2. For the multi-link (or cross-link) power management mode indication initiated by the first multi-link device (non-AP MLD), in a case where an affiliated STA (set as STA1) of the first multi-link device is indicated to change the power management mode, and the power management mode of the STA is switched from a current power save mode (i.e., a doze state or an awake state) or the doze state, to an indicated active mode or an awake state in a dynamic power save mode, at least one of the following rules is required to be followed.
   (1) At an expected activation time point of the power management mode, in a case where an affiliated STA (set as STA1) of a non-AP MLD is a TXOP holder, and/or has initiated or is initiating frame exchange with an AP, STA1 enters the indicated power management mode upon completion of the frame exchange (or completion of the TXOP); or in a case where STA1 does not initiate frame exchange with the AP, STA1 enters the indicated power management mode at the expected activation time point.
   (2) Prior to the expected activation time point of the power management mode, in a case where an affiliated AP (set as AP1) of an AP MLD associated with an affiliated STA (STA1) of a non-AP MLD is a TXOP holder, AP1 does not actively initiate frame exchange with STA1.
3. For the multi-link (or cross-link) power management mode indication initiated by the first multi-link device (non-AP MLD), in a case where an affiliated STA (set as STA1) of the first multi-link device is indicated to change the power management mode and the power management mode of the STA is required to be switched from an awake state of a dynamic power save mode to an active mode, or from an awake state in one dynamic power save mode to an awake state in another dynamic power save mode as indicated (for example, dynamic power save operation parameters such as low-capability operation parameters or high-capability operation parameters are updated), at least one of the following rules is required to be followed.
   (1) At an expected activation time point of the power management mode, in a case where the affiliated STA (set as STA1) of a non-AP MLD is in frame exchange with an affiliated AP of an AP MLD associated with STA1, STA1 enters the indicated power management mode upon completion of the frame exchange (or completion of a TXOP).
   (2) At an expected activation time point of the power management mode, in a case where STA1 is not in frame exchange with the AP, STA1 enters the indicated power management mode after the expected activation time point + a determination delay, wherein the determination delay is a possible delay caused by STA1 determining whether STA1 is currently participating in the frame exchange with the AP. In some embodiments, the determination delay may be 0.

In a possible design of this embodiment, in a case where the affiliated STA is receiving a PPDU at the expected activation time point, the STA enters the indicated power management mode upon confirming that the PPDU is not transmitted to the STA itself. That is, the determination delay is a time interval from an expected activation time point to the time of confirming that the PPDU is not transmitted to the STA itself.

### Capability information of the second multi-link device:

In a possible design of this embodiment, the first multi-link device receives capability information from a second multi-link device, wherein the second multi-link device is a peer device associated with the first multi-link device, and the capability information is configured to indicate that the second multi-link device supports cross-link power management capability or multi-link power management capability.

In a possible design of this embodiment, the second multi-link device transmits capability information, wherein the capability information is configured to indicate that the second multi-link device supports cross-link power management capability or multi-link power management capability.

In a possible design of this embodiment, a Multi-Link Power Management Mode Indication Capability subfield may be configured to indicate that the second multi-link device supports the cross-link power management capability or the multi-link power management capability.

The Multi-Link Power Management Mode Indication Capability subfield indicates whether a multi-link (or cross-link) power management mode is supported and also indicates a multi-link power management mode indication transition timeout period. A basic multi-link element includes the Multi-Link Power Management Mode Indication Capability subfield, and the basic multi-link element is carried in a management frame. Exemplarily, a Multi-Link Power Management Mode Indication Capability subfield is added to a Public Information field of the Basic Multi-Link element, as illustrated in FIG. 28.

### Public Information field of the Basic Multi-Link element:

FIG. 28 is a schematic diagram of a format of the Public Information field of the Basic Multi-Link element according to some embodiments of the present disclosure. The Public Information field of the Basic Multi-Link element includes at least one of: a Public Information Length field, an MLD MAC Address field, a Link ID Information field, a BSS Parameter Change Count field, a Media Synchronization Delay Information field, an Enhanced Multi-Link (EML) Capability field, an MLD Capability And Operation field, an AP MLD ID field, an Extended MLD Capability And Operation field, or a Multi-Link Power Management Mode Indication Capability field. For specific implementation details, reference may be made to the embodiment illustrated in FIG. 28, which are not elaborated herein.

### Multi-Link Power Management Mode Indication Capability field:

For the above Multi-Link Power Management Mode Indication Capability field (or subfield), FIG. 29 is a schematic diagram of a format of the Multi-Link Power Management Mode Indication Capability field according to some embodiments of the present disclosure. The Multi-Link Power Management Mode Indication Capability field includes at least one of: a Multi-Link Power Management Mode Indication Support field, a Multi-Link Power Management Mode Indication Transition Timeout field, and a Reserved field. For specific implementation details, reference may be made to the embodiment illustrated in FIG. 29, which are not elaborated herein.

The present disclosure is illustrated by using an example where one transmitting module 3010, one processing module 3020, and one receiving module 3030 are provided, without limiting the number of the transmitting modules 3010, the number of the processing modules 3020, and the number of the receiving modules 3030.

A description of functions of the transmitting module 3010 may be referenced in step 310 of the embodiment of FIG. 3. A description of functions of the processing module 3020 may be referenced in step 310 of the embodiment of FIG. 3. A description of functions of the receiving module 3030 may be referenced in step 310 of the embodiment of FIG. 3.

FIG. 31 is a block diagram of a second multi-link device according to some embodiments of the present disclosure. The device may be implemented as the second MLD or as a part of the second MLD through software, hardware, or a combination thereof. The second multi-link device has established and/or enabled one link or a plurality of links with a first multi-link device, and the plurality of links include a first link and a second link.

The second multi-link device includes: a receiving module 3010, configured to receive a first frame from a first MLD on the first link, wherein the first frame is configured to indicate a first power management mode for at least one of an affiliated STA corresponding to the first multi-link device on the second link or an affiliated STA corresponding to the first multi-link device on the first link; the second link is different from the first link in the plurality of links, and the first multi-link device is a peer apparatus associated with the second multi-link device.

In a possible design of this embodiment, the first frame is "configured to indicate a first power management mode for at least one of an affiliated STA corresponding to the second link or an affiliated STA corresponding to the first link," which may be equivalently understood or alternatively understood as any one of: configured to indicate that a multi-link power management mode operation is changing for at least one of the affiliated STA corresponding to the second link or the affiliated STA corresponding to the first link; configured to indicate that at least one of the affiliated STA corresponding to the second link or the affiliated STA corresponding to the first link is required to switch from a current power management mode to the first power management mode; or, configured to indicate whether to enable a dynamic (capability adaptation) power save operation for at least one of the affiliated STA corresponding to the second link or the affiliated STA corresponding to the first link. The embodiments of the present disclosure does not impose any restrictions on the understanding of the first frame, and the present disclosure is usually illustrated by taking "the first frame is configured to indicate a first power management mode for at least one an affiliated STA corresponding to the second link or an affiliated STA corresponding to the first link" as an example.

The first power management mode is applicable to a specific link, and this link is any one of the "one link or a plurality of links" between the first MLD and the second MLD. The first power management mode corresponding to each link may be the same or different. While the present disclosure mainly uses, as an example for description, the first power management mode for the affiliated STA corresponding to the second link, the present disclosure is also applicable to the first power management mode for the affiliated STA corresponding to the first link, which is not limited in the embodiments of the present disclosure.

In a possible design of this embodiment, the second link is one link different from the first link, or the second link includes a plurality of links different from the first link.

In a possible design of this embodiment, the first power management mode includes at least one of: an active mode, or a power save mode. An entity in the active mode means that the entity is always in an awake state or is in a constant awake state. An entity in the power save mode means that the entity is in the awake state, a doze state, or an unavailable state.

The power management mode includes at least one of: an active mode indicating a constant awake state, or a power save mode indicating an awake state, a doze state, or an unavailable state.

For the affiliated STA corresponding to each link, the first power management mode is one of the one or more power management modes as described above.

In a case where the affiliated STA is in the awake state, the affiliated STA may perform operations such as transmitting and receiving data, and monitoring channels. In a case where the affiliated STA is in the doze state, the affiliated STA fails to transmit or receive data but is capable of monitoring the channels. In a case where the affiliated STA is in the unavailable state, the affiliated STA fails to perform operations such as transmitting and receiving data, and monitoring the channels.

In a possible design of this embodiment, the power save mode includes a fully powered power save mode or a capability adaptation power save mode, wherein the capability adaptation power save mode includes a static capability adaptation power save mode or a dynamic capability adaptation power save mode.

By way of example rather than limitation, the awake state in the power save mode includes at least one of: an awake state in the dynamic capability adaptation power save mode; an awake state in the static capability adaptation power save mode; or an awake state in the fully powered power save mode.

In the awake state in the fully powered power save mode, the affiliated STA maintains operations in either a full-capability operation mode or a high-capability operation mode. That is, the affiliated STA performs, within a supported capability range, operations such as transmitting and receiving data and monitoring channels by adopting a higher bandwidth, more receive chains, more spatial streams, a higher data rate, a higher-order MCS, and a PPDU format with high processing overhead. The fully powered power save mode may also be referred to as a non-capability adaptation power save mode or a fully powered mode.

In the awake state in the static capability adaptation power save mode, the affiliated STA merely maintains operations in a low-capability operation mode. That is, the affiliated STA performs operations such as transmitting and receiving data and monitoring channels by adopting a low bandwidth, fewer receive chains, fewer spatial streams, a lower data rate, a lower-order MCS, and a PPDU format with low processing overhead. The static capability adaptation power save mode may also be referred to as a non-dynamic capability adaptation power save mode.

In the awake state in the dynamic capability adaptation power save mode, the affiliated STA usually operates in a low-capability operation mode. Upon receiving a specific frame transmitted to the affiliated STA (such as an initial frame including an initial control frame or any other frame defined for mode switching), the affiliated STA switches to the high-capability (or full-capability) operation mode based on an indication of the specific frame, and switches back to the low-capability operation mode upon completion of a current frame exchange.

In a possible design of this embodiment, the dynamic capability adaptation power save mode has the same meaning as a dynamic power save mode, the non-dynamic capability adaptation power save mode has the same meaning as a non-dynamic power save mode, and the static capability adaptation power save mode has the same meaning as a static power save mode.

By refining specific types of the first power management mode, the present disclosure, compared with the related art in which the power management mode only includes an active mode and a power save mode, enables a more precise indication of the power management mode for the MLD, supports a simultaneous change of the power management mode for the affiliated STAs on all links or part of the links, and also supports a precise change of the power management mode for the affiliated STA on one or more links. The first power management modes of the affiliated STAs on different links upon the change may be different. For example, upon the change of the power management mode, an affiliated STA (STA1) on link1 transitions into a static capability adaptation power save mode, and an affiliated STA (STA2) on link2 transitions into a dynamic capability adaptation power save mode, such that different power management modes are used according to actual needs in different application scenarios.

The present disclosure provides two design schemes for the first frame. In a design scheme 1, the first frame is a Multi-Link Power Management Mode Indication Notification frame, and in a design scheme 2, the first frame is any frame which carries multi-link power management mode indication information.

The design scheme 1 designs a new dedicated frame, which is configured to indicate the first power management mode for at least one of the affiliated STA corresponding to the second link or the affiliated STA corresponding to the first link.

The design scheme 2 is based on a conventional frame format, customizes one or more control fields in the conventional frame format, and indicates, based on the one or more control fields, the first power management mode for at least one of the affiliated STA corresponding to the second link or the affiliated STA corresponding to the first link.

Description is given hereinafter by taking an example where the first frame is the Multi-Link Power Management Mode Indication Notification frame.

A first multi-link device (such as a non-AP MLD) that supports a multi-link power management mode indication, upon determining a power management mode for an affiliated STA corresponding to an established link (or an enabled link) of the first MLD, and determining operation parameters to be adopted in the corresponding power management mode, may transmit a Multi-Link Power Management Mode Indication Notification frame to a second MLD (such as an AP MLD associated with the non-AP MLD), as illustrated in FIG. 4.

FIG. 4 is a schematic diagram of a multi-link power management mode indication according to some embodiments of the present disclosure. In an example where the first multi-link device is a non-AP MLD and the second multi-link device is an AP MLD, two links (link1 and link2) are successfully established between the non-AP MLD and the AP MLD, link1 and link2 of the non-AP MLD are both enabled links, and affiliated STAs (STA1 and STA2) corresponding to the two links are both in a fully powered state in the active mode.

In a case where the non-AP MLD prepares to change a power management state of STA1, that is, STA1 prepares to switch from the active mode to another power management mode (such as a dynamic capability adaptation power save mode), the non-AP MLD may transmit a Multi-Link Power Management Mode Indication Notification frame to the AP MLD on link2.

Exemplarily, the affiliated STA (STA2) of the non-AP MLD transmits a first Multi-Link Power Management Mode Indication Notification frame to an affiliated AP (AP2) of the AP MLD on link2, and AP2, upon receiving the first Multi-Link Power Management Mode Indication Notification frame, transmits a first acknowledgment frame. In some embodiments, an interval between the first acknowledgment frame and the first Multi-Link Power Management Mode Indication Notification frame is an SIFS.

By way of example rather than limitation, the Multi-Link Power Management Mode Indication Notification frame carries a Link Identifier subfield and a Power Management subfield. The Link Identifier subfield is configured to indicate a link identifier of link1. For example, a value of 1 in the Link Identifier subfield corresponds to link1; and a value of 1 in the Power Management subfield indicates that STA1 is to be in a power save mode.

By way of example rather than limitation, the Multi-Link Power Management Mode Indication Notification frame carries a Capability Adaptation Power Save Enabled field and a Capability Adaptation Power Save Mode field. In a case where the Capability Adaptation Power Save Enabled field is set to 1, STA1 is instructed to enable a capability adaptation power save mode. In a case where the Capability Adaptation Power Save Mode field is set to 1, STA1 is instructed to enter or transition into a dynamic capability adaptation power save mode.

In a possible design of this embodiment, in a case where the second multi-link device (such as the AP MLD) has received the first Multi-Link Power Management Mode Indication Notification frame, and in response to the received first Multi-Link Power Management Mode Indication Notification frame, the second multi-link device may transmit a second Multi-Link Power Management Mode Indication Notification frame to the first multi-link device (such as the non-AP MLD) via link1 or link2 within a multi-link power management mode indication transition timeout (or called a transition timeout) period. This case is applied to at least one of the following rules:
1) In a possible design of this embodiment, a management frame (such as a Beacon frame or an Association Response frame) transmitted by an affiliated AP of the second multi-link device carries a Multi-Link Power Management Mode Indication Transition Timeout subfield. The Multi-Link Power Management Mode Indication Transition Timeout subfield is configured to indicate a multi-link power management mode indication transition timeout period.
   For example, in FIG. 4, the Beacon frame transmitted by AP1 carries the Multi-Link Power Management Mode Indication Transition Timeout subfield.
   Except for Authentication frames transmitted by the affiliated APs of the second MLD, basic multi-link elements in all management frames carrying the basic multi-link elements may include the Multi-Link Power Management Mode Indication Transition Timeout subfield in a Multi-Link Power Management Mode Indication Capability subfield.
2) In a possible design of this embodiment, the multi-link power management mode indication transition timeout period starts from an end of PPDU[+SigExt]. Herein, "PPDU" represents a first PPDU transmitted by the second multi-link device and carries an acknowledgment (ACK) in response to the first Multi-Link Power Management Mode Indication Notification frame. In a case where a signal extension is present, "PPDU[+SigExt]" represents the first PPDU plus the signal extension following the PPDU. In a case where the signal extension is absent, "PPDU[+SigExt]" represents the first PPDU.
   As illustrated in FIG. 4, the first PPDU acts as a first acknowledgment frame corresponding to the first Multi-Link Power Management Mode Indication Notification frame. In a case where the signal extension is absent, the multi-link power management mode indication transition timeout period (abbreviated as a transition timeout period) starts from the end of the first PPDU, and a length of the transition timeout period is indicated by the Multi-Link Power Management Mode Indication Transition Timeout subfield as described above.
3) In a possible design of this embodiment, subfields in the second Multi-Link Power Management Mode Indication Notification frame have the same values as the subfields in the first Multi-Link Power Management Mode Indication Notification frame.

Exemplarily, a value of a Multi-Link Power Management Mode Indication Control subfield in the second Multi-Link Power Management Mode Indication Notification frame is the same as a value of the Multi-Link Power Management Mode Indication Control subfield in the first Multi-Link Power Management Mode Indication Notification frame; and a value of a Link Power Management Mode Indication Information subfield in the second Multi-Link Power Management Mode Indication Notification frame is the same as a value of a Link Power Management Mode Indication Information subfield in the first Multi-Link Power Management Mode Indication Notification frame.

The value of the subfield in the second Multi-Link Power Management Mode Indication Notification frame is the same as the value of the subfield in the first Multi-Link Power Management Mode Indication Notification frame, which is an optional design. In other designs, a portion of the subfields of the first Multi-Link Power Management Mode Indication Notification frame and the second Multi-Link Power Management Mode Indication Notification frame may be the same, and another portion of the subfields may be different; or, all of the subfields of the first Multi-Link Power Management Mode Indication Notification frame and the second Multi-Link Power Management Mode Indication Notification frame may be the same; or, the subfields in the second Multi-Link Power Management Mode Indication Notification frame may not include any subfield in the first Multi-Link Power Management Mode Indication Notification frame, which is not limited in the embodiments of the present disclosure.

In the case that the first frame is the Multi-Link Power Management Mode Indication Notification frame, a new Multi-Link Power Management Mode Indication Notification frame is designed as a dedicated frame to indicate the multi-link power management mode for the affiliated STA, such that a reliability of information transmission is improved and a possibility of conflict with other information transmission is reduced.

Description is given hereinafter by taking an example where the first frame carries the multi-link power management mode indication information.

In a possible design of this embodiment, the first frame is a PPDU carrying one or more individually addressed QoS data frames, one or more individually addressed QoS null frames, or one or more individually addressed class 3 management frames.

In a possible design of this embodiment, a multi-link power management mode indication operation is used to indicate a multi-link power management mode for an affiliated STA corresponding to an established link (or an enabled link) of a first multi-link device; or that a multi-link power management mode operation of the corresponding affiliated STA is changing; and/or whether to enable a dynamic power save operation.

In a possible design of this embodiment, an MLD or an affiliated STA of the MLD that transmits the first frame is defined as an initiator of the multi-link power management mode indication operation; and an MLD or an affiliated STA of the MLD that receives the first frame is defined as a responder of the multi-link power management mode indication operation.

The first frame includes a Multi-Link Power Management Mode Control subfield, and/or a Multi-Link Dynamic Power Save Mode Enabling Control subfield, and/or a Cross-Link Power Management Mode Control subfield.

FIG. 5 is a schematic diagram of a multi-link power management mode indication according to some embodiments of the present disclosure. A first multi-link device (e.g., a non-AP MLD) as the initiator of the multi-link power management mode indication operation may transmit a first frame to a second multi-link device (e.g., an AP MLD) on one of established links (or enabled links). The first frame is a PPDU carrying one or more individually addressed QoS data frames, one or more individually addressed QoS null frame, or one or more individually addressed class 3 management frames. The first multi-link device requests the second multi-link device as the responder of the multi-link power management mode indication operation to immediately confirm a change of a multi-link power management mode operation and/or a dynamic power save operation. Upon receiving the first frame, the second multi-link device transmits a second frame (e.g., an acknowledgment frame) as a response to the request of the first multi-link device. In some embodiments, an interval between the second frame and the first frame is an SIFS.

In the case that the first frame carries the multi-link power management mode indication information, no new design of a dedicated frame is required for the transmission of the multi-link power management mode indication information. Instead, based on a conventional frame format, one or more control fields may be customized in the conventional frame format, and the first power management mode for the affiliated STA corresponding to at least one of the second link or the first link, may be indicated via the control fields, enabling better utilization of the conventional frame format.

In the case where the first frame is the Multi-Link Power Management Mode Indication Notification frame, for descriptions of formats of Multi-Link Power Management Mode Indication elements associated with the first frame, reference may be made to the embodiment of the first multi-link device, which are not elaborated herein.

In a case where the first frame carries multi-link power management mode indication information, for descriptions of formats of control subfields related to the multi-link power management mode indication, reference may be made to the embodiment of the first multi-link device, which are not elaborated herein.

**An actual activation time point at which an affiliated STA corresponding to the first multi-link device on a second link enters a first power management mode:**
In the above designs, a peer device associated with the first multi-link device is a second multi-link device. The actual activation time point at which the affiliated STA corresponding to the first multi-link device on the second link enters the first power management mode is determined based on one of:
a first time point (i.e., an end of a second PPDU), wherein the second PPDU carries an acknowledgment for the first frame or for a second frame, the second frame is transmitted by the second multi-link device on the second link or the first link, and is configured to respond to the first frame; a second time point (i.e., a transition timeout time point or an expected activation time point of the first power management mode), wherein the expected activation time point is a time point at which the affiliated STA corresponding to the first multi-link device on the second link is expected to enter the first power management mode; or a third time point at which the affiliated STA corresponding to the first multi-link device on the second link completes frame exchange.

In a possible design of this embodiment, the actual activation time point at which the affiliated STA corresponding to the first multi-link device on the first link enters the first power management mode is determined based on one of:
a first time point (i.e., an end of a second PPDU), wherein the second PPDU carries an acknowledgment for the first frame or for a second frame, the second frame is transmitted by the second multi-link device on the first link, and is configured to respond to the first frame; a second time point (i.e., a transition timeout time point or an expected activation time point of the first power management mode), wherein the expected activation time point is a time point at which the affiliated STA corresponding to the first link of the first multi-link device is expected to enter the first power management mode; or a third time point at which the affiliated STA corresponding to the first link of the first multi-link device completes frame exchange.

The expected activation time point is a time point at which an affiliated STA corresponding to at least one link of a plurality of links is expected to enter the first power management mode, and the at least one link includes the first link and/or the second link.

The first power management mode is applicable to a specific link, and this link is any one of one or more links. The first power management mode corresponding to each link may be the same or different. The actual activation time point corresponding to each link may be the same or different. While the present disclosure mainly uses, as an example for description, the first power management mode for the affiliated STA corresponding to the second link, the present disclosure is also applicable to the first power management mode for the affiliated STA corresponding to the first link, which is not limited in the embodiments of the present disclosure.

### First time point:

In a possible design of this embodiment, in a case where the second PPDU carries an acknowledgment for the second frame, as illustrated in FIG. 21, the second multi-link device is an AP MLD, the second link is link1, the first frame is a first Multi-Link Power Management Mode Indication Notification frame, the second frame is the second first Multi-Link Power Management Mode Indication Notification frame, and the second PPDU acts as a second acknowledgment frame.

The second Multi-Link Power Management Mode Indication Notification frame is transmitted by an affiliated AP (i.e., AP1) of the AP MLD on link1. An affiliated STA corresponding to the first multi-link device on the second link is STA1. The actual activation time point at which STA1 enters the first power management mode is an end of the second acknowledgment frame.

In a possible design of this embodiment, in a case where the second PPDU carries an acknowledgment for the first frame, as illustrated in FIG. 22, the second PPDU is a Block Acknowledgment frame, the second link is link4, an affiliated STA corresponding to the first multi-link device on the second link is STA4, and the actual activation time point at which STA4 enters the first power management mode is an end of the Block Acknowledgment frame.

In a possible design of this embodiment, the first time point is an end of the second PPDU, or an end of a signal extension following the second PPDU.

In a possible design of this embodiment, the first frame and/or the second frame are also configured to indicate an expected activation time point, wherein the expected activation time point is a time point at which an affiliated STA corresponding to the first multi-link device on at least one of the second link or the first link is expected to enter the first power management mode.

Exemplarily, in FIG. 21, the second Multi-Link Power Management Mode Indication Notification frame serves as the second frame, and is configured to indicate the expected activation time point of the first power management mode, and the expected activation time point is an end of the second acknowledgment frame; while in FIG. 22, the first frame is configured to indicate the expected activation time point of the first power management mode, and the expected activation time point is an end of the Block Acknowledgment frame.

In a possible design of this embodiment, the second frame carries at least one of: a first indication time subfield, configured to indicate an expected activation time point of the first power management mode, wherein the expected activation time point is a time point at which the affiliated STA corresponding to the first multi-link device on the second link is expected to enter the first power management mode; or a first duration subfield, configured to indicate a duration required for the first power management mode to remain activated as expected, wherein the duration starts from an end of the second PPDU or from an end of a signal extension following the second PPDU. For specific implementation details, reference may be made to the embodiment illustrated in FIG. 8, which are not elaborated herein.

In a possible design of this embodiment, the second frame carries at least one of: a first indication time subfield, configured to indicate an expected activation time point of the first power management mode, wherein the expected activation time point is a time point at which the affiliated STA corresponding to the first multi-link device on the first link is expected to enter the first power management mode; or a first duration subfield, configured to indicate a duration required for the first power management mode to remain activated as expected, wherein the duration starts from an end of the second PPDU or from an end of a signal extension following the second PPDU.

In a possible design of this embodiment, a second STA enters the first power management mode at a time point corresponding to a first determination delay following the first time point, in a case where the second STA is not a transmission opportunity (TXOP) holder or a TXOP responder; wherein the second STA is one of a plurality of affiliated STAs of the first multi-link device, and the second STA is associated with the second link, and the first determination delay is caused by the second STA determining whether the second STA is the TXOP holder or the TXOP responder.

In a possible design of this embodiment, a first STA enters the first power management mode at a time point corresponding to a first determination delay following the first time point, in a case where the first STA is not a TXOP holder or a TXOP responder; wherein the first STA is one of a plurality of affiliated STAs of the first multi-link device, and the first STA is associated with the first link, and the first determination delay is caused by the first STA determining whether the first STA is the TXOP holder or the TXOP responder.

In a possible design of this embodiment, the actual activation time point for the second STA to enter the first power management mode is a time point corresponding to the first determination delay following the first time point, in a case where the second STA is not a TXOP holder or a TXOP responder; wherein the second STA is one of a plurality of affiliated STAs of the first multi-link device, and the second STA is associated with the second link, and the first determination delay is caused by the second STA determining whether the second STA is the TXOP holder or the TXOP responder.

In a possible design of this embodiment, the actual activation time point for the first STA to enter the first power management mode is a time point corresponding to the first determination delay following the first time point, in a case where the first STA is not a TXOP holder or a TXOP responder; wherein the first STA is one of a plurality of affiliated STAs of the first multi-link device, and the first STA is associated with the second link, and the first determination delay is caused by the first STA determining whether the first STA is the TXOP holder or the TXOP responder.

In a case where the actual activation time point is the first time point, the STA may enter the first power management mode upon reception of an acknowledgment, without waiting for an excessively long period of time.

### Second time point:

In a possible design of this embodiment, at the second time point, a second STA enters the first power management mode, wherein the second STA is one of a plurality of affiliated STAs of the first multi-link device, and the second STA is associated with the second link.

In a possible design of this embodiment, at the second time point, a first STA enters the first power management mode, wherein the first STA is one of a plurality of affiliated STAs of the first multi-link device, and the first STA is associated with the first link.

In a possible design of this embodiment, the actual activation time point at which the second STA enters the first power management mode is the second time point, wherein the second STA is one of a plurality of affiliated STAs of the first multi-link device, and the second STA is associated with the second link.

In a possible design of this embodiment, the actual activation time point at which the first STA enters the first power management mode is the second time point, wherein the first STA is one of a plurality of affiliated STAs of the first multi-link device, and the first STA is associated with the first link.

In a possible design of this embodiment, the first multi-link device receives a third frame from the second multi-link device prior to the transmission of the first frame by the first multi-link device, wherein the third frame is configured to indicate a transition timeout time point.

In a possible design of this embodiment, prior to the transmission of the first frame by the first multi-link device, the second multi-link device transmits a third frame, which is configured to indicate a transition timeout time point.

In a possible design of this embodiment, the transition timeout time point is indicated by a transition timeout period after a first moment, wherein the first moment is an end of the first PPDU or an end of a signal extension following the first PPDU, and the first PPDU carries an acknowledgment for the first frame.

As illustrated in FIG. 23, the first multi-link device is a non-AP MLD, the second multi-link device is an AP MLD, the second STA is STA1, the first frame is a Multi-Link Power Management Mode Indication Notification frame, the third frame is a Beacon frame, and the first PPDU is an acknowledgment frame. In a case where the first moment is an end of the first PPDU, the transition timeout time point is indicated by the transition timeout period after the end of the first PPDU.

The transition timeout time point is an actual time point at which the power management mode transition of STA1 becomes active or takes effect. At the transition timeout time point, STA1 enters the first power management mode.

As illustrated in FIG. 24, the first multi-link device is a non-AP MLD, the second multi-link device is an AP MLD, the second STA is STA2, the third frame is a Beacon frame, and the first PPDU is a Block Acknowledgment frame. In a case where the first moment is an end of the first PPDU, the transition timeout time point is indicated by the transition timeout period after the end of the first PPDU.

The transition timeout time point is an actual time point at which the power management mode transition of STA2 becomes active or takes effect. At the transition timeout time point, STA2 enters the first power management mode.

In a possible design of this embodiment, in a case where the second STA neither initiates nor engages in frame exchange at the expected activation time point, the second STA enters the first power management mode at the second time point. The expected activation time point is a time point at which the affiliated STA, corresponding to the first multi-link device on the second link, is expected to enter the first power management mode.

In a possible design of this embodiment, in a case where the first STA neither initiates nor engages in frame exchange at the expected activation time point, the first STA enters the first power management mode at the second time point. The expected activation time point is a time point at which the affiliated STA, corresponding to the first multi-link device on the first link, is expected to enter the first power management mode.

In a possible design of this embodiment, in the case where the second STA neither initiates nor engages in frame exchange at the expected activation time point, the actual activation time point at which the second STA enters the first power management mode is the second time point. The expected activation time point is a time point at which the affiliated STA, corresponding to the first multi-link device on the second link, is expected to enter the first power management mode.

In a possible design of this embodiment, in the case where the first STA neither initiates nor engages in frame exchange at the expected activation time point, the actual activation time point at which the first STA enters the first power management mode is the second time point. The expected activation time point is a time point at which the affiliated STA, corresponding to the first multi-link device on the first link, is expected to enter the first power management mode.

In a possible design of this embodiment, in the case where the second STA neither initiates nor engages in frame exchange at the expected activation time point, the second STA enters the first power management mode at a time point corresponding to a second determination delay after the second time point. The second determination delay is caused by the first multi-link device determining whether the frame exchange is initiated with the second multi-link device.

In a possible design of this embodiment, in the case where the first STA neither initiates nor engages in frame exchange at the expected activation time point, the first STA enters the first power management mode at a time point corresponding to a second determination delay after the second time point. The second determination delay is caused by the first multi-link device determining whether the frame exchange is initiated with the second multi-link device.

In a possible design of this embodiment, in the case where the second STA neither initiates nor engages in frame exchange at the expected activation time point, the actual activation time point at which the second STA enters the first power management mode is a time point corresponding to the second determination delay after the second time point. The second determination delay is caused by the first multi-link device determining whether the frame exchange is initiated with the second multi-link device.

In a possible design of this embodiment, in the case where the first STA neither initiates nor engages in frame exchange at the expected activation time point, the actual activation time point at which the first STA enters the first power management mode is a time point corresponding to the second determination delay after the second time point. The second determination delay is caused by the first multi-link device determining whether the frame exchange is initiated with the second multi-link device.

In a possible design of this embodiment, in the case where the second STA neither initiates nor engages in frame exchange at the expected activation time point, the first multi-link device is no longer to initiate frame exchange during a currently acquired TXOP.

In a possible design of this embodiment, the frame exchange is not initiated in a case where the second STA determines that a received PPDU is not transmitted to the second STA itself.

In a case where the actual activation time point is the second time point, the STA enters the first power management mode after the transition timeout period, without waiting for the channel to exit a busy state, thereby reducing wait time.

A third time point:
In a possible design of this embodiment, in a case where the second STA initiates or engages in frame exchange at the expected activation time point, and/or where the second STA is a TXOP holder, the second STA enters the first power management mode at a third time point. The second STA is one of a plurality of affiliated STAs of the first multi-link device, and the second STA is associated with the second link. The expected activation time point is a time point at which the affiliated STA, corresponding to the first multi-link device on the second link, is expected to enter the first power management mode.

In a possible design of this embodiment, in a case where the first STA initiates or engages in frame exchange at the expected activation time point, and/or where the first STA is a TXOP holder, the first STA enters the first power management mode at a third time point. The first STA is one of a plurality of affiliated STAs of the first multi-link device, and the first STA is associated with the first link. The expected activation time point is a time point at which the affiliated STA, corresponding to the first multi-link device on the first link, is expected to enter the first power management mode.

In a possible design of this embodiment, in the case where the second STA initiates or engages in frame exchange at the expected activation time point, and/or where the second STA is a TXOP holder, the actual activation time point at which the second STA enters the first power management mode is the third time point. The second STA is one of a plurality of affiliated STAs of the first multi-link device, and the second STA is associated with the second link. The expected activation time point is a time point at which the affiliated STA, corresponding to the first multi-link device on the second link, is expected to enter the first power management mode.

In a possible design of this embodiment, in the case where the first STA initiates or engages in frame exchange at the expected activation time point, and/or where the first STA is a TXOP holder, the actual activation time point at which the first STA enters the first power management mode is the third time point. The first STA is one of a plurality of affiliated STAs of the first multi-link device, and the first STA is associated with the first link. The expected activation time point is a time point at which the affiliated STA, corresponding to the first multi-link device on the first link, is expected to enter the first power management mode.

As illustrated in FIG. 25, the first multi-link device is a non-AP MLD, the second multi-link device is an AP MLD, the second STA is STA1, the expected activation time point is the transition timeout time point, and the third time point is the time point at which the second STA completes frame exchange. Since the first multi-link device and the second multi-link device do not complete frame exchange at the transition timeout time point, STA1 enters the first power management mode at the time point when frame exchange is completed.

As illustrated in FIG. 26, the first multi-link device is a non-AP MLD, the second multi-link device is an AP MLD, the second STA is STA1, the expected activation time point is the transition timeout time point, and the third time point is the time point at which the second STA completes frame exchange. Since the first multi-link device and the second multi-link device do not complete frame exchange at the transition timeout time point, STA1 enters the first power management mode at the time point when frame exchange is completed.

In a possible design of this embodiment, a second AP does not actively initiate frame exchange with the second STA prior to the expected activation time point, in a case where the second AP is the TXOP holder. The second AP is an affiliated AP of the second multi-link device, and the second AP is associated with the second link.

In a possible design of this embodiment, a first AP does not actively initiate frame exchange with the first STA prior to the expected activation time point, in a case where the first AP is the TXOP holder. The second AP is an affiliated AP of the second multi-link device, and the first AP is associated with the first link.

In a possible design of this embodiment, the frame exchange is initiated in a case where the second STA determines that a received PPDU is transmitted to the second STA itself.

In a possible design of this embodiment, the frame exchange is initiated by the first multi-link device or by the second multi-link device.

In a case where the actual activation time point is the third time point, the STA enters the first power management mode upon completion of the frame exchange, such that normal execution of the frame exchange is not affected.

### Expected activation time point:

The first power management mode is applicable to a specific link, and this link is any one of one or more links. The first power management mode corresponding to each link may be the same or different. The expected activation time point corresponding to each link may be the same or different. While the present disclosure mainly uses, as an example for description, the first power management mode for the affiliated STA corresponding to the second link, the present disclosure is also applicable to the first power management mode for the affiliated STA corresponding to the first link, which is not limited in the embodiments of the present disclosure.

In a possible design of this embodiment, the expected activation time point is determined based on at least one of:
the first time point; a transition timeout time point of the first power management mode; or a field in the first frame configured to indicate the expected activation time point. The expected activation time point is a time point at which the affiliated STA, corresponding to the first multi-link device on at least one of the second link or the first link, is expected to enter the first power management mode. The transition timeout time point is indicated by a third frame transmitted by a second multi-link device.

### The expected activation time point is determined based on the first time point:

In a possible design of this embodiment, in a case where the first frame does not carry a field for indicating the expected activation time point and the first multi-link device receives the second frame, the expected effective time point is determined based on the first time point.

In a case where the first frame is a Multi-Link Power Management Mode Indication Notification frame, a Power Management Indication Time subfield and/or an Expected Duration subfield is assumed to be absent in a Multi-Link Power Management Mode Indication element, and the first multi-link device receives the second frame from the second multi-link device, the expected activation time point is determined based on the first time point.

The first time point is an end of a second PPDU, which carries an acknowledgment for the first frame or for the second frame. The second frame is transmitted by the second multi-link device on the second link or the first link and is configured to respond to the first frame. For specific implementation details, reference may be made to the above embodiments related to the first time point, which are not elaborated herein.

**The expected activation time point is determined based on the transition timeout time point of the first power management mode:**
In a possible design of this embodiment, in a case where the first frame does not carry a field for indicating the expected activation time point and the first multi-link device does not receive the second frame, the expected activation time point is determined based on the transition timeout time point of the first power management mode.

In a case where the first frame is a Multi-Link Power Management Mode Indication Notification frame, a Power Management Indication Time subfield and/or an Expected Duration subfield is assumed to be absent in a Multi-Link Power Management Mode Indication element, and the first multi-link device does not receive the second frame from the second multi-link device, the expected activation time point is determined based on the transition timeout time point of the first power management mode.

Specifically, a transition timeout period starts from an end of PPDU[+SigExt]. Herein, "PPDU" represents a first PPDU transmitted by the second multi-link device and carries an acknowledgment in response to the Multi-Link Power Management Mode Indication Notification frame. In a case where a signal extension is present, "PPDU[+SigExt]" represents the first PPDU plus a signal extension following the first PPDU. In a case where the signal extension is absent, "PPDU[+SigExt]" represents the first PPDU.

As illustrated in FIG. 4, in a case where the first frame is the first Multi-Link Power Management Mode Indication Notification frame, the first PPDU is the first acknowledgment frame in response to the first Multi-Link Power Management Mode Indication Notification frame. In a case where the signal extension is absent, the transition timeout period starts from the end of the first acknowledgment frame.

In a case where the first frame carries multi-link power management mode indication information, and where an Expected Activation Duration subfield is not included in a Multi-Link Power Management Mode Control subfield, and/or a Multi-Link Dynamic Power Save Mode Enabling Control subfield, and/or a Cross-Link Power Management Mode Control subfield carried by the first multi-link device, or where a value of the carried Expected Activation Duration subfield is 0, the expected activation time point is determined based on the transition timeout time point of the first power management mode.

Specifically, a transition timeout period starts from an end of PPDU[+SigExt]. Herein, "PPDU" represents the first PPDU transmitted by the second multi-link device and carries an acknowledgment in response to the first frame. In a case where a signal extension is present, "PPDU[+SigExt]" represents the first PPDU plus a signal extension following the first PPDU. In a case where the signal extension is absent, "PPDU[+SigExt]" represents the first PPDU.

As illustrated in FIG. 5, in a case where the first frame carries multi-link power management mode indication information, the first PPDU is the second frame in response to the first frame and carries an acknowledgment for the first frame. In this case, the second frame is both the first PPDU and the second PPDU. In a case where the signal extension is absent, the transition timeout period starts from an end of the second frame.

**The expected activation time point is determined based on the field for indicating the expected activation time point.**
In a possible design of this embodiment, in a case where the first frame carries a field for indicating the expected activation time point, the expected activation time point is determined based on the field for indicating the expected activation time point.

In a case where the first frame is a Multi-Link Power Management Mode Indication Notification frame, and a Power Management Indication Time subfield and/or an Expected Duration subfield is present in a Multi-Link Power Management Mode Indication element, the expected activation time point is determined based on the Power Management Indication Time subfield and/or the Expected Duration subfield.

In a case where the first frame carries multi-link power management mode indication information, and an Expected Activation Duration subfield is included in a Multi-Link Power Management Mode Control subfield, and/or a Multi-Link Dynamic Power Save Mode Enabling Control subfield, and/or a Cross-Link Power Management Mode Control subfield carried by the first multi-link device, the expected activation time point is determined based on the Expected Activation Duration subfield.

Specifically, the expected activation duration starts from an end of the PPDU[+SigExt]. Herein, "PPDU" represents the first PPDU transmitted by the second multi-link device and carries an acknowledgment to the first frame. In a case where a signal extension is present, "PPDU[+SigExt]" represents the first PPDU plus a signal extension following the first PPDU. In a case where the signal extension is absent, "PPDU[+SigExt]" represents the first PPDU.

Since the order of magnitude of the expected activation duration is usually milliseconds and the order of magnitude of the transition timeout period is usually microseconds, the expected activation duration is generally longer than the transition timeout period.

As illustrated in FIG. 5, in a case where the first frame carries multi-link power management mode indication information, the second PPDU acts as a second frame in response to the first frame and carries an acknowledgment for the first frame. In this case, the second frame is both the first PPDU and the second PPDU. In a case where the signal extension is absent, the transition timeout period starts from an end of the second frame.

In a possible design of this embodiment, the first frame is a Multi-Link Power Management Mode Indication Notification frame, which carries a Power Management Indication Time subfield and/or an Expected Duration subfield. The Power Management Indication Time subfield and/or the Expected Duration subfield is configured to indicate the expected activation time point, and the actual activation time point at which the affiliated STA, corresponding to the first multi-link device on the second link, enters the first power management mode is the expected activation time point.

As illustrated in FIG. 27, the first multi-link device is a non-AP MLD, the second multi-link device is an AP MLD, the affiliated STA corresponding to the first multi-link device on the second link is STA1, the first frame is a Multi-Link Power Management Mode Indication Notification frame, which carries a Power Management Indication Time subfield and/or an Expected Duration subfield, and the Power Management Indication Time subfield and/or the Expected Duration subfield is configured to indicate the expected activation time point.

The expected activation time point is the same as the actual time point at which the power management mode transition of STA1 takes effect or becomes active, and thus, at the expected activation time point, STA1 enters the first power management mode.

For the above multi-link power management mode, in a case where a first multi-link device (i.e., a non-AP MLD) is associated with a second multi-link device (i.e., an AP MLD) and establishes a plurality of links (such as link1 and link2) with the AP MLD, the non-AP MLD (or the AP MLD) is enabled to indicate, via a multi-link (or cross-link) power management mode indication operation, the multi-link power management mode for an affiliated STA corresponding to an established (or enabled) link of the MLD, or indicate that a multi-link power management mode operation of the corresponding affiliated STA is changing, and/or whether to enable a dynamic power save operation. Rules of the multi-link (or cross-link) power management mode indication operation are described hereinafter.
1. For the multi-link (or cross-link) power management mode indication initiated by the first multi-link device (non-AP MLD), in a case where an affiliated STA (e.g., STA1) of the first multi-link device is indicated to be in a first power management mode and the power management mode of the STA is required to be switched from an active mode to an indicated power save mode, or from an awake state in a dynamic power save mode to a doze state, or from an active mode to an awake state in a dynamic power save mode, or from an awake state in one dynamic power save mode to an awake state in another dynamic power save mode as indicated (for example, dynamic power save operation parameters such as low-capability operation parameters or high-capability operation parameters are updated), at least one of the following rules is required to be followed.
   (1) At an expected activation time point (T0) of the power management mode, in a case where an affiliated STA of a non-AP MLD is neither a TXOP holder nor a TXOP responder, the affiliated STA enters the indicated power management mode after T0 + a determination delay (abbreviated as "T-delay"), wherein the determination delay is a possible delay caused by the affiliated STA determining that the affiliated STA is not the TXOP holder or the TXOP responder. In some embodiments, the determination delay may be 0.
      In a possible design of this embodiment, in a case where the affiliated STA is receiving a PPDU at the expected activation time point, the affiliated STA enters the indicated power management mode upon confirming that the PPDU is not transmitted to the affiliated STA itself. That is, the determination delay is a time interval from the expected activation time point to a time point at which the PPDU is confirmed not to be transmitted to the affiliated STA itself.
   (2) At an expected activation time point of the power management mode, in a case where an affiliated AP, corresponding to an AP MLD associated with an affiliated STA (set as STA1) of a non-AP MLD, is a TXOP holder and has initiated frame exchange with STA1, STA1 enters the indicated power management mode upon completion of the frame exchange.
      In a possible design of this embodiment, in a case where an affiliated STA is receiving a PPDU at the expected activation time point, the affiliated STA participates in frame exchange upon confirming that the PPDU is transmitted to the affiliated STA itself, until the end of the frame exchange; and STA1 enters the indicated power management mode upon completion of the frame exchange.
   (3) At an expected activation time point of the power management mode, in a case where an affiliated STA (set as STA1) of a non-AP MLD is a TXOP holder and has initiated or is initiating frame exchange with an AP, STA1 enters the indicated power management mode upon completion of the frame exchange (or completion of the TXOP).
   (4) At an expected activation time point of the power management mode, in a case where an affiliated AP (set as AP1), corresponding to an AP MLD associated with an affiliated STA (STA1) of a non-AP MLD, is a TXOP holder and has not initiated frame exchange with STA1 or is transmitting a PPDU which does not carry a frame transmitted to STA1, AP1 no longer initiates frame exchange with STA1 during a currently acquired TXOP.
2. For the multi-link (or cross-link) power management mode indication initiated by the first multi-link device (non-AP MLD), in a case where an affiliated STA (set as STA1) of the first multi-link device is indicated to change the power management mode, and the power management mode of the STA is switched from a current power save mode (i.e., a doze state or an awake state) or the doze state, to an indicated active mode or an awake state in a dynamic power save mode, at least one of the following rules is required to be followed.
   (1) At an expected activation time point of the power management mode, in a case where an affiliated STA (set as STA1) of a non-AP MLD is a TXOP holder, and/or has initiated or is initiating frame exchange with an AP, STA1 enters the indicated power management mode upon completion of the frame exchange (or completion of the TXOP); or in a case where STA1 does not initiate frame exchange with the AP, STA1 enters the indicated power management mode at the expected activation time point.
   (2) Prior to the expected activation time point of the power management mode, in a case where an affiliated AP (set as AP1) of an AP MLD associated with an affiliated STA (STA1) of a non-AP MLD is a TXOP holder, AP1 does not actively initiate frame exchange with STA1.
3. For the multi-link (or cross-link) power management mode indication initiated by the first multi-link device (non-AP MLD), in a case where an affiliated STA (set as STA1) of the first multi-link device is indicated to change the power management mode and the power management mode of the STA is required to be switched from an awake state of a dynamic power save mode to an active mode, or from an awake state in one dynamic power save mode to an awake state in another dynamic power save mode as indicated (for example, dynamic power save operation parameters such as low-capability operation parameters or high-capability operation parameters are updated), at least one of the following rules is required to be followed.
   (1) At an expected activation time point of the power management mode, in a case where the affiliated STA (set as STA1) of a non-AP MLD is in frame exchange with an affiliated AP of an AP MLD associated with STA1, STA1 enters the indicated power management mode upon completion of the frame exchange (or completion of a TXOP).
   (2) At an expected activation time point of the power management mode, in a case where STA1 is not in frame exchange with the AP, STA1 enters the indicated power management mode after the expected activation time point + a determination delay, wherein the determination delay is a possible delay caused by STA1 determining whether STA1 is currently participating in the frame exchange with the AP. In some embodiments, the determination delay may be 0.

In a possible design of this embodiment, in a case where the affiliated STA is receiving a PPDU at the expected activation time point, the STA enters the indicated power management mode upon confirming that the PPDU is not transmitted to the STA itself. That is, the determination delay is a time interval from an expected activation time point to the time of confirming that the PPDU is not transmitted to the STA itself.

### Capability information of the second multi-link device:

In a possible design of this embodiment, the first multi-link device receives capability information from a second multi-link device, wherein the second multi-link device is a peer apparatus associated with the first multi-link device, and the capability information is configured to indicate that the second multi-link device supports cross-link power management capability or multi-link power management capability.

In a possible design of this embodiment, the second multi-link device transmits capability information, wherein the capability information is configured to indicate that the second multi-link device supports cross-link power management capability or multi-link power management capability.

In a possible design of this embodiment, a Multi-Link Power Management Mode Indication Capability subfield may be configured to indicate that the second multi-link device supports the cross-link power management capability or the multi-link power management capability.

The Multi-Link Power Management Mode Indication Capability subfield indicates whether a multi-link (or cross-link) power management mode is supported and also indicates a multi-link power management mode indication transition timeout period. A basic multi-link element includes the Multi-Link Power Management Mode Indication Capability subfield, and the basic multi-link element is carried in a management frame. Exemplarily, a Multi-Link Power Management Mode Indication Capability subfield is added to a Public Information field of the Basic Multi-Link element, as illustrated in FIG. 28.

### Public Information field of the Basic Multi-Link element:

FIG. 28 is a schematic diagram of a format of the Public Information field of the Basic Multi-Link element according to some embodiments of the present disclosure. The Public Information field of the Basic Multi-Link element includes at least one of: a Public Information Length field, an MLD MAC Address field, a Link ID Information field, a BSS Parameter Change Count field, a Media Synchronization Delay Information field, an Enhanced Multi-Link (EML) Capability field, an MLD Capability And Operation field, an AP MLD ID field, an Extended MLD Capability And Operation field, or a Multi-Link Power Management Mode Indication Capability field. For specific implementation details, reference may be made to the embodiment illustrated in FIG. 28, which are not elaborated herein.

### Multi-Link Power Management Mode Indication Capability field:

For the above Multi-Link Power Management Mode Indication Capability field (or subfield), FIG. 29 is a schematic diagram of a format of the Multi-Link Power Management Mode Indication Capability field according to some embodiments of the present disclosure. The Multi-Link Power Management Mode Indication Capability field includes at least one of: a Multi-Link Power Management Mode Indication Support field, a Multi-Link Power Management Mode Indication Transition Timeout field, and a Reserved field. For specific implementation details, reference may be made to the embodiment illustrated in FIG. 29, which are not elaborated herein.

The present disclosure is illustrated by using an example where one receiving module 3110 and one transmitting module 3120 are provided, without limiting the number of the receiving modules 3110 and the number of the transmitting modules 3120.

For details about functionality of the receiving module 3110, reference may be made to step 610 in the embodiment illustrated in FIG. 6. For details about functionality of the transmitting module 3120, reference may be made to step 610 in the embodiment illustrated in FIG. 6.

FIG. 32 is a schematic structural diagram of a first MLD or a second MLD 3200 according to some embodiments of the present disclosure. The MLD 3200 includes a processor 3201, a receiver 3202, a transmitter 3203, a memory 3204, and a bus 3205.

The processor 3201 includes one or more processing cores. By running software programs and modules, the processor 3201 executes various functional applications and information processing. In some embodiments, the processor 3201 may be configured to implement the functions and steps of the processing module 3020.

The receiver 3202 and the transmitter 3203 may be implemented as a single communication component, which may be a communication chip and may be called a transceiver. In some embodiments, the receiver 3202 may be configured to implement the functions and steps of the receiving module 3030 and the receiving module 3110; and the transmitter 3203 may be configured to implement the functions and steps of the transmitting module 3010 and the transmitting module 3120.

The memory 3204 is communicably connected to the processor 3201 via the bus 3205.

The memory 3204 may be configured to store at least one instruction. The processor 3201 is configured to execute the at least one instruction to perform the various steps in the method embodiments described above.

Furthermore, the memory 3204 may be implemented by any type of volatile or non-volatile storage device or a combination thereof, including but not limited to: a magnetic or optical disk, an electrically erasable programmable read-only memory (EEPROM), an erasable programmable read-only memory (EPROM), a static random-access memory (SRAM), a read-only memory (ROM), a magnetic memory, a flash memory, and a programmable read-only memory (PROM).

In some embodiments, the receiver 3202 independently receives signals/data, or the processor 3201 controls the receiver 3202 to receive signals/data, or the processor 3201 requests the receiver 3202 to receive signals/data, or the processor 3201 cooperates with the receiver 3202 to receive signals/data.

In some embodiments, the transmitter 3203 independently transmits signals/data, or the processor 3201 controls the transmitter 3203 to transmit signals/data, or the processor 3201 requests the transmitter 3203 to transmit signals/data, or the processor 3201 cooperates with the transmitter 3203 to transmit signals/data.

FIG. 33 is a schematic structural diagram of a first MLD 3310 and a second MLD 3320 according to some embodiments of the present disclosure.

In some embodiments, the first MLD 3310 is a non-AP MLD, and the second MLD 3320 is an AP MLD; alternatively, the first MLD 3310 is an AP MLD, and the second MLD 3320 is a non-AP MLD. This embodiment is described by using an example where the first MLD 3310 is a non-AP MLD, and the second MLD 3320 is an AP MLD.

The first MLD 3310 includes at least two affiliated STAs, including a first affiliated STA and a second affiliated STA. The first MLD 3310 has established and/or enabled one link or a plurality of links with the second MLD 3320, wherein the plurality of links include a first link and a second link. The first affiliated STA is configured to transmit a first frame on the first link, wherein the first frame is configured to indicate a first power management mode for the affiliated STA(s) corresponding to at least one of the second link or the first link. Herein, the second link is different from the first link in the plurality of links, and the first MLD 3310 is a peer device associated with the second MLD.

For example, the at least two affiliated STAs may include STA1, STA2, ..., STA n, with STA1 serving as the first affiliated STA and STA2 serving as the second affiliated STA; the first link is designated as link1, and the second link is designated as link2; and STA1 is configured to transmit the first frame on link1, wherein the first frame is configured to indicate the first power management mode for at least one of STA2 or STA1.

The second MLD 3320 includes at least two affiliated STAs, including a third affiliated STA and a fourth affiliated STA. The second MLD 3320 has established and/or enabled one link or a plurality of links with the first MLD 3310, wherein the plurality of links include the first link and the second link. The third affiliated STA is configured to receive the first frame from the first MLD 3310 on the first link, wherein the first frame is configured to indicate the first power management mode for the affiliated STA(s) corresponding to the first multi-link device 3310 on at least one of the second link or the first link. Herein, the second link is a link different from the first link in the plurality of links, and a peer device associated with the second MLD 3320 is the first MLD 3310.

For example, the at least two affiliated STAs may include AP1, AP2, ..., APn, with AP1 serving as the third affiliated STA and AP2 serving as the fourth affiliated STA; the first link is designated as link1, and the second link is designated as link2; and AP1 is configured to receive the first frame from the first MLD 3310 on link1, wherein the first frame is configured to indicate the first power management mode for at least one of STA2 or STA1.

In an exemplary embodiment of the present disclosure, a computer-readable storage medium is also provided. The computer-readable storage medium stores at least one program. The at least one program, when loaded and executed by a processor, causes the processor to perform the method for power management on the first MLD or the method for power management on the second MLD according to the above method embodiments.

Some embodiments of the present disclosure further provide a chip. The chip includes programmable logic circuitry and/or one or more program instructions. The chip, when running on the first MLD, is configured to perform the method for power management on the first MLD according to the above method embodiments. The chip, when running on the second MLD, is configured to perform the method for power management on the second MLD according to the above method embodiments.

Some embodiments of the present disclosure further provide a computer program product. The computer program product includes one or more computer programs stored in a computer-readable storage medium. The one or more computer programs store one or more computer instructions therein. The one or more computer instructions, when loaded and executed by a processor, cause the processor to perform the method for power management on the first MLD according to the above method embodiments, or to perform the method for power management on the second MLD according to the above method embodiments.

A person of ordinary skill in the art should be aware that all or portions of the steps for implementing the aforementioned embodiments may be accomplished by hardware, or may be executed by instructing relevant hardware via a program. The program may be stored in a computer-readable storage medium. The storage medium may include a read-only memory (ROM), a magnetic disk, an optical disc, or the like.

Described above are merely optional embodiments of the present disclosure and are not used to limit the present disclosure. Any modifications, equivalent substitutions, improvements, and the like made within the spirit and principles of the present disclosure shall be included within the protection scope of the present disclosure.

## Claims

1. A method for power management, performed by a first multi-link device, MLD, wherein the first MLD has established and/or enabled one link or a plurality of links with a second MLD, the plurality of links comprising a first link and a second link,
the method comprising:
transmitting a first frame on the first link, wherein the first frame is configured to indicate a first power management mode for at least one of an affiliated station, STA, corresponding to the second link or an affiliated STA corresponding to the first link;
wherein the second link is different from the first link in the plurality of links.

2. The method according to claim 1, wherein the first power management mode comprises at least one of:
an active mode, indicating a constant awake state; or
a power save mode, indicating an awake state, a doze state, or an unavailable state.

3. The method according to claim 2, wherein the awake state in the power save mode comprises at least one of:
an awake state in a dynamic capability adaptation power save mode;
an awake state in a static capability adaptation power save mode; or
an awake state in a fully powered power save mode.

4. The method according to claim 2 or 3, wherein the power save mode comprises:
a fully powered power save mode; or
a capability adaptation power save mode, wherein the capability adaptation power save mode comprises a static capability adaptation power save mode or a dynamic capability adaptation power save mode.

5. The method according to any one of claims 1 to 4, wherein the first frame carries a control field, configured to indicate the first power management mode.

6. The method according to claim 5, wherein the control field comprises at least one of:
a first control field, configured to indicate that the first power management mode is an active mode or a power save mode;
a second control field, configured to indicate that the power save mode is a fully powered power save mode or a capability adaptation power save mode; or
a third control field, configured to indicate that the capability adaptation power save mode is a non-dynamic capability adaptation power save mode or a dynamic capability adaptation power save mode.

7. The method according to claim 6, wherein the first control field is a first bitmap field, wherein a bit position *i* in the first bitmap field corresponds to a link with a link identity, ID, *i*, and is configured to indicate that the first power management mode for the affiliated STA, corresponding to the link with the link ID *i*, is the active mode or the power save mode, *i* being an integer.

8. The method according to claim 6, wherein the second control field is a second bitmap field, wherein a bit position *i* in the second bitmap field corresponds to a link with a link identity, ID, *i*, and is configured to indicate that the first power management mode for the affiliated STA, corresponding to the link with the link ID *i*, is the fully powered power save mode or the capability adaptation power save mode, *i* being an integer.

9. The method according to claim 6, wherein the third control field is a third bitmap field, wherein a bit position *i* in the third bitmap field corresponds to a link with a link identity, ID, *i*, and is configured to indicate that the first power management mode for the affiliated STA, corresponding to the link with the link ID *i,* is the non-dynamic capability adaptation power save mode or the dynamic capability adaptation power save mode, *i* being an integer.

10. The method according to any one of claims 1 to 9, wherein the first frame is further configured to indicate one or more operation parameters to be adopted, in the first power management mode, by at least one of the affiliated STA corresponding to the second link or the affiliated STA corresponding to the first link.

11. The method according to any one of claims 1 to 10, wherein the first frame further carries at least one of:
a first indication time subfield, configured to indicate an expected activation time point for the first power management mode; or
a first duration subfield, configured to indicate a duration required for the first power management mode to remain activated as expected.

12. The method according to any one of claims 1 to 11, wherein the first frame is a Multi-Link Power Management Mode Indication Notification frame.

13. The method according to any one of claims 1 to 11, wherein the first frame carries multi-link power management mode indication information, and the first frame carries a control field, wherein the control field comprises at least one of:
a fourth control field, configured to indicate the first power management mode for an affiliated STA corresponding to each link of the plurality of links, wherein the first power management mode comprises an active mode or a power save mode;
a fifth control field, configured to indicate whether an affiliated STA corresponding to each link of the plurality of links is to enable a dynamic capability adaptation power save mode; or
a sixth control field, configured to indicate the first power management mode for an affiliated STA corresponding to a link with a link identity, ID, *i,* wherein the first power management mode is the active mode, the power save mode, or the dynamic capability adaptation power save mode.

14. The method according to claim 13, wherein the fourth control field comprises a fourth bitmap field, wherein a bit position *i* in the fourth bitmap field corresponds to a link with a link ID *i*, and is configured to indicate that the first power management mode for the affiliated STA corresponding to the link with the link ID *i* is the active mode or the power save mode, *i* being an integer.

15. The method according to claim 13, wherein the fifth control field comprises a fifth bitmap field, wherein a bit position *i* in the fifth bitmap field corresponds to a link with a link ID *i*, and is configured to indicate whether the first power management mode for the affiliated STA corresponding to the link with the link ID *i* is to enable the dynamic capability adaptation power save mode, *i* being an integer.

16. The method according to claim 13, wherein the sixth control field comprises at least one of:
a Link ID subfield, configured to indicate a link ID;
a Power Management Mode subfield, configured to indicate that the first power management mode for the affiliated STA corresponding to the link with the link ID *i* is the active mode or the power save mode; or
a Capability Adaptation Power Save Control subfield, configured to indicate that the first power management mode for the affiliated STA corresponding to the link with the link ID *i* is a non-dynamic capability adaptation power save mode or the dynamic capability adaptation power save mode.

17. The method according to any one of claims 13 to 16, wherein at least one of the fourth control field, the fifth control field, or the sixth control field comprises a Required Activation Duration subfield, wherein the Required Activation Duration subfield is configured to indicate a duration required for the first power management mode to be activated.

18. The method according to any one of claims 13 to 17, wherein the first frame is a physical layer protocol data unit, PPDU, carrying one or more individually addressed quality of service, QoS, data frames, one or more individually addressed QoS null frames, or one or more individually addressed class 3 management frames.

19. The method according to any one of claims 1 to 18, wherein an actual activation time point at which the affiliated STA corresponding to the first MLD on the second link enters the first power management mode, is determined based on one of:
a first time point, wherein the first time point is an end of a second physical layer protocol data unit, PPDU, wherein the second PPDU carries an acknowledgment for the first frame or for a second frame, and the second frame is transmitted by the second MLD on the second link or on the first link, and the second frame is configured to respond to the first frame;
a second time point, wherein the second time point is a transition timeout time point or an expected activation time point of the first power management mode, wherein the expected activation time point is a time point at which the affiliated STA corresponding to the first MLD on the second link is expected to enter the first power management mode; or
a third time point, wherein the third time point is a time point at which the affiliated STA corresponding to the first MLD on the second link completes frame exchange.

20. The method according to any one of claims 1 to 18, wherein an actual activation time point at which the affiliated STA corresponding to the first MLD on the first link enters the first power management mode, is determined based on one of:
a first time point, wherein the first time point is an end of a second physical layer protocol data unit, PPDU, wherein the second PPDU carries an acknowledgment for the first frame or for a second frame, and the second frame is transmitted by the second MLD on the first link, and the second frame is configured to respond to the first frame;
a second time point, wherein the second time point is a transition timeout time point or an expected activation time point of the first power management mode, wherein the expected activation time point is a time point at which the affiliated STA corresponding to the first MLD on the first link is expected to enter the first power management mode; or
a third time point, wherein the third time point is a time point at which the affiliated STA corresponding to the first MLD on the first link completes frame exchange.

21. The method according to claim 19 or 20, wherein the first time point is:
an end of the second PPDU; or
an end of a signal extension following the second PPDU.

22. The method according to claim 19 or 20, wherein the first frame is further configured to indicate the expected activation time point, and/or the second frame is further configured to indicate the expected activation time point.

23. The method according to any one of claim 19, 21, or 22, wherein the second frame carries at least one of:
a first indication time subfield, configured to indicate the expected activation time point of the first power management mode; or
a first duration subfield, configured to indicate a duration required for the first power management mode to remain activated as expected, wherein the duration starts from an end of the second PPDU or from an end of a signal extension following the second PPDU.

24. The method according to any one of claims 19, 21, or 22, further comprising:
entering, by a second STA, the first power management mode at a time point corresponding to a first determination delay following the first time point, in a case where the second STA is not a transmission opportunity, TXOP, holder or a TXOP responder;
wherein the second STA is one of a plurality of affiliated STAs of the first MLD, and the second STA is associated with the second link, and the first determination delay is caused by the second STA determining whether the second STA is the TXOP holder or the TXOP responder.

25. The method according to claim 19, further comprising:
entering, by a second STA, the first power management mode at the second time point;
wherein the second STA is one of a plurality of affiliated STAs of the first MLD, and the second STA is associated with the second link.

26. The method according to claim 25, further comprising:
receiving a third frame from the second MLD prior to the transmission of the first frame by the first MLD, wherein the third frame is configured to indicate the transition timeout time point.

27. The method according to claim 25 or 26, wherein the transition timeout time point is indicated by a transition timeout period following a first moment, the first moment is an end of a first PPDU, or an end of a signal extension following the first PPDU, and the first PPDU carries an acknowledgment for the first frame.

28. The method according to any one of claims 25 to 27, wherein entering, by the second STA, the first power management mode at the second time point comprises:
entering, by the second STA, the first power management mode at the second time point, in a case where the second STA neither initiates nor engages in frame exchange at the expected activation time point.

29. The method according to claim 28, wherein entering, by the second STA, the first power management mode at the second time point, in the case where the second STA neither initiates nor engages in the frame exchange at the expected activation time point, comprises:
entering, by the second STA, the first power management mode at a time point corresponding to a second determination delay following the second time point, in the case where the second STA neither initiates nor engages in the frame exchange at the expected activation time point;
wherein the second determination delay is caused by the first MLD determining whether the frame exchange is initiated with the second MLD.

30. The method according to claim 28 or 29, further comprising:
stopping, by the second STA, initiation of any frame exchange during a currently acquired transmission opportunity, TXOP, in the case where the second STA neither initiates nor engages in the frame exchange at the expected activation time point.

31. The method according to any one of claims 28 to 30, wherein the frame exchange is not initiated in a case where the second STA determines that a received PPDU is not transmitted to the second STA.

32. The method according to claim 19, further comprising:
entering, by a second STA, the first power management mode at the third time point, in a case where the second STA initiates or engages in frame exchange at the expected activation time point, and/or where the second STA is a transmission opportunity, TXOP, holder;
wherein the second STA is one of a plurality of affiliated STAs of the first MLD, and the second STA is associated with the second link.

33. The method according to claim 32, wherein a second access point, AP, does not actively initiate frame exchange with the second STA prior to the expected activation time point, in a case where the second AP is the TXOP holder;
wherein the second AP is an affiliated AP of the second MLD, and the second AP is associated with the second link.

34. The method according to claim 32 or 33, wherein the frame exchange is initiated in a case where the second STA determines that a received PPDU is transmitted to the second STA.

35. The method according to any one of claims 32 to 34, wherein the frame exchange is initiated by the first MLD or by the second MLD.

36. The method according to any one of claims 19 to 35, wherein the expected activation time point is determined based on at least one of:
the first time point;
a transition timeout time point of the first power management mode, wherein the transition timeout time point is indicated by a third frame from the second MLD; or
a field in the first frame, configured to indicate the expected activation time point.

37. The method according to claim 36, wherein the expected activation time point is determined based on the transition timeout time point of the first power management mode, in a case where the first frame does not carry the field configured to indicate the expected activation time point and the first MLD does not receive the second frame.

38. The method according to claim 36, wherein the expected activation time point is determined based on the first time point, in a case where the first frame does not carry the field configured to indicate the expected activation time point and the first MLD receives the second frame.

39. The method according to claim 36, wherein the expected activation time point is determined based on the field configured to indicate the expected activation time point, in a case where the first frame carries the field configured to indicate the expected activation time point.

40. The method according to any one of claims 1 to 39, further comprising:
receiving capability information from the second MLD;
wherein the capability information is configured to indicate that the second MLD supports cross-link power management capability or multi-link power management capability.

41. A method for power management, performed by a second multi-link device, MLD, wherein the second MLD has established and/or enabled one link or a plurality of links with a first MLD, the plurality of links comprising a first link and a second link,
the method comprising:
receiving a first frame from the first MLD on the first link, wherein the first frame is configured to indicate a first power management mode for at least one of an affiliated station, STA, corresponding to the first MLD on the second link or an affiliated STA corresponding to the first MLD on the first link;
wherein the second link is different from the first link in the plurality of links.

42. The method according to claim 41, wherein the first power management mode comprises at least one of:
an active mode, indicating a constant awake state; or
a power save mode, indicating an awake state, a doze state, or an unavailable state.

43. The method according to claim 42, wherein the awake state in the power save mode comprises at least one of:
an awake state in a dynamic capability adaptation power save mode;
an awake state in a static capability adaptation power save mode; or
an awake state in a fully powered power save mode.

44. The method according to claim 42 or 43, wherein the power save mode comprises:
a fully powered power save mode; or
a capability adaptation power save mode, wherein the capability adaptation power save mode comprises a static capability adaptation power save mode or a dynamic capability adaptation power save mode.

45. The method according to any one of claims 41 to 44, wherein the first frame carries a control field, configured to indicate the first power management mode.

46. The method according to claim 45, wherein the control field comprises at least one of:
a first control field, configured to indicate that the first power management mode is an active mode or a power save mode;
a second control field, configured to indicate that the power save mode is a fully powered power save mode or a capability adaptation power save mode; or
a third control field, configured to indicate that the capability adaptation power save mode is a non-dynamic capability adaptation power save mode or a dynamic capability adaptation power save mode.

47. The method according to claim 46, wherein the first control field is a first bitmap field, wherein a bit position *i* in the first bitmap field corresponds to a link with a link identity, ID, *i*, and is configured to indicate that the first power management mode for the affiliated STA, corresponding to the link with the link ID *i,* is the active mode or the power save mode, *i* being an integer.

48. The method according to claim 46, wherein the second control field is a second bitmap field, wherein a bit position *i* in the second bitmap field corresponds to a link with a link identity, ID, *i*, and is configured to indicate that the first power management mode for the affiliated STA, corresponding to the link with the link ID *i,* is the fully powered power save mode or the capability adaptation power save mode, *i* being an integer.

49. The method according to claim 46, wherein the third control field is a third bitmap field, wherein a bit position *i* in the third bitmap field corresponds to a link with a link identity, ID, *i*, and is configured to indicate that the first power management mode for the affiliated STA, corresponding to the link with the link ID *i,* is the non-dynamic capability adaptation power save mode or the dynamic capability adaptation power save mode, *i* being an integer.

50. The method according to any one of claims 41 to 49, wherein the first frame is further configured to indicate one or more operation parameters to be adopted, in the first power management mode, by at least one of the affiliated STA corresponding to the second link or the affiliated STA corresponding to the first link.

51. The method according to any one of claims 41 to 50, wherein the first frame further carries at least one of:
a first indication time subfield, configured to indicate an expected activation time point for the first power management mode; or
a first duration subfield, configured to indicate a duration required for the first power management mode to remain activated as expected.

52. The method according to any one of claims 41 to 51, wherein the first frame is a Multi-Link Power Management Mode Indication Notification frame.

53. The method according to any one of claims 41 to 51, wherein the first frame carries multi-link power management mode indication information, and the first frame carries a control field, wherein the control field comprises at least one of:
a fourth control field, configured to indicate the first power management mode for an affiliated STA corresponding to each link of the plurality of links, wherein the first power management mode comprises an active mode or a power save mode;
a fifth control field, configured to indicate whether an affiliated STA corresponding to each link of the plurality of links is to enable a dynamic capability adaptation power save mode; or
a sixth control field, configured to indicate the first power management mode for an affiliated STA corresponding to a link with a link identity, ID, *i,* wherein the first power management mode is the active mode, the power save mode, or the dynamic capability adaptation power save mode.

54. The method according to claim 53, wherein the fourth control field comprises a fourth bitmap field, wherein a bit position *i* in the fourth bitmap field corresponds to a link with a link ID *i*, and is configured to indicate that the first power management mode for the affiliated STA corresponding to the link with the link ID *i* is the active mode or the power save mode, *i* being an integer.

55. The method according to claim 53, wherein the fifth control field comprises a fifth bitmap field, wherein a bit position *i* in the fifth bitmap field corresponds to a link with a link ID *i*, and is configured to indicate whether the first power management mode for the affiliated STA corresponding to the link with the link ID *i* is to enable the dynamic capability adaptation power save mode, *i* being an integer.

56. The method according to claim 53, wherein the sixth control field comprises at least one of:
a Link ID subfield, configured to indicate a link ID;
a Power Management Mode subfield, configured to indicate that the first power management mode for the affiliated STA corresponding to the link with the link ID *i* is the active mode or the power save mode; or
a Capability Adaptation Power Save Control subfield, configured to indicate that the first power management mode for the affiliated STA corresponding to the link with the link ID *i* is a non-dynamic capability adaptation power save mode or the dynamic capability adaptation power save mode.

57. The method according to any one of claims 53 to 56, wherein at least one of the fourth control field, the fifth control field, or the sixth control field comprises a Required Activation Duration subfield, wherein the Required Activation Duration subfield is configured to indicate a duration required for the first power management mode to be activated.

58. The method according to any one of claims 53 to 57, wherein the first frame is a physical layer protocol data unit, PPDU, carrying one or more individually addressed quality of service, QoS, data frames, one or more individually addressed QoS null frames, or one or more individually addressed class 3 management frames.

59. The method according to any one of claims 41 to 58, wherein an actual activation time point at which the affiliated STA corresponding to the first MLD on the second link enters the first power management mode is determined based on one of:
a first time point, wherein the first time point is an end of a second physical layer protocol data unit, PPDU, wherein the second PPDU carries an acknowledgment for the first frame or for a second frame, and the second frame is transmitted by the second MLD on the second link or on the first link, and the second frame is configured to respond to the first frame;
a second time point, wherein the second time point is a transition timeout time point or an expected activation time point of the first power management mode, wherein the expected activation time point is a time point at which the affiliated STA corresponding to the first MLD on the second link is expected to enter the first power management mode; or
a third time point, wherein the third time point is a time point at which the affiliated STA corresponding to the first MLD on the second link completes frame exchange.

60. The method according to any one of claims 41 to 58, wherein an actual activation time point at which the affiliated STA corresponding to the first MLD on the first link enters the first power management mode is determined based on one of:
a first time point, wherein the first time point is an end of a second physical layer protocol data unit, PPDU, wherein the second PPDU carries an acknowledgment for the first frame or for a second frame, and the second frame is transmitted by the second MLD on the first link, and the second frame is configured to respond to the first frame;
a second time point, wherein the second time point is a transition timeout time point or an expected activation time point of the first power management mode, wherein the expected activation time point is a time point at which the affiliated STA corresponding to the first MLD on the first link is expected to enter the first power management mode; or
a third time point, wherein the third time point is a time point at which the affiliated STA corresponding to the first MLD on the first link completes frame exchange.

61. The method according to claim 59 or 60, wherein the first time point is:
an end of the second PPDU; or
an end of a signal extension following the second PPDU.

62. The method according to claim 59 or 60, wherein the first frame is further configured to indicate the expected activation time point, and/or the second frame is further configured to indicate the expected activation time point.

63. The method according to any one of claims 59, 61, or 62, wherein the second frame carries at least one of:
a first indication time subfield, configured to indicate the expected activation time point of the first power management mode; or
a first duration subfield, configured to indicate a duration required for the first power management mode to remain activated as expected, wherein the duration starts from an end of the second PPDU or from an end of a signal extension following the second PPDU.

64. The method according to any one of claims 59, 61, or 62, wherein an actual activation time point at which a second STA enters the first power management mode is a time point corresponding a first determination delay following the first time point, in a case where the second STA is not a transmission opportunity, TXOP, holder or a TXOP responder;
wherein the second STA is one of a plurality of affiliated STAs of the first MLD, and the second STA is associated with the second link, and the first determination delay is caused by the second STA determining whether the second STA is the TXOP holder or the TXOP responder.

65. The method according to claim 59, wherein an actual activation time point at which a second STA enters the first power management mode is the second time point;
wherein the second STA is one of a plurality of affiliated STAs of the first MLD, and the second STA is associated with the second link.

66. The method according to claim 65, further comprising:
transmitting, by the second MLD, a third frame prior to transmission of the first frame by the first MLD, wherein the third frame is configured to indicate the transition timeout time point.

67. The method according to claim 65 or 66, wherein the transition timeout time point is indicated by a transition timeout period following a first moment, the first moment is an end of a first PPDU, or an end of a signal extension following the first PPDU, and the first PPDU carries an acknowledgment for the first frame.

68. The method according to any one of claims 65 to 67, wherein the actual activation time point at which the second STA enters the first power management mode is the second time point, in a case where the second STA neither initiates nor engages in frame exchange at the expected activation time point.

69. The method according to claim 68, wherein the actual activation time point at which the second STA enters the first power management mode is a time point corresponding to a second determination delay following the second time point, in the case where the second STA neither initiates nor engages in the frame exchange at the expected activation time point;
wherein the second determination delay is caused by the first MLD determining whether the frame exchange is initiated with the second MLD.

70. The method according to claim 68 or 69, wherein the second STA stops initiation of any frame exchange during a currently acquired transmission opportunity, TXOP, in the case where the second STA neither initiates nor engages in the frame exchange at the expected activation time point.

71. The method according to any one of claims 68 to 70, wherein the frame exchange is not initiated in a case where the second STA determines that a received PPDU is not transmitted to the second STA.

72. The method according to claim 59, wherein the actual activation time point at which the second STA enters the first power management mode is the third time point, in a case where the second STA initiates or engages in frame exchange at the expected activation time point, and/or where the second STA is a transmission opportunity, TXOP, holder;
wherein the second STA is one of a plurality of affiliated STAs of the first MLD, and the second STA is associated with the second link.

73. The method according to claim 72, wherein a second access point, AP, does not actively initiate frame exchange with the second STA prior to the expected activation time point, in a case where the second AP is the TXOP holder; and
wherein the second AP is an affiliated AP of the second MLD, and the second AP is associated with the second link.

74. The method according to claim 72 or 73, wherein the frame exchange is initiated in a case where the second STA determines that a received PPDU is transmitted to the second STA.

75. The method according to any one of claims 72 to 74, wherein the frame exchange is initiated by the first MLD or by the second MLD.

76. The method according to any one of claims 59 to 75, wherein the expected activation time point is determined based on at least one of:
the first time point;
a transition timeout time point of the first power management mode, wherein the transition timeout time point is indicated by a third frame transmitted by the second MLD; or
a field in the first frame, configured to indicate the expected activation time point.

77. The method according to claim 76, wherein the expected activation time point is determined based on the transition timeout time point of the first power management mode, in a case where the first frame does not carry the field configured to indicate the expected activation time point and the first MLD does not receive the second frame.

78. The method according to claim 76, wherein the expected activation time point is determined based on the first time point, in a case where the first frame does not carry the field configured to indicate the expected activation time point and the first MLD receives the second frame.

79. The method according to claim 76, wherein the expected activation time point is determined based on the field configured to indicate the expected activation time point, in a case where the first frame carries the field configured to indicate the expected activation time point.

80. The method according to any one of claims 41 to 79, further comprising:
transmitting capability information;
wherein the capability information is used to indicate that the second MLD supports cross-link power management capability or multi-link power management capability.

81. A first multi-link device, wherein the first multi-link device has established and/or enabled one link or a plurality of links with a second multi-link device, the plurality of links comprising a first link and a second link,
the first multi-link device comprising:
a transmitting module, configured to transmit a first frame on the first link, wherein the first frame is configured to indicate a first power management mode for at last one of an affiliated station, STA, corresponding to the second link or an affiliated STA corresponding to the first link;
wherein the second link is different from the first link in the plurality of links.

82. A second multi-link device, wherein the second multi-link device has established and/or enabled one link or a plurality of links with a first multi-link device, the plurality of links comprising a first link and a second link,
the second multi-link device comprising:
a receiving module, configured to receive a first frame from the first multi-link device on the first link, wherein the first frame is configured to indicate a first power management mode for at least one of an affiliated station, STA, corresponding to the first multi-link device on the second link or an affiliated STA corresponding to the first multi-link device on the first link;
wherein the second link is different from the first link in the plurality of links.

83. A first multi-link device, MLD, comprising:
a processor;
a transceiver communicably connected to the processor; and
a memory configured to store one or more instructions executable by the processor, wherein the processor is configured to load and execute the one or more instructions to perform the method for power management as defined in any one of claims 1 to 40.

84. A second multi-link device, MLD, comprising:
a processor;
a transceiver communicably connected to the processor; and
a memory configured to store one or more instructions executable by the processor, wherein the processor is configured to load and execute the one or more instructions to perform the method for power management as defined in any one of claims 41 to 80.

85. A computer-readable storage medium, storing at least one program, wherein the at least one program, when loaded and run by a processor, causes the processor to perform the method for power management as defined in any one of claims 1 to 40 or the method for power management as defined in any one of claims 41 to 80.

86. A chip, comprising: one or more program instructions and/or a programmable logic circuit, wherein:
the chip, when running on a first multi-link device, MLD, is configured to perform the method for power management as defined in any one of claims 1 to 40; or
the chip, when running on a second MLD, is configured to perform the method for power management as defined in any one of claims 41 to 80.

87. A computer program product, comprising: one or more computer instructions stored in a computer-readable storage medium, wherein the one or more computer instructions, when read from the computer-readable storage medium and executed by a processor, cause the processor to perform the method for power management as defined in any one of claims 1 to 40, or the method for power management as defined in any one of claims 41 to 80.
